# EUROPEAN PATENT APPLICATION

(11) **EP 1 524 654 A2**
(43) Date of publication of application: **20.04.2005**
(21) Application number: 04024416.2
(22) Date of filing: 13.10.2004
(51) Int. Cl.: G11B 7/125, G11B 7/135

(54) **Optical head apparatus and optical information recording or reproducing apparatus**

(30) Priority: 16.10.2003 JP 2003356469; 27.09.2004 JP 2004279425
(71) Applicant: NEC CORPORATION, Tokyo (JP)
(72) Inventor: Katayama, Ryuichi, Minato-ku, Tokyo (JP)
(74) Representative: Betten & Resch

(57) **Abstract**

There is disclosed an optical head apparatus and an optical information recording or reproducing apparatus capable of obtaining a high light output at a recording time, and a high S/N at a reproducing time with respect to any of disks of next-generation, DVD, and CD standards. Light having a wavelength of 400 nm emitted from a semiconductor laser (1c) is almost all reflected by a beam splitter (51d), and condensed on a disk (204) of the next-generation standard. Light having a wavelength of 660 nm emitted from a semiconductor laser (1b) is almost all reflected by a beam splitter (51a), almost all transmitted through the beam splitter (51b), and condensed on the disk of the DVD standard. Light having a wavelength of 780 nm emitted from a semiconductor laser (1a) is almost all transmitted through a beam splitter (51c), almost all reflected by the beam splitters (51b,51a) and condensed on the disk of the CD standard. Reflected light from the disk is almost all transmitted through the beam splitters and received by a photodetector.

## Description

### BACKGROUND OF THE INVENTION

### 1. Field of the Invention

The present invention relates to an optical head apparatus and an optical information recording or reproducing apparatus for recording or reproducing information with respect to several types of optical recording mediums having different standards.

### 2. Description of the Related Art

A recording density in an optical information recording or reproducing apparatus is inversely proportional to a square of a diameter of a condensed spot formed on an optical recording medium by an optical head apparatus. That is, the smaller the diameter of the condensed spot is, the higher the recording density becomes. The diameter of the condensed spot is proportional to a wavelength of a light source in the optical head apparatus, and is inversely proportional to a numerical aperture of an objective lens. That is, when the wavelength of the light source is shorter, and the numerical aperture of the objective lens is higher, the diameter of the condensed spot is reduced. In a standard of a compact disk (CD) having a capacity of 650 MB, the wavelength of the light source is about 780 nm, and the numerical aperture of the objective lens is 0.45. In the standard of a digital versatile disk (DVD) having a capacity of 4.7 GB, the wavelength of the light source is about 660 nm, and the numerical aperture of the objective lens is 0.6.

On the other hand, in recent years, to further raise the recording density, a next-generation standard has been proposed or put into practical use in which the wavelength of the light source is further shortened and the numerical aperture of the objective lens is further raised. For example, in the standard of an advanced optical disk (AOD) having a capacity of 20 GB, the wavelength of the light source is about 400 nm, and the numerical aperture of the objective lens is 0.65. In the standard of a blue ray disk (BRD) having a capacity of 23.3 GB, the numerical aperture of the objective lens is 0.85.

From the background, there has been a demand for an optical head apparatus and an optical information recording or reproducing apparatus which are capable of recording or reproducing information with respect to a plurality of disks having different standards and which have compatible functions. An optical head apparatus capable of recording or reproducing information with respect to disks having either DVD or CD standard has already been put into practical use. An optical head apparatus capable of recording or reproducing information with respect to disks having any of the next-generation, DVD, and CD standards has also been proposed.

As an example of a conventional optical head apparatus capable of recording or reproducing information even with respect to the disks having the next-generation, DVD, or CD standard, there is an optical head apparatus described in JP-A-2001-43559. FIG. 74 schematically shows a constitution of the optical head apparatus. Each of modules 311a, 311b, and 311c comprises a semiconductor laser, a photodetector, and a hologram optical element. The hologram optical element passes and guides a part of light emitted from the semiconductor laser into a disk, and diffracts and guides a part of reflected light from the disk into the photodetector. Wavelengths of the semiconductor lasers in the modules 311a, 311b, and 311c are 780 nm, 660 nm, and 400 nm, respectively. A beam splitter 312a transmits light having wavelengths of 400 nm and 600 nm, and reflects light having a wavelength of 780 nm. A beam splitter 312b transmits light having a wavelength of 400 nm, and reflects light having a wavelength of 660 nm.

The light emitted from the semiconductor laser in the module 311c is transmitted through the beam splitters 312b and 312a, reflected by a mirror 313, and condensed onto a disk 315 of the next-generation standard by an objective lens 314. The reflected light from the disk 315 is transmitted through the objective lens 314 in a reverse direction, reflected by the mirror 313, transmitted through the beam splitters 312a and 312b, and received by the photodetector in the module 311c.

The light emitted from the semiconductor laser in the module 311b is reflected by the beam splitter 312b, transmitted through the beam splitter 312a, reflected by the mirror 313, and condensed onto the disk 315 of the DVD standard by the objective lens 314. The reflected light from the disk 315 is transmitted through the objective lens 314 in the reverse direction, reflected by the mirror 313, transmitted through the beam splitter 312a, reflected by the beam splitter 312b, and received by the photodetector in the module 311b.

The light emitted from the semiconductor laser in the module 311a is reflected by the beam splitter 312a, reflected by the mirror 313, and condensed onto the disk 315 of the CD standard by the objective lens 314. The reflected light from the disk 315 is transmitted through the objective lens 314 in the reverse direction, reflected by the mirror 313, reflected by the beam splitter 312a, and received by the photodetector in the module 311a.

On the other hand, as an example of a conventional optical head apparatus capable of recording or reproducing the information even with respect to the disks of the DVD and CD standards, there is an optical head apparatus described in JP-A-2003-91863. FIG. 75 schematically shows a constitution of the optical head apparatus. The wavelengths of semiconductor lasers 321a and 321b are 780 nm and 660 nm, respectively. A beam splitter 322a transmits almost all P-polarized and S-polarized components with respect to the light having a wavelength of 660 nm, and transmits almost all the P-polarized components, and reflects almost all the S-polarized components with respect to the light having a wavelength of 780 nm. A beam splitter 322b transmits almost all the P-polarized components, and reflects almost all the S-polarized components with respect to the light having a wavelength of 660 nm, and transmits almost all the P-polarized components with respect to the light having a wavelength of 780 nm.

The light emitted from the semiconductor laser 321b strikes on the beam splitter 322b as S-polarized light. Almost all the light is reflected, transmitted through the beam splitter 322a, and reflected by a mirror 324. The linearly polarized light is converted into circularly polarized light by a wavelength plate 325, and condensed on a disk 327 by an objective lens 326. The reflected light from the disk 327 is transmitted through the objective lens 326 in the reverse direction, converted into the linearly polarized light whose polarization direction is orthogonal to that for the forward path from the circularly polarized light by the wavelength plate 325, and reflected by the mirror 324. Almost all the light passes through the beam splitter 322a, enters the beam splitter 322b as P-polarized light to pass through the beam splitter, and is received by a photodetector 323.

The light emitted from the semiconductor laser 321a strikes on the beam splitter 322a as the S-polarized light. Almost all the light is reflected by the beam splitter, reflected by the mirror 324, converted into the circularly polarized light from the linearly polarized light by the wavelength plate 325, and condensed on the disk 327 of the CD standard by the objective lens 326. The reflected light from the disk 327 is transmitted through the objective lens 326 in the reverse direction, converted into the linearly polarized light whose polarization direction is orthogonal to that for the forward path from the circularly polarized light, and reflected by the mirror 324. The light enters the beam splitter 322a as the P-polarized light, and almost all the light passes through the beam splitter and the beam splitter 322b, and is received by the photodetector 323.

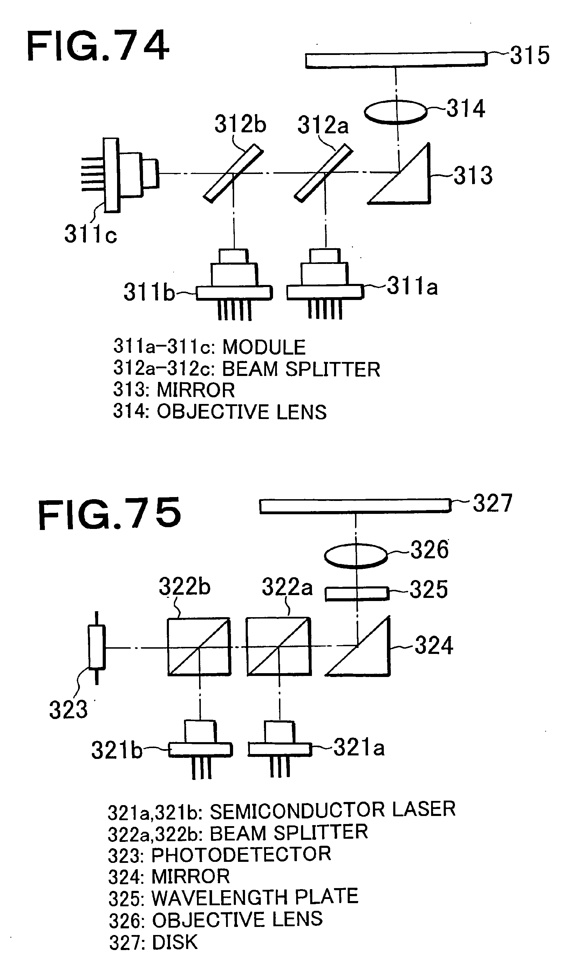

In the conventional optical head apparatus shown in FIG. 74, when the light having the wavelength of any of 400 nm, 660 nm, and 780 nm passes through the hologram optical element in the module in the forward path, a loss is caused in a quantity of light. When the light is diffracted by the hologram optical element in the module in a backward path, a loss is caused in the quantity of light. Assuming that a phase depth of a diffraction grating in the hologram optical element is φ, transmittance in the forward path is given by cos² (φ/2) , and diffraction efficiency in the backward path is given by 2 (2/π) ²sin² (φ/2) . A condition on which a product of the transmittance in forward path and the diffraction efficiency in the backward path is maximized is φ = π/2, but the former is 50%, and the latter is only 40.5% even on this condition. Even by use of a half mirror which transmits a half of the light emitted from the semiconductor laser to guide the light into the disk and which reflects a half of the reflected light from the disk to guide the light into the photodetector instead of the hologram optical element, the transmittance in the forward path is 50%, and reflectance in the backward path is only 50%. The loss in the quantity of light in the forward path causes a drop of light output at a recording time, and the loss of the quantity of light in the backward path causes a drop of S/N at a reproducing time. Therefore, a high light output cannot be obtained at the recording time, and a high S/N cannot be obtained at the reproducing time with respect to any disk of the next-generation, DVD, or CD standard.

On the other hand, in the conventional optical head apparatus shown in FIG. 75, the loss of the quantity of light is hardly caused, when the light having a wavelength of 660 nm is reflected by the beam splitter 322b and transmitted through the beam splitter 322a in the forward path. When the light is transmitted through the beam splitters 322a and 322b in the backward path, the loss of the quantity of light is hardly caused. The light having the wavelength of 780 nm hardly causes the loss of the quantity of light, when reflected by the beam splitter 322a in the forward path, and when transmitted through the beam splitters 322a and 322b in the backward path. Therefore, even with respect to any of the disks having the DVD and CD standards, the high light output is obtained at the recording time, and the high S/N is obtained at the reproducing time. However, the recording or reproducing cannot be performed with respect to the disk of the next-generation standard.

### SUMMARY OF THE INVENTION

An object of the present invention is to solve the above-described problems in the conventional optical head apparatus, and to provide an optical head apparatus and an optical information recording/reproducing apparatus in which a high light output is obtained at a recording time, and a high S/N is obtained at a reproducing time even with respect to any of optical recording mediums of a plurality of types of standards such as next-generation, DVD, and CD standards.

According to the present invention, there is provided an optical head apparatus comprising: a first light source which emits light having a first wavelength; a second light source which emits light having a second wavelength; a third light source which emits light having a third wavelength; at least one photodetector which receives the light having the first, second, or third wavelengths reflected by an optical recording medium; an objective lens disposed facing the optical recording medium; and an optical wave synthesizing/separating system which synthesizes/separates the light having any of the first, second, and third wavelengths and traveling toward the objective lens from the first, second, and third light sources, and the light having the first, second, and third wavelengths and traveling toward the photodetector from the objective lens, wherein the optical wave synthesizing/separating system emits the light having the first, second, and third wavelengths, applied from the side of the first, second, and third light sources, to the side of the objective lens with a quantity of light larger than 50% of a quantity of incident light, and emits the light having the first, second, and third wavelengths, applied from the side of the objective lens, to the side of the photodetector with a quantity of light larger than 50% of a quantity of incident light.

Moreover, according to the present invention, there is provided an optical information recording or reproducing apparatus comprising: the optical head apparatus of the present invention; a first circuit system which drives the first, second, and third light sources; a second circuit system which produces a reproduction signal and an error signal from an output of the photodetector; and a third circuit system which drives the objective lens based on the error signal.

In the optical head apparatus and the optical information recording or reproducing apparatus of the present invention, a loss of a quantity of light is caused only by less than 50%, when the light having the first, second, and third wavelengths passes through the optical wave synthesizing/separating system in both forward and backward path. Therefore, according to the present invention, the first, second, and third wavelengths are set to 400 nm, 660 nm, and 780 nm, respectively, and accordingly an optical head apparatus and an optical information recording or reproducing apparatus can be realized in which a high light output is obtained at a recording time, and a high S/N is obtained at a reproducing time with respect to any of disks of next-generation, DVD, and CD standards.

As described above, effects of the optical head apparatus and the optical information recording or reproducing apparatus of the present invention are that the high light output is obtained at the recording time, and the high S/N is obtained at the reproducing time with respect to any of optical recording mediums of a plurality of types of standards. Reasons are that when the light having the first, second, and third wavelengths passes through the optical wave synthesizing/separating system in both the forward and backward paths, the loss of the quantity of light is caused only by less than 50%. This effect can be exerted to the maximum, when the first, second, and third wavelengths are set to 400 nm, 660 nm, and 780 nm, and the disks of the next-generation standard (AOD, BRD standards, etc.), DVD standard, and CD standard are used as the optical recording mediums.

### BRIEF DESCRIPTION OF THE DRAWINGS

In the accompanying drawings:
FIG. 1 is a diagram showing a first embodiment of an optical head apparatus of the present invention;
FIG. 2 is a diagram showing a second embodiment of the optical head apparatus of the present invention;
FIG. 3 is a diagram showing a third embodiment of the optical head apparatus of the present invention;
FIG. 4 is a diagram showing a fourth embodiment of the optical head apparatus of the present invention;
FIG. 5 is a diagram showing a fifth embodiment of the optical head apparatus of the present invention;
FIG. 6 is a diagram showing a sixth embodiment of the optical head apparatus of the present invention;
FIG. 7 is a diagram showing a seventh embodiment of the optical head apparatus of the present invention;
FIG. 8 is a diagram showing an eighth embodiment of the optical head apparatus of the present invention;
FIG. 9 is a diagram showing a ninth embodiment of the optical head apparatus of the present invention;
FIG. 10 is a diagram showing a tenth embodiment of the optical head apparatus of the present invention;
FIG. 11 is a diagram showing a 11th embodiment of the optical head apparatus of the present invention;
FIG. 12 is a diagram showing a 12th embodiment of the optical head apparatus of the present invention;
FIG. 13 is a diagram showing a 13th embodiment of the optical head apparatus of the present invention;
FIG. 14 is a diagram showing a 14th embodiment of the optical head apparatus of the present invention;
FIG. 15 is a diagram showing a 15th embodiment of the optical head apparatus of the present invention;
FIG. 16 is a diagram showing a 16th embodiment of the optical head apparatus of the present invention;
FIG. 17 is a diagram showing a 17th embodiment of the optical head apparatus of the present invention;
FIG. 18 is a diagram showing an 18th embodiment of the optical head apparatus of the present invention;
FIG. 19 is a diagram showing a 19th embodiment of the optical head apparatus of the present invention;
FIG. 20 is a diagram showing a 20th embodiment of the optical head apparatus of the present invention;
FIG. 21 is a diagram showing a 21st embodiment of the optical head apparatus of the present invention;
FIG. 22 is a diagram showing a 22nd embodiment of the optical head apparatus of the present invention;
FIG. 23 is a diagram showing a 23rd embodiment of the optical head apparatus of the present invention;
FIG. 24 is a diagram showing a 24th embodiment of the optical head apparatus of the present invention;
FIG. 25 is a diagram showing a 25th embodiment of the optical head apparatus of the present invention;
FIG. 26 is a diagram showing a 26th embodiment of the optical head apparatus of the present invention;
FIG. 27 is a diagram showing a 27th embodiment of the optical head apparatus of the present invention;
FIG. 28 is a diagram showing a 28th embodiment of the optical head apparatus of the present invention;
FIG. 29 is a diagram showing a 29th embodiment of the optical head apparatus of the present invention;
FIG. 30 is a diagram showing a 30th embodiment of the optical head apparatus of the present invention;
FIG. 31 is a diagram showing a 31st embodiment of the optical head apparatus of the present invention;
FIG. 32 is a diagram showing a 32nd embodiment of the optical head apparatus of the present invention;
FIG. 33 is a diagram showing a 33rd embodiment of the optical head apparatus of the present invention;
FIG. 34 is a diagram showing a 34th embodiment of the optical head apparatus of the present invention;
FIG. 35 is a diagram showing a 35th embodiment of the optical head apparatus of the present invention;
FIG. 36 is a diagram showing a 36th embodiment of the optical head apparatus of the present invention;
FIG. 37 is a diagram showing a 37th embodiment of the optical head apparatus of the present invention;
FIG. 38 is a diagram showing dependence of transmittance of a beam splitter for use in the embodiment of the optical head apparatus of the present invention on wavelength;
FIG. 39 is a diagram showing the dependence of the transmittance of the beam splitter for use in the embodiment of the optical head apparatus of the present invention on the wavelength;
FIG. 40 is a diagram showing the dependence of the transmittance of the beam splitter for use in the embodiment of the optical head apparatus of the present invention on the wavelength;
FIG. 41 is a diagram showing the dependence of the transmittance of the beam splitter for use in the embodiment of the optical head apparatus of the present invention on the wavelength;
FIG. 42 is a diagram showing the dependence of the transmittance of the beam splitter for use in the embodiment of the optical head apparatus of the present invention on the wavelength;
FIG. 43 is a diagram showing the dependence of the transmittance of the beam splitter for use in the embodiment of the optical head apparatus of the present invention on the wavelength;
FIG. 44 is a diagram showing the dependence of the transmittance of the beam splitter for use in the embodiment of the optical head apparatus of the present invention on the wavelength;
FIG. 45 is a diagram showing the dependence of the transmittance of the beam splitter for use in the embodiment of the optical head apparatus of the present invention on the wavelength;
FIG. 46 is a diagram showing the dependence of the transmittance of the beam splitter for use in the embodiment of the optical head apparatus of the present invention on the wavelength;
FIG. 47 is a diagram showing the dependence of the transmittance of the beam splitter for use in the embodiment of the optical head apparatus of the present invention on the wavelength;
FIG. 48 is a diagram showing the dependence of the transmittance of the beam splitter for use in the embodiment of the optical head apparatus of the present invention on the wavelength;
FIG. 49 is a diagram showing the dependence of the transmittance of the beam splitter for use in the embodiment of the optical head apparatus of the present invention on the wavelength;
FIG. 50 is a diagram showing the dependence of the transmittance of the beam splitter for use in the embodiment of the optical head apparatus of the present invention on the wavelength;
FIG. 51 is a diagram showing the dependence of the transmittance of the beam splitter for use in the embodiment of the optical head apparatus of the present invention on the wavelength;
FIG. 52 is a diagram showing the dependence of the transmittance of the beam splitter for use in the embodiment of the optical head apparatus of the present invention on the wavelength;
FIG. 53 is a diagram showing the dependence of the transmittance of the beam splitter for use in the embodiment of the optical head apparatus of the present invention on the wavelength;
FIG. 54 is a diagram showing the dependence of the transmittance of the beam splitter for use in the embodiment of the optical head apparatus of the present invention on the wavelength;
FIG. 55 is a diagram showing the dependence of the transmittance of the beam splitter for use in the embodiment of the optical head apparatus of the present invention on the wavelength;
FIG. 56 is a diagram showing the dependence of the transmittance of the beam splitter for use in the embodiment of the optical head apparatus of the present invention on the wavelength;
FIG. 57 is a diagram showing the dependence of the transmittance of the beam splitter for use in the embodiment of the optical head apparatus of the present invention on the wavelength;
FIG. 58 is a diagram showing the dependence of the transmittance of the beam splitter for use in the embodiment of the optical head apparatus of the present invention on the wavelength;
FIG. 59 is a diagram showing the dependence of the transmittance of the beam splitter for use in the embodiment of the optical head apparatus of the present invention on the wavelength;
FIG. 60 is a diagram showing the dependence of the transmittance of the beam splitter for use in the embodiment of the optical head apparatus of the present invention on the wavelength;
FIG. 61 is a diagram showing the dependence of the transmittance of the beam splitter for use in the embodiment of the optical head apparatus of the present invention on the wavelength;
FIG. 62 is a diagram showing the dependence of the transmittance of the beam splitter for use in the embodiment of the optical head apparatus of the present invention on the wavelength;
FIG. 63 is a diagram showing a constitution of a semiconductor laser in which two semiconductor lasers are integrated, for use in the embodiment of the optical head apparatus of the present invention;
FIG. 64 is a diagram showing a constitution of a semiconductor laser in which three semiconductor lasers are integrated, for use in the embodiment of the optical head apparatus of the present invention;
FIG. 65 is a diagram showing a constitution of a module in which one semiconductor laser and one photodetector are integrated, for use in the embodiment of the optical head apparatus of the present invention;
FIG. 66 is a diagram showing a constitution of a module in which two semiconductor lasers and one photodetector are integrated, for use in the embodiment of the optical head apparatus of the present invention;
FIG. 67 is a diagram showing a constitution of a module in which three semiconductor lasers and one photodetector are integrated, for use in the embodiment of the optical head apparatus of the present invention;
FIG. 68 is a diagram showing a constitution of an expander lens for use in the embodiment of the optical head apparatus of the present invention;
FIGS. 69A and 69B are diagrams showing a constitution of an optical liquid crystal element for use in the embodiment of the optical head apparatus of the present invention, where FIG. 69A is a plan view and FIG. 69B is a side view;
FIGS. 70A and 70B are diagrams showing a constitution of an aperture control element for use in the embodiment of the optical head apparatus of the present invention, where FIG. 70A is a plan view and FIG. 70B is a side view;
FIG. 71 is a diagram showing the dependence of the transmittance of a dielectric multilayered film on the wavelength in the aperture control element for use in the embodiment of the optical head apparatus of the present invention;
FIG. 72 is a diagram showing a pattern of a light receiving portion in the photodetector for use in the embodiment of the optical head apparatus of the present invention, and arrangement of light spots on the photodetector;
FIG. 73 is a diagram showing an embodiment of an optical information recording or reproducing apparatus of the present invention;
FIG. 74 is a diagram showing a constitution of a first example of a conventional optical head apparatus; and
FIG. 75 is a diagram showing a constitution of a second example of the conventional optical head apparatus.

### DESCRIPTION OF THE PREFERRED EMBODIMENTS

Embodiments of the present invention will be described hereinafter with reference to the drawings.

First, characteristics of a beam splitter and a wavelength plate constituting an optical wave synthesizing/separating system for use in an optical head apparatus of the present invention will be described.

### 1. Characteristics of Beam Splitter

First, characteristics of a beam splitter for use in an embodiment of an optical head apparatus of the present invention will be described. As a constitution of the beam splitter, a constitution in which two glass triangular prisms are laminated onto each other into a cubic shape, and a dielectric multilayered film is formed on a laminated face, a constitution in which a dielectric multilayered film is formed on the surface of a glass flat plate and the like are considered. When a plurality of beam splitters are used, they may be integrated.

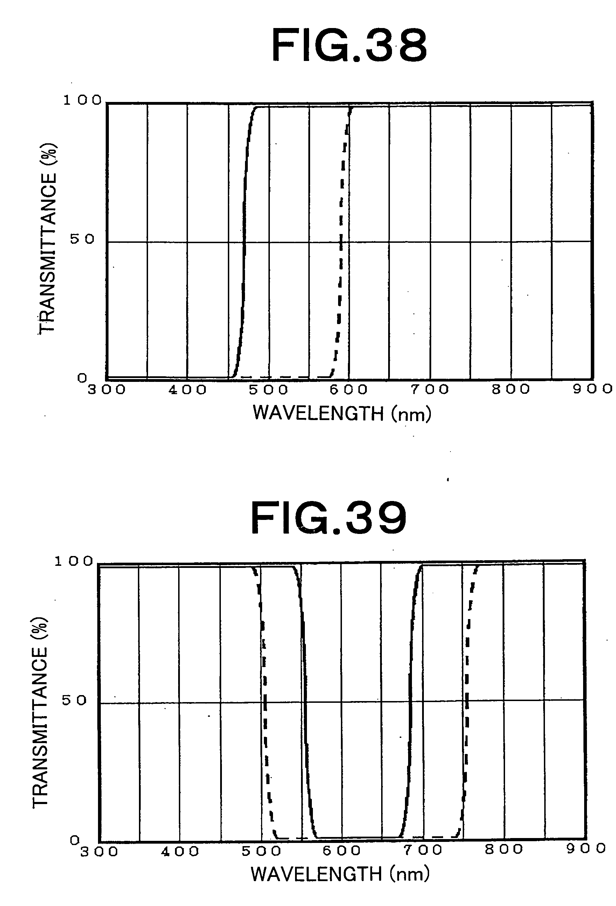

FIGS. 38 to 62 show dependences of transmittances of beam splitters A to Y for use in the embodiments of the optical head apparatus of the present invention on wavelengths. Solid and dotted lines in the drawings show characteristics with respect to P-polarized components and S-polarized components.

The beam splitter has: a first wavelength range which transmits almost all P-polarized components (electric field components of a light wave parallel to a plane formed by incident light and reflected light) and S-polarized components (electric field components of a light wave vertical to the plane formed by the incident light and reflected light); and a second wavelength range as a polarized beam splitter which transmits almost all P-polarized components and reflects almost all S-polarized components; and a third wavelength range which reflects almost all of both the P-polarized and S-polarized components. Here, "almost all" means, for example, 90% or more. The dielectric multilayered film can be designed in such a manner that wavelengths of 400 nm, 660 nm, and 780 nm are included in any of the first, second, and third wavelength ranges.

### (Beam Splitter A)

As shown in FIG. 38, a beam splitter A reflects almost all of both the P-polarized and S-polarized components with respect to the light having a wavelength of 400 nm, transmits almost all of both the P-polarized and S-polarized components with respect to the light having a wavelength of 660 nm, and transmits almost all of both the P-polarized and S-polarized components with respect to the light having a wavelength of 780 nm.

### (Beam Splitter B)

As shown in FIG. 39, a beam splitter B transmits almost all of both the P-polarized and S-polarized components with respect to the light having a wavelength of 400 nm, reflects almost all of both the P-polarized and S-polarized components with respect to the light having a wavelength of 660 nm, and transmits almost all of both the P-polarized and S-polarized components with respect to the light having a wavelength of 780 nm.

### (Beam Splitter C)

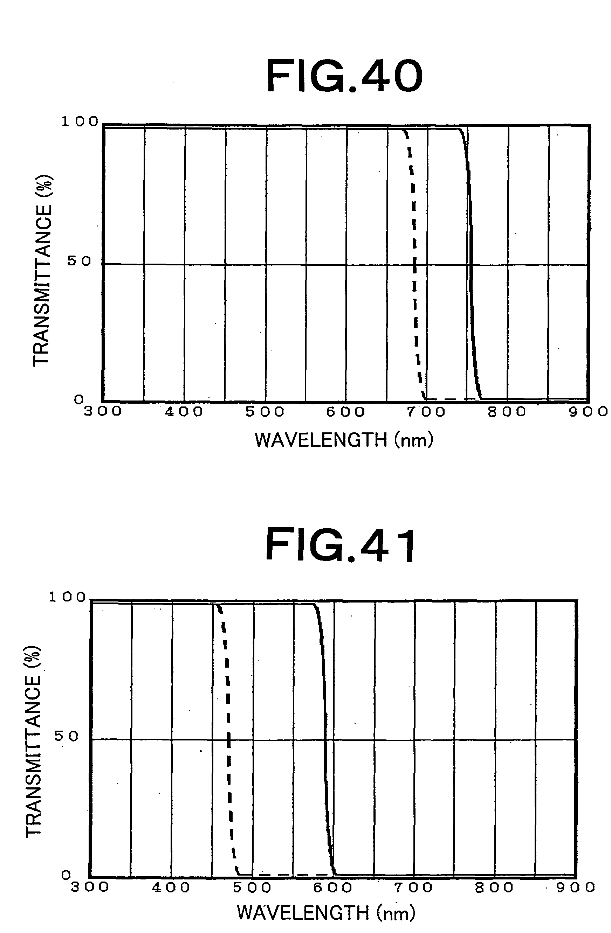

As shown in FIG. 40, a beam splitter C transmits almost all of both the P-polarized and S-polarized components with respect to the light having a wavelength of 400 nm, transmits almost all of both the P-polarized and S-polarized components with respect to the light having a wavelength of 660 nm, and reflects almost all of both the P-polarized and S-polarized components with respect to the light having a wavelength of 780 nm.

### (Beam Splitter D)

As shown in FIG. 41, a beam splitter D transmits almost all of both the P-polarized and S-polarized components with respect to the light having a wavelength of 400 nm, reflects almost all of both the P-polarized and S-polarized components with respect to the light having a wavelength of 660 nm, and reflects almost all of both the P-polarized and S-polarized components with respect to the light having a wavelength of 780 nm.

### (Beam Splitter E)

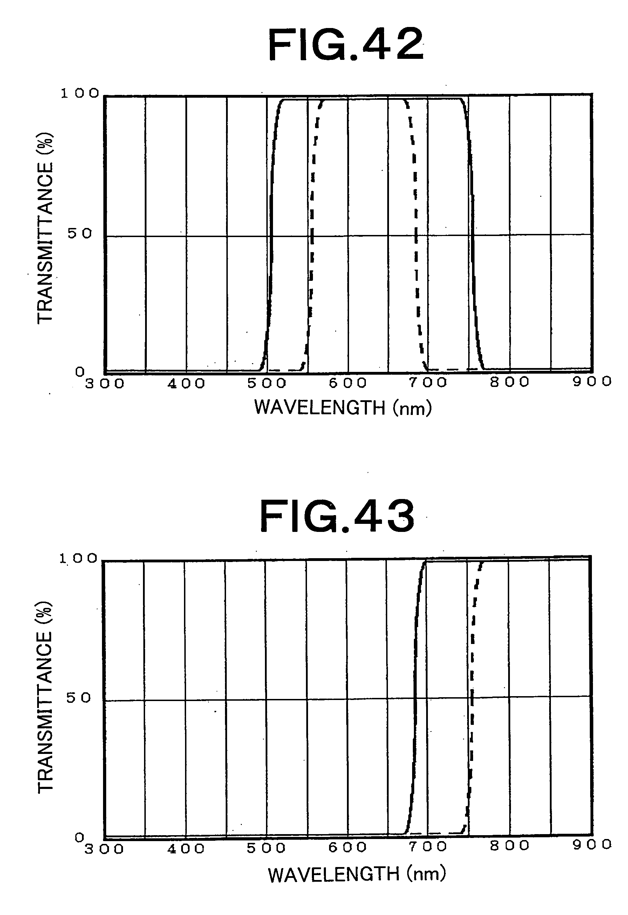

As shown in FIG. 42, a beam splitter E reflects almost all of both the P-polarized and S-polarized components with respect to the light having a wavelength of 400 nm, transmits almost all of both the P-polarized and S-polarized components with respect to the light having a wavelength of 660 nm, and reflects almost all of both the P-polarized and S-polarized components with respect to the light having a wavelength of 780 nm.

### (Beam Splitter F)

As shown in FIG. 43, a beam splitter F reflects almost all of both the P-polarized and S-polarized components with respect to the light having a wavelength of 400 nm, reflects almost all of both the P-polarized and S-polarized components with respect to the light having a wavelength of 660 nm, and transmits almost all of both the P-polarized and S-polarized components with respect to the light having a wavelength of 780 nm.

### (Beam Splitter G)

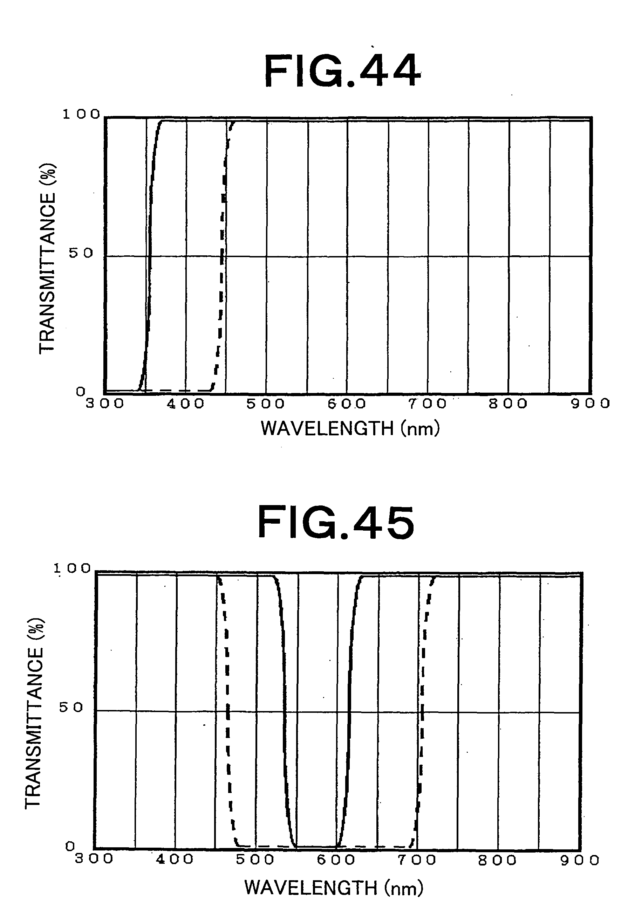

As shown in FIG. 44, a beam splitter G transmits almost all of the P-polarized components, and reflects almost all of the S-polarized components with respect to the light having a wavelength of 400 nm, transmits almost all of both the P-polarized and S-polarized components with respect to the light having a wavelength of 660 nm, and transmits almost all of both the P-polarized and S-polarized components with respect to the light having a wavelength of 780 nm.

### (Beam Splitter H)

As shown in FIG. 45, a beam splitter H transmits almost all of both the P-polarized and S-polarized components with respect to the light having a wavelength of 400 nm, transmits almost all of the P-polarized components and reflects almost all of the S-polarized components with respect to the light having a wavelength of 660 nm, and transmits almost all of both the P-polarized and S-polarized components with respect to the light having a wavelength of 780 nm.

### (Beam Splitter I)

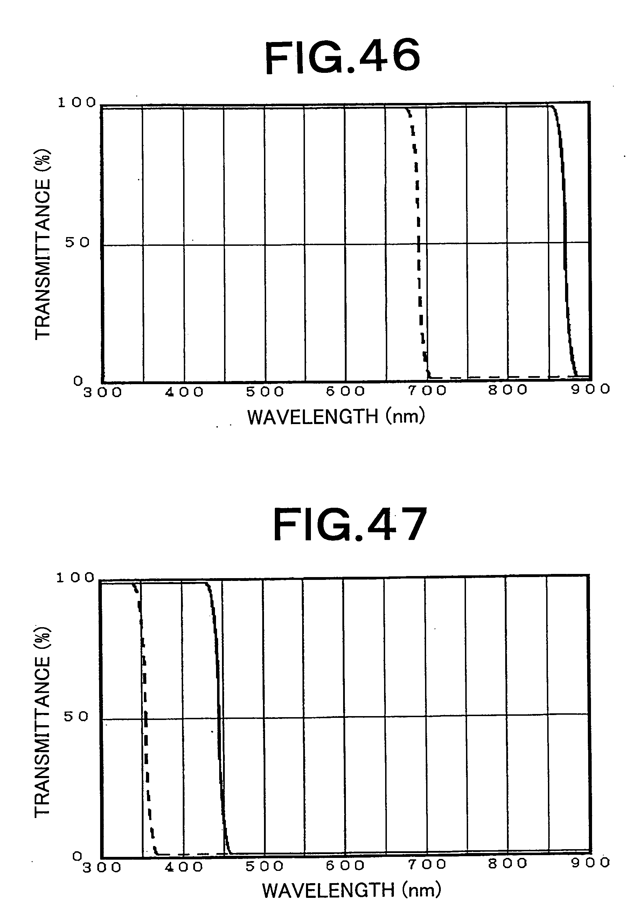

As shown in FIG. 46, a beam splitter I transmits almost all of both the P-polarized and S-polarized components with respect to the light having a wavelength of 400 nm, transmits almost all of both the P-polarized and S-polarized components with respect to the light having a wavelength of 660 nm, and transmits almost all of the P-polarized components and reflects almost all of the S-polarized components with respect to the light having a wavelength of 780 nm.

### (Beam Splitter J)

As shown in FIG. 47, a beam splitter J transmits almost all of the P-polarized components and reflects almost all of the S-polarized components with respect to the light having a wavelength of 400 nm, reflects almost all of both the P-polarized and S-polarized components with respect to the light having a wavelength of 660 nm, and reflects almost all of both the P-polarized and S-polarized components with respect to the light having a wavelength of 780 nm.

### (Beam Splitter K)

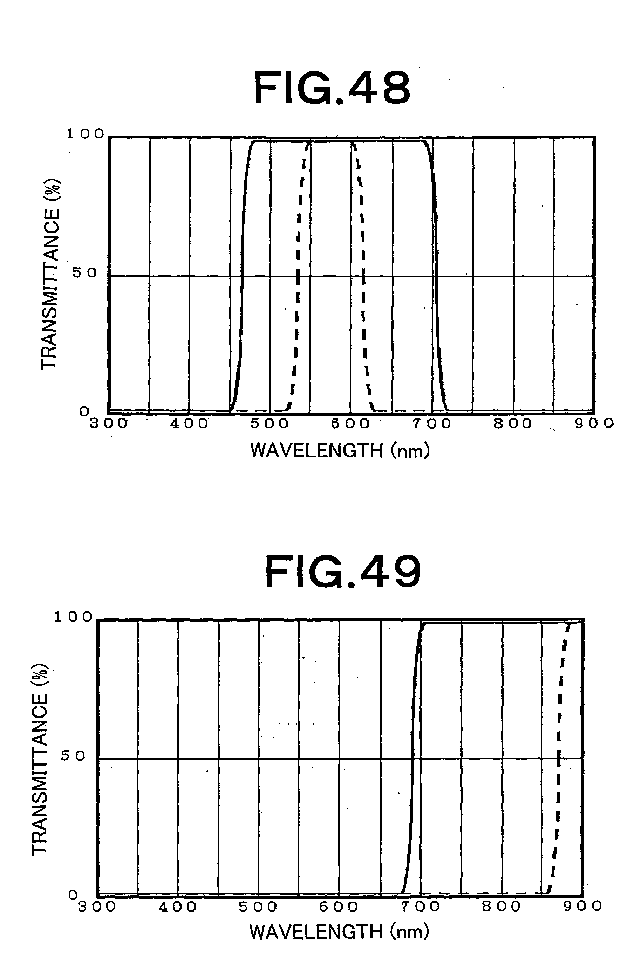

As shown in FIG. 48, a beam splitter K reflects almost all of both the P-polarized and S-polarized components with respect to the light having a wavelength of 400 nm, transmits almost all of the P-polarized components and reflects almost all of the S-polarized components with respect to the light having a wavelength of 660 nm, and reflects almost all of both the P-polarized and S-polarized components with respect to the light having a wavelength of 780 nm.

### (Beam Splitter L)

As shown in FIG. 49, a beam splitter L reflects almost all of both the P-polarized and S-polarized components with respect to the light having a wavelength of 400 nm, reflects almost all of both the P-polarized and S-polarized components with respect to the light having a wavelength of 660 nm, and transmits almost all of the P-polarized components and reflects almost all of the S-polarized components with respect to the light having a wavelength of 780 nm.

### (Beam Splitter M)

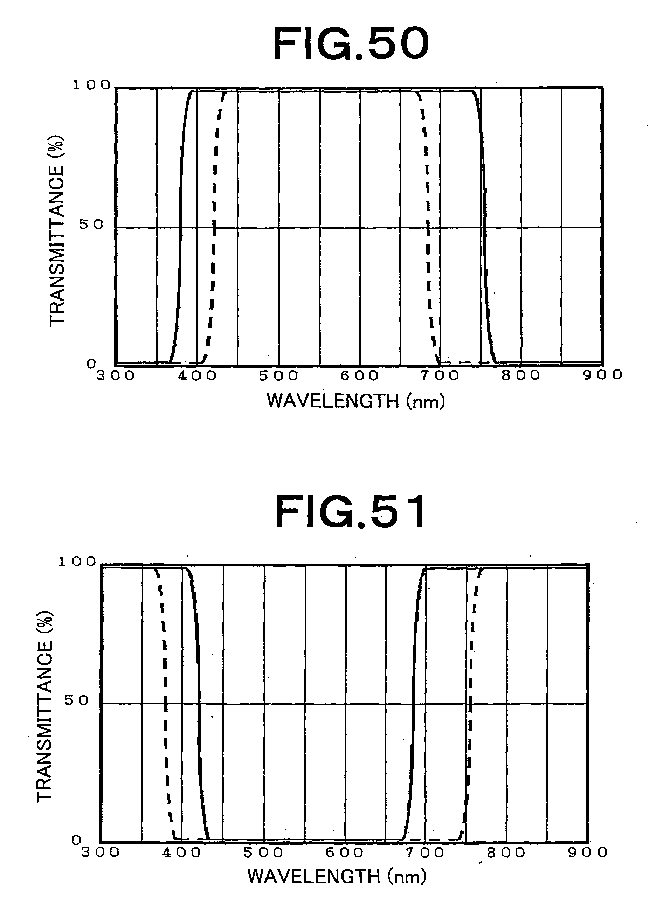

As shown in FIG. 50, a beam splitter M transmits almost all of both the P-polarized components and reflects almost all of the S-polarized components with respect to the light having a wavelength of 400 nm, transmits almost all of both the P-polarized and S-polarized components with respect to the light having a wavelength of 660 nm, and reflects almost all of both the P-polarized and S-polarized components with respect to the light having a wavelength of 780 nm.

### (Beam Splitter N)

As shown in FIG. 51, a beam splitter N transmits almost all of both the P-polarized components and reflects almost all of the S-polarized components with respect to the light having a wavelength of 400 nm, reflects almost all of both the P-polarized and S-polarized components with respect to the light having a wavelength of 660 nm, and transmits almost all of both the P-polarized and S-polarized components with respect to the light having a wavelength of 780 nm.

### (Beam Splitter O)

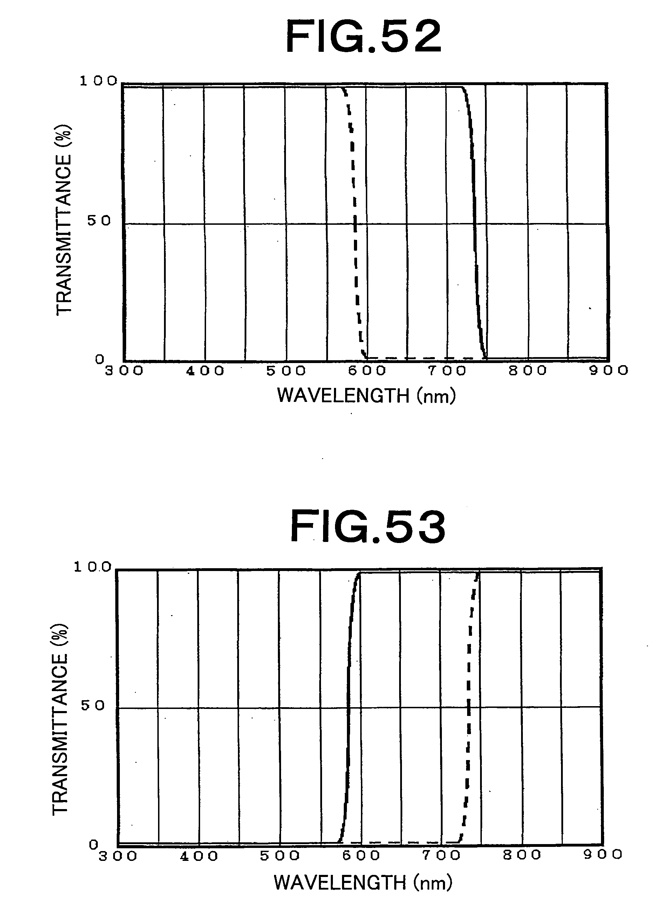

As shown in FIG. 52, a beam splitter O transmits almost all of both the P-polarized and S-polarized components with respect to the light having a wavelength of 400 nm, transmits almost all of the P-polarized components and reflects almost all of the S-polarized components with respect to the light having a wavelength of 660 nm, and reflects almost all of both the P-polarized and S-polarized components with respect to the light having a wavelength of 780 nm.

### (Beam Splitter P)

As shown in FIG. 53, a beam splitter P reflects almost all of both the P-polarized and S-polarized components with respect to the light having a wavelength of 400 nm, transmits almost all of the P-polarized components and reflects almost all of the S-polarized components with respect to the light having a wavelength of 660 nm, and transmits almost all of both the P-polarized and S-polarized components with respect to the light having a wavelength of 780 nm.

### (Beam Splitter Q)

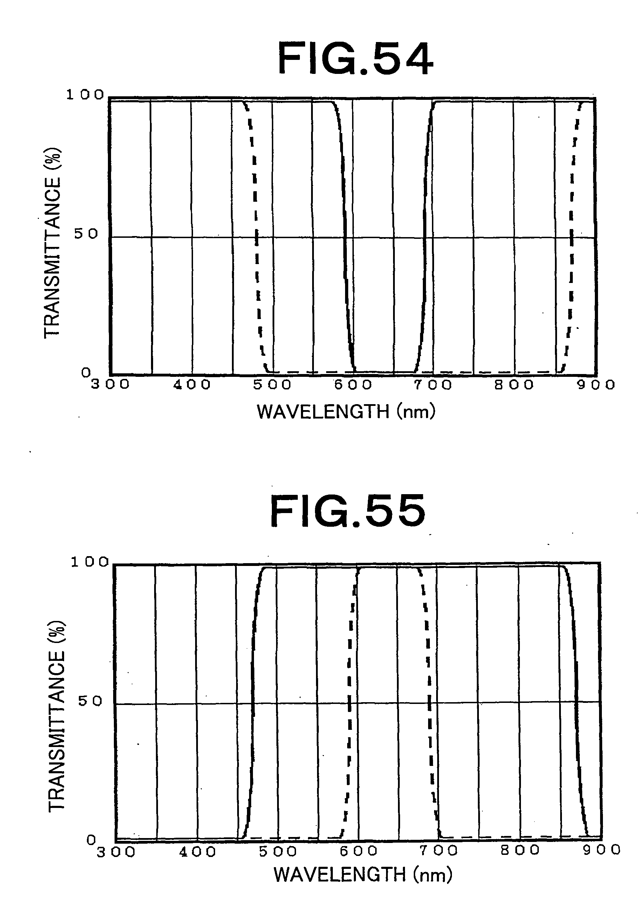

As shown in FIG. 54, a beam splitter Q transmits almost all of both the P-polarized and S-polarized components with respect to the light having a wavelength of 400 nm, reflects almost all of both the P-polarized and S-polarized components with respect to the light having a wavelength of 660 nm, and transmits almost all of the P-polarized components and reflects almost all of the S-polarized components with respect to the light having a wavelength of 780 nm.

### (Beam Splitter R)

As shown in FIG. 55, a beam splitter R reflects almost all of both the P-polarized and S-polarized components with respect to the light having a wavelength of 400 nm, transmits almost all of both the P-polarized and S-polarized components with respect to the light having a wavelength of 660 nm, and transmits almost all of the P-polarized components and reflects almost all of the S-polarized components with respect to the light having a wavelength of 780 nm.

### (Beam Splitter S)

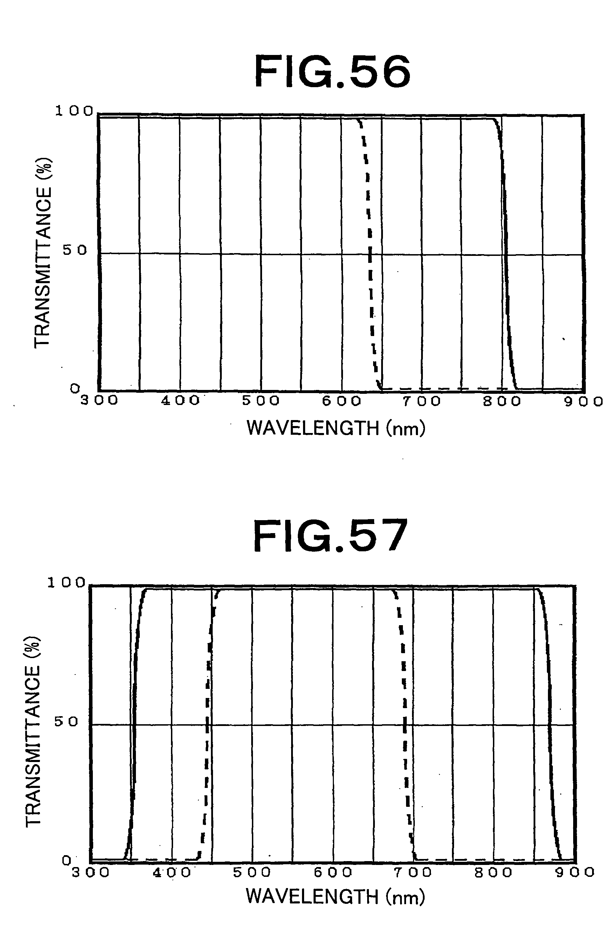

As shown in FIG. 56, a beam splitter S transmits almost all of both the P-polarized and S-polarized components with respect to the light having a wavelength of 400 nm, transmits almost all of both the P-polarized components and reflects almost all of the S-polarized components with respect to the light having a wavelength of 660 nm, and transmits almost all of both the P-polarized components and reflects almost all of the S-polarized components with respect to the light having a wavelength of 780 nm.

### (Beam Splitter T)

As shown in FIG. 57, a beam splitter T transmits almost all of the P-polarized components and reflects almost all of the S-polarized components with respect to the light having a wavelength of 400 nm, transmits almost all of both the P-polarized and S-polarized components with respect to the light having a wavelength of 660 nm, and transmits almost all of the P-polarized components and reflects almost all of the S-polarized components with respect to the light having a wavelength of 780 nm.

### (Beam Splitter U)

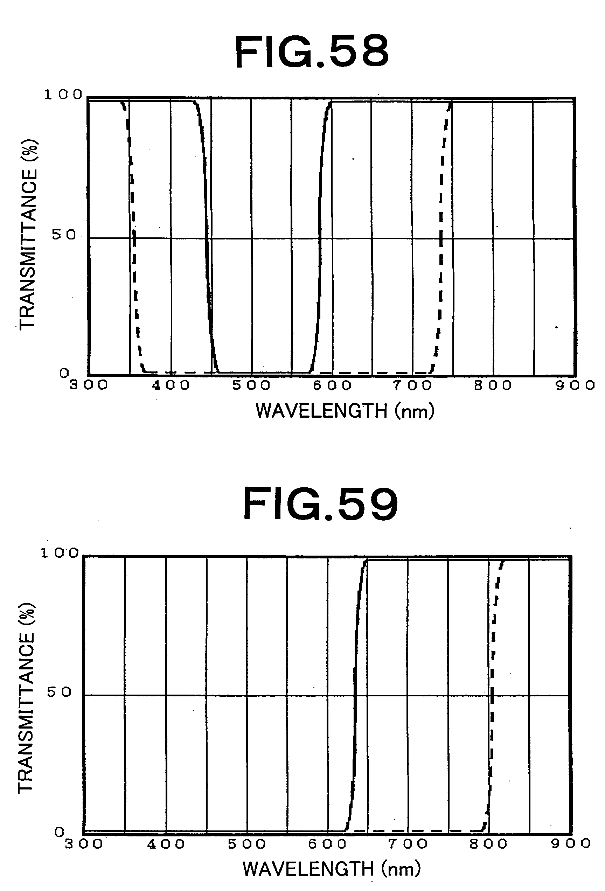

As shown in FIG. 58, a beam splitter U transmits almost all of the P-polarized components and reflects almost all of the S-polarized components with respect to the light having a wavelength of 400 nm, transmits almost all of the P-polarized components and reflects almost all of the S-polarized components with respect to the light having a wavelength of 660 nm, and transmits almost all of both the P-polarized and S-polarized components with respect to the light having a wavelength of 780 nm.

### (Beam Splitter V)

As shown in FIG. 59, a beam splitter V reflects almost all of both the P-polarized and S-polarized components with respect to the light having a wavelength of 400 nm, transmits almost all of the P-polarized components and reflects almost all of the S-polarized components with respect to the light having a wavelength of 660 nm, and transmits almost all of the P-polarized components and reflects almost all of the S-polarized components with respect to the light having a wavelength of 780 nm.

### (Beam Splitter W)

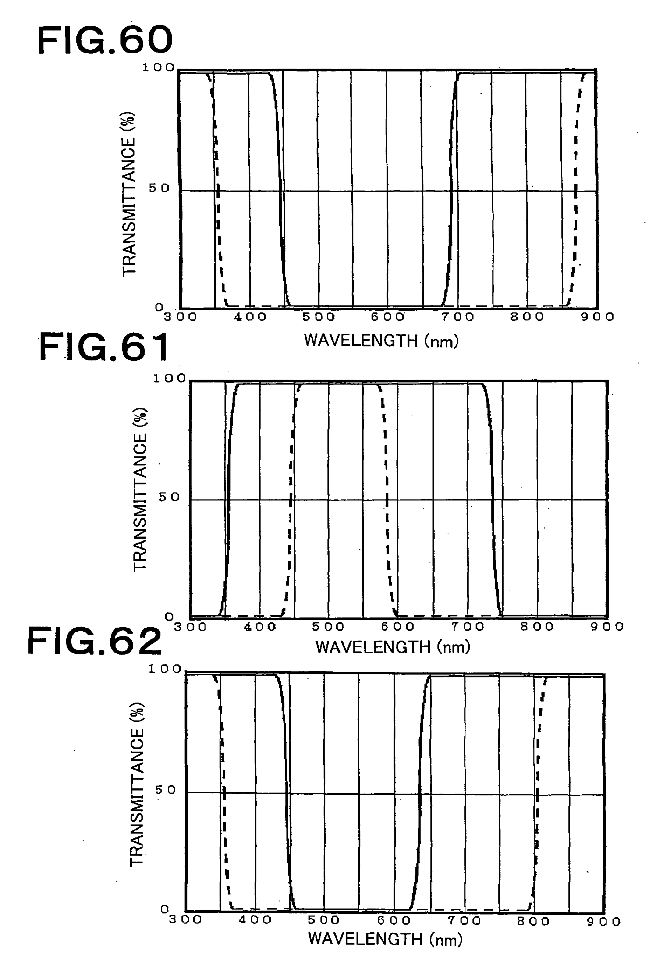

As shown in FIG. 60, a beam splitter W transmits almost all of the P-polarized components and reflects almost all of the S-polarized components with respect to the light having a wavelength of 400 nm, reflects almost all of both the P-polarized and S-polarized components with respect to the light having a wavelength of 660 nm, and transmits almost all of the P-polarized components and reflects almost all of the S-polarized components with respect to the light having a wavelength of 780 nm.

### (Beam Splitter X)

As shown in FIG. 61, a beam splitter X transmits almost all of the P-polarized components and reflects almost all of the S-polarized components with respect to the light having a wavelength of 400 nm, transmits almost all of the P-polarized components and reflects almost all of the S-polarized components with respect to the light having a wavelength of 660 nm, and reflects almost all of both the P-polarized and S-polarized components with respect to the light having a wavelength of 780 nm.

### (Beam Splitter Y)

As shown in FIG. 62, a beam splitter Y transmits almost all of the P-polarized components and reflects almost all of the S-polarized components with respect to the light having a wavelength of 400 nm, transmits almost all of the P-polarized components and reflects almost all of the S-polarized components with respect to the light having a wavelength of 660 nm, and transmits almost all of the P-polarized components and reflects almost all of the S-polarized components with respect to the light having a wavelength of 780 nm.

Characteristics of the above-described beam splitters A to Y are shown in Table 1.

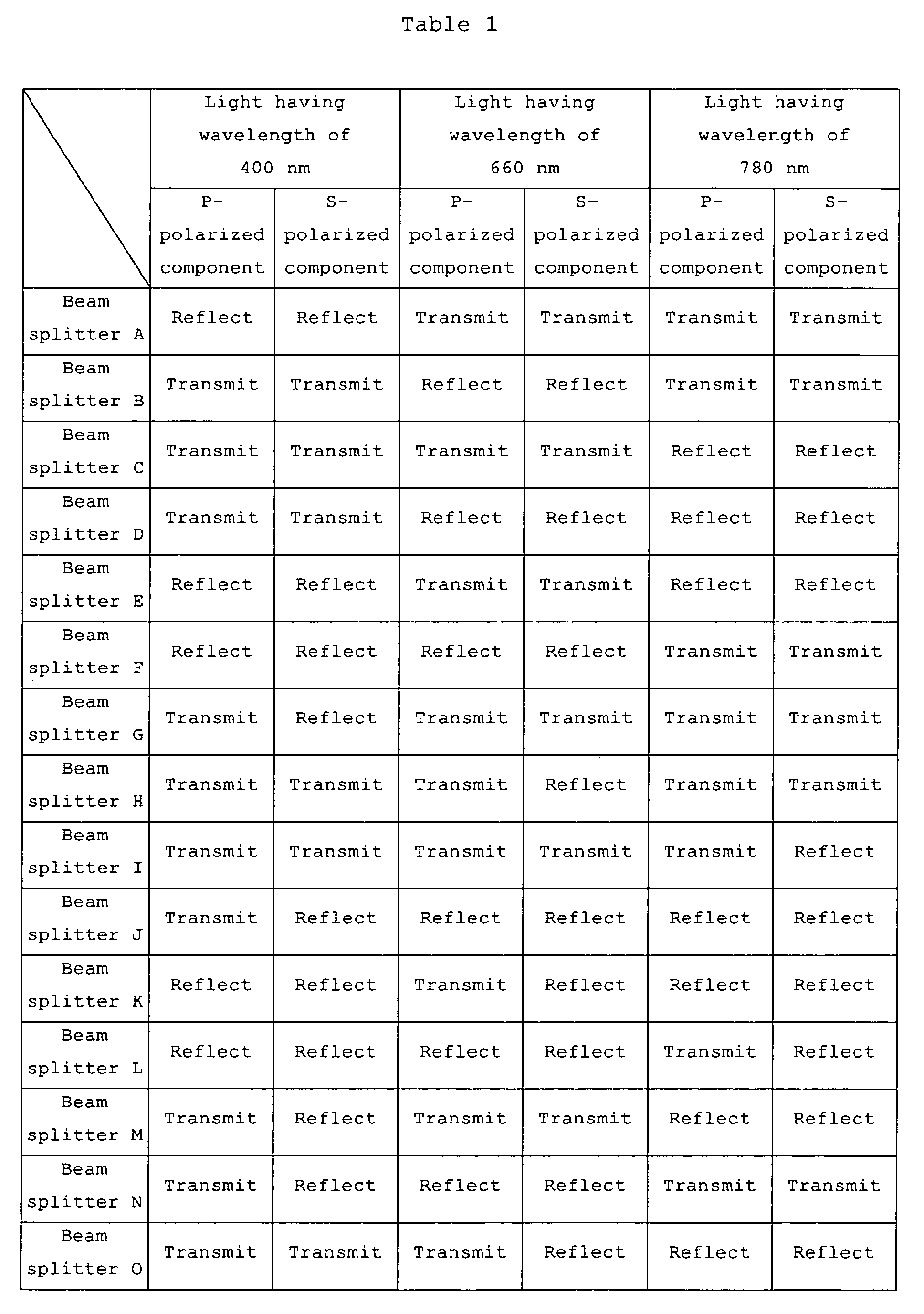

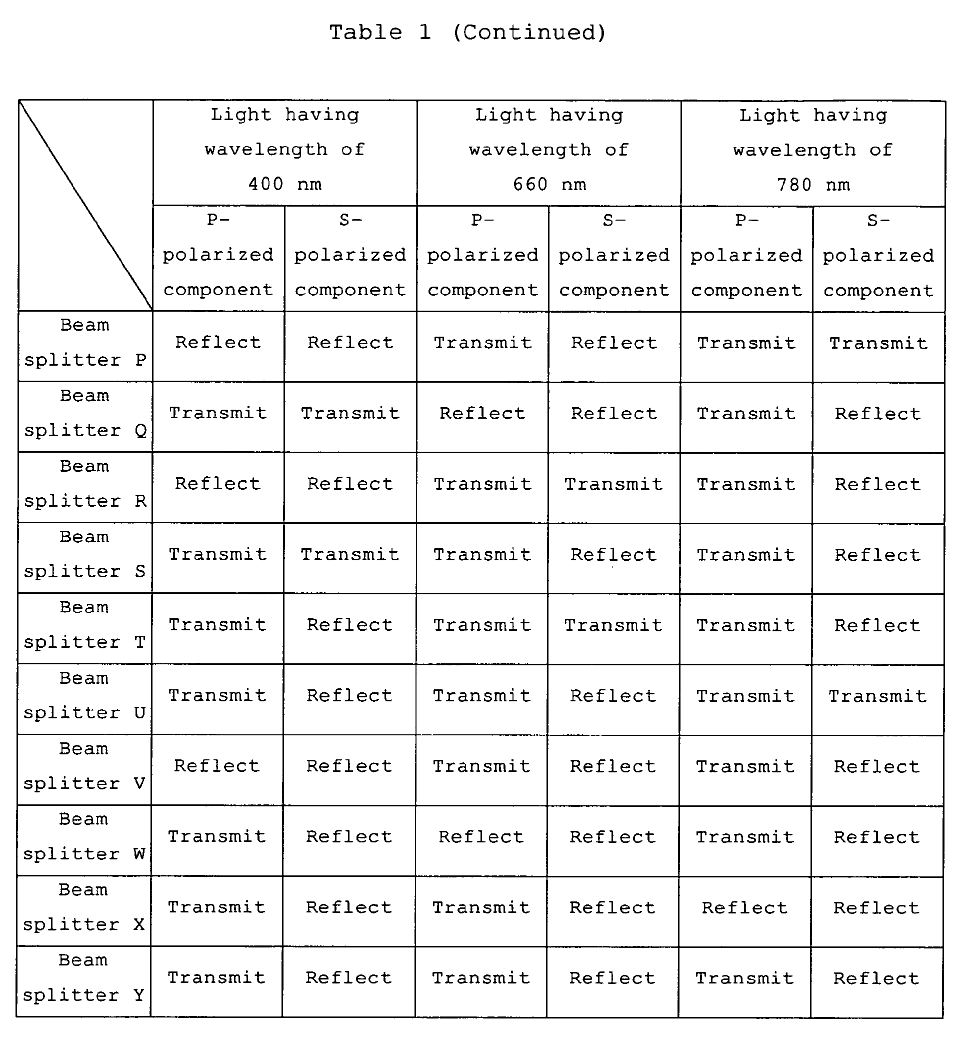

### 2. Characteristics of Wavelength Plate

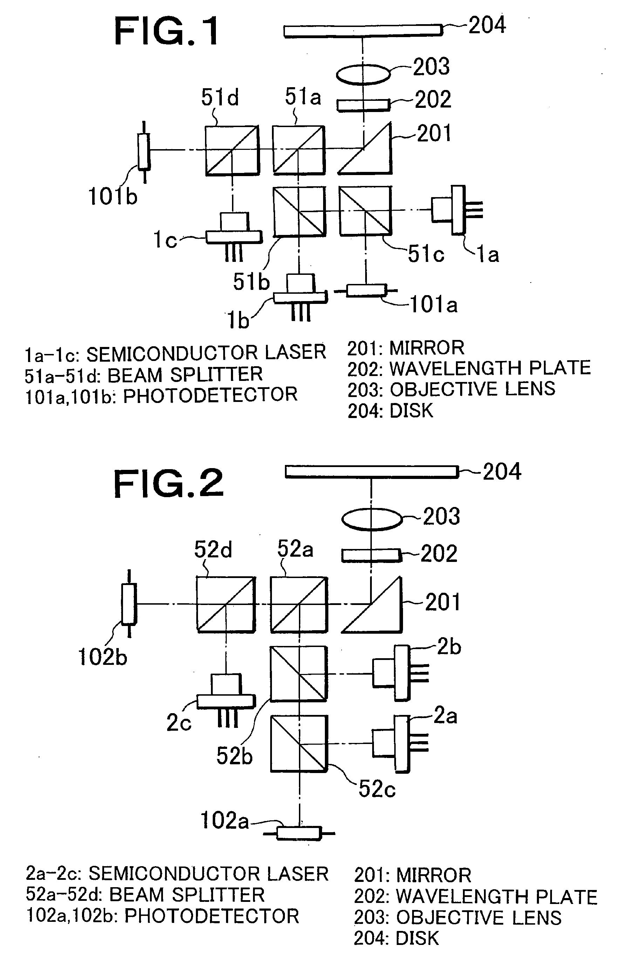

Next, characteristics of a wavelength plate (corresponding to a wavelength plate (wave plate) 202 of FIGS. 1 to 37, FIG. 73 described later) for use in the embodiments of the optical head apparatus of the present invention will be described. The wavelength plate for use in the embodiments of the optical head apparatus of the present invention is a broad-band quarter-wave plate with respect to light having wavelengths 400 nm, 660 nm, and 780 nm. As the broad-band quarter-wave plate, for example, there is a quarter-wave plate described in JP-A-H05(1993)-100114.

In the embodiment of the optical head apparatus of the present invention, a combination of at least one beam splitter including polarization beam splitters with respect to the light having wavelengths of 400 nm, 660 nm, and 780 nm, and the wavelength plate constitutes an optical wave synthesizing/separating system.

The wavelength plate is disposed in a position closest to an objective lens in the optical wave synthesizing/separating system. Accordingly, the incident light upon the beam splitter has only one of P-polarized and S-polarized components. When the beam splitter transmits or reflects both the P-polarized and S-polarized components, a phase difference is generally made between the P-polarized and S-polarized components transmitted through or reflected by the beam splitter. Therefore, when the incident light upon the beam splitter has both the P-polarized and S-polarized components, a polarized state is disturbed, and the optical wave synthesizing/separating system does not function correctly during transmission through the beam splitter or reflection by the beam splitter. However, when the incident light upon the beam splitter has only one of the P-polarized and S-polarized components, the polarized state is not disturbed, and the optical wave synthesizing/separating system functions correctly during the transmission through the beam splitter or the reflection by the beam splitter.

At this time, when the polarization beam splitter is combined with the wavelength plate, an efficiency can be raised from 50% during passage through the optical wave synthesizing/separating system in both forward and backward paths with respect to the light having any of the wavelengths of 400 nm, 660 nm, and 780 nm. Each light having the wavelength passes through three beam splitters at maximum including a polarization beam splitter which separates the light in the forward path from that in the backward path and two beam splitters which performs synthesis/separation with respect to the lights having the other two wavelengths, and the wavelength plate in each of the forward and backward paths. For example, assuming that efficiency during the passing through each of three beam splitters and the wavelength plate is 90%, the efficiency during the passing through all of them is 65.6%. When the efficiency during the passing through each of the three beam splitters and the wavelength plate is raised from 84.1%, the efficiency during the passing through all of them is higher than 50%. Here, when the light of the forward path is transmitted, and the light of the backward path is reflected in order to obtain a high efficiency during the passing through the polarization beam splitter for separating the light of the forward path from that of the light of the backward path, the light of the forward path as the P-polarized light and the light of the backward path as the S-polarized light are applied into the polarization beam splitter. To reflect the light of the forward path, and transmit the light of the backward path, the light of the forward path as the S-polarized light and the light of the backward path as the P-polarized light are applied into the polarization beam splitter.

Embodiments of the present invention using the optical wave synthesizing/separating system (beam splitters and wavelength plate) having the above-described characteristics will be described hereinafter with reference to the drawings.

Here, the optical head apparatus capable of recording or reproducing information even with respect to the disk of any of the next-generation standards (AOD standard, BRD standard), DVD standard, and CD standard requires a next-generation standard light source having a wavelength of 400 nm, a DVD-standard light source having a wavelength of 660 nm, a CD-standard light source having a wavelength of 780 nm, a photodetector for the next-generation standard, a photodetector for the DVD standard, and a photodetector for the CD standard, that is, three light sources and three photodetectors. To minimize the optical head apparatus, they are preferably integrated or shared as many as possible. Concretely, a method of integrating the light sources and the photodetectors as a module, a method of integrating a plurality of light sources, or a method of combining a plurality of photodetectors into a common photodetector is considered.

### 3. First to Fourth Embodiments (Type 1)

Each of first to fourth embodiments of the optical head apparatus of the present invention has a configuration having three light sources and two photodetectors.

### (First Embodiment)

FIG. 1 shows a first embodiment of the optical head apparatus of the present invention. Wavelengths of three semiconductor lasers (light sources) 1a, 1b, and 1c are 780 nm, 660 nm, and 400 nm, respectively. The beam splitter D is used as a beam splitter 51a. One of the beam splitters K, O, and X is used as a beam splitter 51b. One of the beam splitters L, Q, W, S, V, and Y is used as a beam splitter 51c. One of the beam splitters G, J, M, N, T, U, W, X, and Y is used as a beam splitter 51d.

Light having a wavelength of 400 nm emitted from the semiconductor laser 1c strikes as S-polarized light on the beam splitter 51d. Almost all the light is reflected, transmitted through the beam splitter 51a, reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, reflected by the mirror 201, and almost all the light is transmitted through the beam splitter 51a. The light strikes as P-polarized light on the beam splitter 51d, and almost all the light is transmitted, and received by a photodetector 101b.

The light having a wavelength of 660 nm emitted from the semiconductor laser 1b enters the beam splitter 51b as the P-polarized light. Almost all the light is transmitted, reflected by the beam splitter 51a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 51a, strikes on the beam splitter 51b as the S-polarized light, is reflected, strikes on the beam splitter 51c as the S-polarized light, and is reflected and received by a photodetector 101a.

The light having a wavelength of 780 nm emitted from the semiconductor laser 1a enters the beam splitter 51c as the P-polarized light. Almost all the light is transmitted, reflected by the beam splitter 51b, the beam splitter 51a, and then the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light, and reflected by the mirror 201. Almost all the light is reflected by the beam splitter 51a, and beam splitter 51b, and strikes on the beam splitter 51c as the S-polarized light. Almost all the light is reflected, and received by the photodetector 101a.

In the present embodiment, the wavelengths of the semiconductor lasers 1a, 1b, 1c may be set to 660 nm, 780 nm, and 400 nm. At this time, the beam splitter D is used as the beam splitter 51a. One of the beam splitters L, Q, and W is used as the beam splitter 51b. One of the beam splitters K, O, X, S, V, and Y is used as the beam splitter 51c. One of the beam splitters G, J, M, N, T, U, W, X, and Y is used as the beam splitter 51d.

In the present embodiment, the wavelengths of the semiconductor lasers 1a, 1b, and 1c may be set to 780 nm, 400 nm, and 660 nm, respectively. At this time, the beam splitter E is used as the beam splitter 51a. One of the beam splitters J, M, and X is used as the beam splitter 51b. One of the beam splitters L, R, V, T, W, and Y is used as the beam splitter 51c. One of the beam splitters H, K, O, P, S, U, V, X, and Y is used as the beam splitter 51d.

In the present embodiment, the wavelengths of the semiconductor lasers 1a, 1b, and 1c may be set to 400 nm, 780 nm, and 660 nm, respectively. At this time, the beam splitter E is used as the beam splitter 51a. One of the beam splitters L, R, and V is used as the beam splitter 51b. One of the beam splitters J, M, X, T, W, and Y is used as the beam splitter 51c. One of the beam splitters H, K, O, P, S, U, V, X, and Y is used as the beam splitter 51d.

In the present embodiment, the wavelengths of the semiconductor lasers 1a, 1b, and 1c may be set to 660 nm, 400 nm, and 780 nm, respectively. At this time, the beam splitter F is used as the beam splitter 51a. One of the beam splitters J, N, and W is used as the beam splitter 51b. One of the beam splitters K, P, V, U, X, and Y is used as the beam splitter 51c. One of the beam splitters I, L, Q, R, S, T, V, W, and Y is used as the beam splitter 51d.

In the present embodiment, the wavelengths of the semiconductor lasers 1a, 1b, and 1c may be set to 400 nm, 660 nm, and 780 nm, respectively. At this time, the beam splitter F is used as the beam splitter 51a. One of the beam splitters K, P, and V is used as the beam splitter 51b. One of the beam splitters J, N, W, U, X, and Y is used as the beam splitter 51c. One of the beam splitters I, L, Q, R, S, T, V, W, and Y is used as the beam splitter 51d.

Furthermore, an embodiment in which the semiconductor laser 1c and the photodetector 101b are replaced is possible. An embodiment in which one of the semiconductor lasers 1a, 1b and the photodetector 101a are replaced is also possible.

In the embodiment in which the semiconductor laser 1a and the photodetector 101a are replaced, a half-wave plate for rotating the polarization direction of the light emitted from the semiconductor laser 1b and reflected by the disk 204 and beam splitter 51b by 90° in such a manner that the light is transmitted through the beam splitter 51c is inserted between the beam splitters 51b and 51c if necessary.

In the embodiment in which the semiconductor laser 1b and the photodetector 101a are replaced, a half-wave plate for rotating the polarization direction of the light emitted from the semiconductor laser 1a and transmitted through the beam splitter 51c by 90° in such a manner that the light is reflected by the beam splitter 51b is inserted between the beam splitters 51c and 51b if necessary.

Since the semiconductor lasers 1a, 1b, and 1c are not integrated with the other light source or the photodetector in the first embodiment of the optical head apparatus of the present invention, the semiconductor lasers 1a, 1b and 1c can be provided with high heat dissipation properties. Since the total number of the light sources and photodetectors is five, the optical head apparatus can be miniaturized. The photodetector 101b can be designed in such a manner that sensitivity or the like with respect to the wavelength of the semiconductor laser 1c is optimized, and the photodetector 101a can be designed in such a manner that sensitivity or the like with respect to the wavelengths of the semiconductor lasers 1a, 1b are optimized.

### (Second Embodiment)

FIG. 2 shows a second embodiment of the optical head apparatus of the present invention. Wavelengths of semiconductor lasers 2a, 2b, 2c are 780 nm, 660 nm, and 400 nm, respectively. The beam splitter D is used as a beam splitter 52a. One of the beam splitters H, P, and U is used as a beam splitter 52b. One of the beam splitters I, R, T, S, V, and Y is used as a beam splitter 52c. One of the beam splitters G, J, M, N, T, U, W, X, and Y is used as a beam splitter 52d.

Light having a wavelength of 400 nm from the semiconductor laser 2c strikes as S-polarized light on the beam splitter 52d. Almost all the light is reflected, transmitted through the beam splitter 52a, reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, reflected by the mirror 201, and almost all the light is transmitted through the beam splitter 52a. The light enters the beam splitter 52d as P-polarized light, and almost all the light is transmitted, and received by a photodetector 102b.

The light having a wavelength of 660 nm from the semiconductor laser 2b strikes on the beam splitter 52b as the S-polarized light, and almost all the light is reflected. Almost all the light is reflected by the beam splitter 52a and the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light polarization direction is orthogonal to that for the forward path from the circularly polarized light by the wavelength plate 202, and reflected by the mirror 201. Almost all the light is reflected by the beam splitter 52a, enters the beam splitter 52b as the P-polarized light, is transmitted, enters the beam splitter 52c as the P-polarized light, and is transmitted and received by a photodetector 102a.

The light having a wavelength of 780 nm from the semiconductor laser 2a strikes on the beam splitter 52c as the S-polarized light. Almost all the light is reflected, transmitted through the beam splitter 52b, reflected by the beam splitter 52a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is reflected by the beam splitter 52a, transmitted through the beam splitter 52b, enters the beam splitter 52c as the P-polarized light, and is transmitted and received by a photodetector 102a.

In the present embodiment, the wavelengths of the semiconductor lasers 2a, 2b, and 2c may be set to 660 nm, 780 nm, and 400 nm, respectively. At this time, the beam splitter D is used as the beam splitter 52a. One of the beam splitters I, R, and T is used as the beam splitter 52b. One of the beam splitters H, P, U, S, V, and Y is used as the beam splitter 52c. One of the beam splitters G, J, M, N, T, U, W, X, and Y is used as the beam splitter 52d.

In the present embodiment, the wavelengths of the semiconductor lasers 2a, 2b, and 2c may be set to 780 nm, 400 nm, and 660 nm, respectively. At this time, the beam splitter E is used as the beam splitter 52a. One of the beam splitters G, N, and U is used as the beam splitter 52b. One of the beam splitters I, Q, S, T, W, and Y is used as the beam splitter 52c. One of the beam splitters H, K, O, P, S, U, V, X, and Y is used as the beam splitter 52d.

In the present embodiment, the wavelengths of the semiconductor lasers 2a, 2b, and 2c may be set to 400 nm, 780 nm, 660 nm, respectively. At this time, the beam splitter E is used as the beam splitter 52a. One of the beam splitters I, Q, and S is used as the beam splitter 52b. One of the beam splitters G, N, U, T, W, and Y is used as the beam splitter 52c. One of the beam splitters H, K, O, P, S, U, V, X, and Y is used as the beam splitter 52d.

In the present embodiment, the wavelengths of the semiconductor lasers 2a, 2b, and 2c may be set to 660 nm, 400 nm, and 780 nm, respectively. At this time, the beam splitter F is used as the beam splitter 52a. One of the beam splitters G, M, and T is used as the beam splitter 52b. One of the beam splitters H, O, S, U, X, and Y is used as the beam splitter 52c. One of the beam splitters I, L, Q, R, S, T, V, W, and Y is used as the beam splitter 52d.

In the present embodiment, the wavelengths of the semiconductor lasers 2a, 2b, and 2c may be set to 400 nm, 660 nm, and 780 nm, respectively. At this time, the beam splitter F is used as the beam splitter 52a. One of the beam splitters H, O, and S is used as the beam splitter 52b. One of the beam splitters G, M, T, U, X, and Y is used as the beam splitter 52c. One of the beam splitters I, L, Q, R, S, T, V, W, and Y is used as the beam splitter 52d.

Furthermore, an embodiment in which the semiconductor laser 2c and the photodetector 102b are replaced is possible. An embodiment in which one of the semiconductor lasers 2a and 2b, and the photodetector 102a are replaced is also possible.

In the embodiment in which the semiconductor laser 2a and the photodetector 102a are replaced, a half-wave plate for rotating the polarization direction of the light emitted from the semiconductor laser 2b, reflected by the disk 204, and transmitted through the beam splitter 52b by 90° in such a manner that the light is reflected by the beam splitter 52c is inserted between the beam splitters 52b and 52c if necessary.

In the embodiment in which the semiconductor laser 2b and the photodetector 102a are replaced, a half-wave plate for rotating the polarization direction of the light emitted from the semiconductor laser 2a and reflected by the beam splitter 52c by 90° in such a manner that the light is transmitted through the beam splitter 52b is inserted between the beam splitters 52c and 52b if necessary.

Since the semiconductor lasers 2a, 2b, and 2c are not integrated with the other light source or the photodetector in the second embodiment of the optical head apparatus of the present invention, the semiconductor lasers 2a, 2b, and 2c can be provided with high heat dissipation properties. Since the total number of the light sources and photodetectors is five, the optical head apparatus can be miniaturized. The photodetector 102b can be designed in such a manner that sensitivity or the like with respect to the wavelength of the semiconductor laser 2c is optimized, and the photodetector 102a can be designed in such a manner that sensitivity or the like with respect to the wavelengths of the semiconductor lasers 2a and 2b are optimized.

### (Third Embodiment)

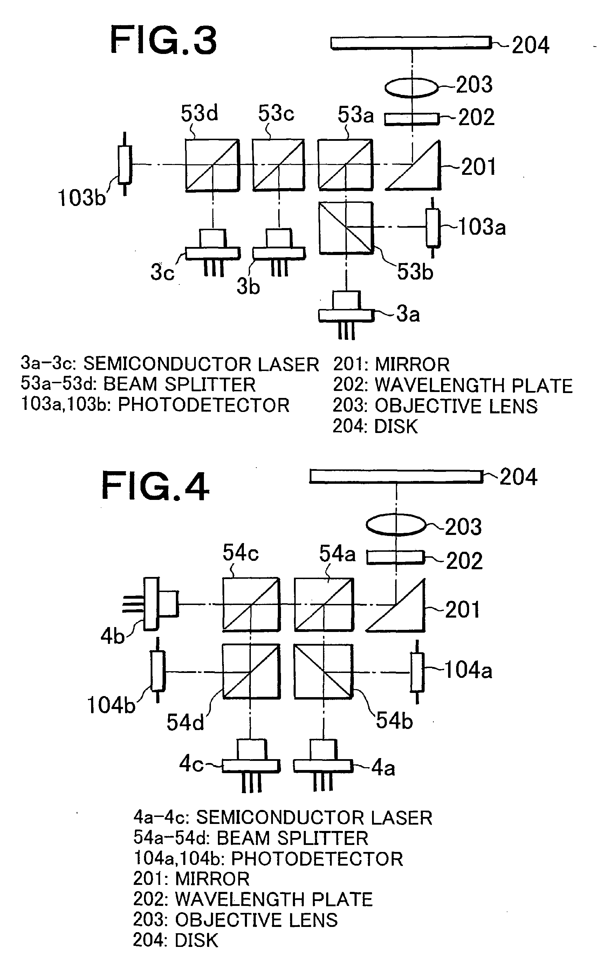

FIG. 3 shows a third embodiment of the optical head apparatus of the present invention. Wavelengths of semiconductor lasers 3a, 3b, and 3c are 400 nm, 660 nm, and 780 nm, respectively. The beam splitter A is used as a beam splitter 53a. One of the beam splitters G, J, M, N, T, U, W, X, and Y is used as a beam splitter 53b. One of the beam splitters H, P, and U is used as a beam splitter 53c. One of the beam splitters I, R, T, S, V, and Y is used as a beam splitter 53d.

Light having a wavelength of 400 nm from the semiconductor laser 3a enters the beam splitter 53b as P-polarized light. Almost all the light is transmitted, reflected by the beam splitter 53a, reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, and reflected by the mirror 201. Almost all the light is reflected by the beam splitter 53a. The light strikes on the beam splitter 53b as S-polarized light, and almost all the light is reflected, and received by a photodetector 103a.

The light having a wavelength of 660 nm emitted from the semiconductor laser 3b strikes on the beam splitter 53c as the S-polarized light, and almost all the light is reflected. Almost all the light is transmitted through the beam splitter 53a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 53a, enters the beam splitter 53c as the P-polarized light, is transmitted, enters the beam splitter 53d as the P-polarized light, and is transmitted and received by a photodetector 103b.

The light having a wavelength of 780 nm from the semiconductor laser 3c strikes on the beam splitter 53d as the S-polarized light. Almost all the light is reflected, transmitted through the beam splitter 53c, transmitted through the beam splitter 53a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is transmitted through the beam splitter 53a, transmitted through the beam splitter 53c, enters the beam splitter 53d as the P-polarized light, and is transmitted and received by a photodetector 103b.

In the present embodiment, the wavelengths of the semiconductor lasers 3a, 3b, and 3c may be set to 400 nm, 780 nm, and 660 nm. At this time, the beam splitter A is used as the beam splitter 53a. One of the beam splitters G, J, M, N, T, U, W, X, and Y is used as the beam splitter 53b. One of the beam splitters I, R, and T is used as the beam splitter 53c. One of the beam splitters H, P, U, S, V, and Y is used as the beam splitter 53d.

In the present embodiment, the wavelengths of the semiconductor lasers 3a, 3b, and 3c may be set to 660 nm, 400 nm, and 780 nm, respectively. At this time, the beam splitter B is used as the beam splitter 53a. One of the beam splitters H, K, O, P, S, U, V, X, and Y is used as the beam splitter 53b. One of the beam splitters G, N, U is used as the beam splitter 53c. One of the beam splitters I, Q, S, T, W, and Y is used as the beam splitter 53d.

In the present embodiment, the wavelengths of the semiconductor lasers 3a, 3b, and 3c may be set to 660 nm, 780 nm, and 400 nm, respectively. At this time, the beam splitter B is used as the beam splitter 53a. One of the beam splitters H, K, O, P, S, U, V, X, and Y is used as the beam splitter 53b. One of the beam splitters I, Q, S is used as the beam splitter 53c. One of the beam splitters G, N, U, T, W, and Y is used as the beam splitter 53d.

In the present embodiment, the wavelengths of the semiconductor lasers 3a, 3b, and 3c may be set to 780 nm, 400 nm, and 660 nm, respectively. At this time, the beam splitter C is used as the beam splitter 53a. One of the beam splitters I, L, Q, R, S, T, V, W, and Y is used as the beam splitter 53b. One of the beam splitters G, M, and T is used as the beam splitter 53c. One of the beam splitters H, O, S, U, X, and Y is used as the beam splitter 53d.

In the present embodiment, the wavelengths of the semiconductor lasers 3a, 3b, and 3c may be set to 780 nm, 660 nm, and 400 nm, respectively. At this time, the beam splitter C is used as the beam splitter 53a. One of the beam splitters I, L, Q, R, S, T, V, W, and Y is used as the beam splitter 53b. One of the beam splitters H, O, and S is used as the beam splitter 53c. One of the beam splitters G, M, T, U, X, and Y is used as the beam splitter 53d.

Furthermore, an embodiment in which the semiconductor laser 3a and the photodetector 103a are replaced is possible. An embodiment in which one of the semiconductor lasers 3b and 3c, and the photodetector 103b are replaced is also possible.

In the embodiment in which the semiconductor laser 3b and the photodetector 103b are replaced, a half-wave plate for rotating the polarization direction of the light emitted from the semiconductor laser 3c and reflected by the disk 53d by 90° in such a manner that the light is transmitted through the beam splitter 53c is inserted between the beam splitters 53d and 53c if necessary.

In the embodiment in which the semiconductor laser 3c and the photodetector 103b are replaced, a half-wave plate for rotating the polarization direction of the light emitted from the semiconductor laser 3b, reflected by the disk 204, and transmitted through the beam splitter 53c by 90° in such a manner that the light is reflected by the beam splitter 53d is inserted between the beam splitters 53c and 53d if necessary.

Since the semiconductor lasers 3a, 3b, and 3c are not integrated with the other light source or the photodetector in the third embodiment of the optical head apparatus of the present invention, the semiconductor lasers 3a, 3b, and 3c can be provided with high heat dissipation properties. Since the total number of the light sources and photodetectors is five, the optical head apparatus can be miniaturized. Furthermore, the photodetector 103a can be designed in such a manner that sensitivity or the like with respect to the wavelength of the semiconductor laser 3a is optimized, and the photodetector 103b can be designed in such a manner that sensitivity or the like with respect to the wavelengths of the semiconductor lasers 3b and 3c are optimized.

### (Fourth Embodiment)

FIG. 4 shows a fourth embodiment of the optical head apparatus of the present invention. Wavelengths of semiconductor lasers 4a, 4b, and 4c are 400 nm, 660 nm, and 780 nm, respectively. The beam splitter A is used as a beam splitter 54a. One of the beam splitters G, J, M, N, T, U, W, X, and Y is used as a beam splitter 54b. One of the beam splitters K, O, and X is used as a beam splitter 54c. One of the beam splitters L, Q, W, S, V, and Y is used as a beam splitter 54d.

Light having a wavelength of 400 nm from the semiconductor laser 4a enters the beam splitter 54b as P-polarized light. Almost all the light is transmitted, reflected by the beam splitter 54a, reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light polarization direction is orthogonal to that for the forward path from circularly polarized light by the wavelength plate 202, and reflected by the mirror 201. Almost all the light is reflected by the beam splitter 54a. The light strikes on the beam splitter 54b as S-polarized light, and almost all the light is reflected, and received by a photodetector 104a.

The light having a wavelength of 660 nm emitted from the semiconductor laser 4b enters the beam splitter 54c as the P-polarized light, and almost all the light is transmitted. Almost all the light is transmitted through the beam splitter 54a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 54a, strikes on the beam splitter 54c as the S-polarized light, is reflected, strikes on the beam splitter 54d as the S-polarized light, and is reflected and received by a photodetector 104b.

The light having a wavelength of 780 nm from the semiconductor laser 4c enters the beam splitter 54d as the P-polarized light. Almost all the light is transmitted, reflected by the beam splitter 54c, transmitted through the beam splitter 54a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is transmitted through the beam splitter 54a, reflected by the beam splitter 54c, strikes on the beam splitter 54d as the S-polarized light, and is reflected and received by a photodetector 104b.

In the present embodiment, the wavelengths of the semiconductor lasers 4a, 4b, and 4c may be set to 400 nm, 780 nm, and 660 nm, respectively. At this time, the beam splitter A is used as the beam splitter 54a. One of the beam splitters G, J, M, N, T, U, W, X, and Y is used as the beam splitter 54b. One of the beam splitters L, Q, and W is used as the beam splitter 54c. One of the beam splitters K, O, X, S, V, and Y is used as the beam splitter 54d.

In the present embodiment, the wavelengths of the semiconductor lasers 4a, 4b, and 4c may be set to 660 nm, 400 nm, and 780 nm, respectively. At this time, the beam splitter B is used as the beam splitter 54a. One of the beam splitters H, K, O, P, S, U, V, X, and Y is used as the beam splitter 54b. One of the beam splitters J, M, and X is used as the beam splitter 54c. One of the beam splitters L, R, V, T, W, and Y is used as the beam splitter 54d.

In the present embodiment, the wavelengths of the semiconductor lasers 4a, 4b, and 4c may be set to 660 nm, 780 nm, and 400 nm, respectively. At this time, the beam splitter B is used as the beam splitter 54a. One of the beam splitters H, K, O, P, S, U, V, X, and Y is used as the beam splitter 54b. One of the beam splitters L, R, and V is used as the beam splitter 54c. One of the beam splitters J, M, X, T, W, and Y is used as the beam splitter 54d.

In the present embodiment, the wavelengths of the semiconductor lasers 4a, 4b, and 4c may be set to 780 nm, 400 nm, and 660 nm. At this time, the beam splitter C is used as the beam splitter 54a. One of the beam splitters I, L, Q, R, S, T, V, W, and Y is used as the beam splitter 54b. One of the beam splitters J, N, and W is used as the beam splitter 54c. One of the beam splitters K, P, V, U, X, and Y is used as the beam splitter 54d.

In the present embodiment, the wavelengths of the semiconductor lasers 4a, 4b, and 4c may be set to 780 nm, 660 nm, and 400 nm, respectively. At this time, the beam splitter C is used as the beam splitter 54a. One of the beam splitters I, L, Q, R, S, T, V, W, and Y is used as the beam splitter 54b. One of the beam splitters K, P, and V is used as the beam splitter 54c. One of the beam splitters J, N, W, U, X, and Y is used as the beam splitter 54d.

Furthermore, an embodiment in which the semiconductor laser 4a and the photodetector 104a are replaced is possible. An embodiment in which one of the semiconductor lasers 4b and 4c, and the photodetector 104b are replaced is also possible.

In the embodiment in which the semiconductor laser 4b and the photodetector 104b are replaced, a half-wave plate for rotating the polarization direction of the light emitted from the semiconductor laser 4c and transmitted through the beam splitter 54d by 90° in such a manner that the light is reflected by the beam splitter 54c is inserted between the beam splitters 54d and 54c if necessary.

In the embodiment in which the semiconductor laser 4c and the photodetector 104b are replaced, a half-wave plate for rotating the polarization direction of the light emitted from the semiconductor laser 4b, reflected by the disk 204, and reflected by the beam splitter 54c by 90° in such a manner that the light is transmitted through the beam splitter 54d is inserted between the beam splitters 54c and 54d if necessary.

Since the semiconductor lasers 4a, 4b, and 4c are not integrated with the other light source or the photodetector in the fourth embodiment of the optical head apparatus of the present invention, the semiconductor lasers 4a, 4b, and 4c can be provided with high heat dissipation properties. Since the total number of the light sources and photodetectors is five, the optical head apparatus can be miniaturized. Furthermore, the photodetector 104a can be designed in such a manner that sensitivity or the like with respect to the wavelength of the semiconductor laser 4a is optimized, and the photodetector 104b can be designed in such a manner that sensitivity or the like with respect to the wavelengths of the semiconductor lasers 4b and 4c are optimized.

### 4. Fifth to Ninth Embodiments (Type 2)

Each of configurations of fifth to ninth embodiments of an optical head apparatus of the present invention has three light sources and one photodetector.

### (Fifth Embodiment)

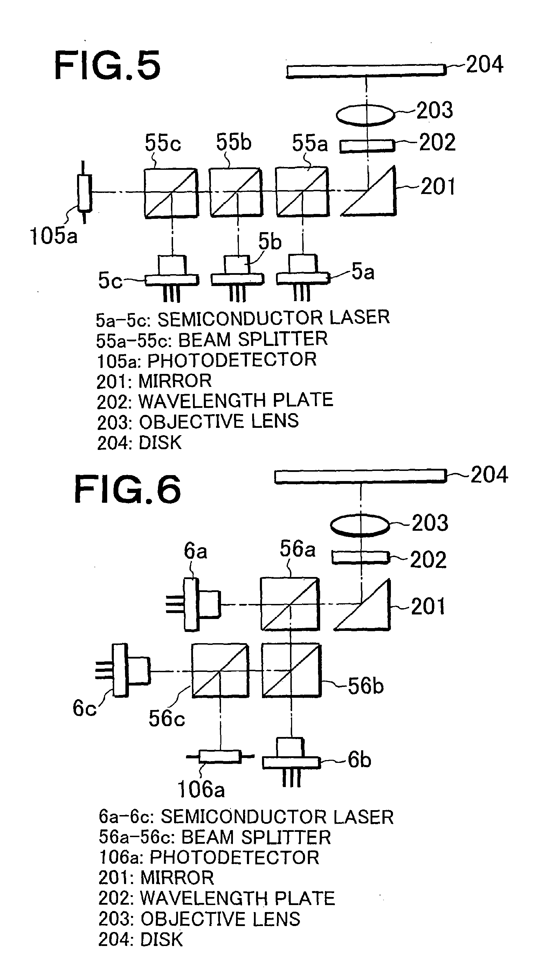

FIG. 5 shows a fifth embodiment of the optical head apparatus of the present invention. Wavelengths of semiconductor lasers 5a, 5b, and 5c are 400 nm, 660 nm, and 780 nm, respectively. The beam splitter G is used as a beam splitter 55a. One of the beam splitters H and U is used as a beam splitter 55b. One of the beam splitters I, S, T, and Y is used as a beam splitter 55c.

Light having a wavelength of 400 nm emitted from the semiconductor laser 5a strikes on the beam splitter 55a as S-polarized light, and almost all the light is reflected. The light is reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, and reflected by the mirror 201. The light enters the beam splitter 55a as P-polarized light, and almost all the light is transmitted. The light enters the beam splitter 55b as P-polarized light, and almost all the light is transmitted. The light enters the beam splitter 55c as the P-polarized light, and almost all the light is transmitted, and received by a photodetector 105a.

The light having a wavelength of 660 nm emitted from the semiconductor laser 5b strikes on the beam splitter 55b as the S-polarized light, and almost all the light is reflected. Almost all the light is transmitted through the beam splitter 55a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light polarization direction is orthogonal to that for the forward path from the circularly polarized light by the wavelength plate 202, and reflected by the mirror 201. Almost all the light is transmitted through the beam splitter 55a, enters the beam splitter 55b as the P-polarized light, is transmitted, enters the beam splitter 55c as the P-polarized light, and is transmitted and received by the photodetector 105a.

The light having a wavelength of 780 nm from the semiconductor laser 5c strikes on the beam splitter 55c as the S-polarized light. Almost all the light is reflected, transmitted through the beam splitter 55b, transmitted through the beam splitter 55a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is transmitted through the beam splitter 55a, transmitted through the beam splitter 55b, enters the beam splitter 55c as the P-polarized light, and is transmitted and received by the photodetector 105a.

In the present embodiment, the wavelengths of the semiconductor lasers 5a, 5b, and 5c may be set to 400 nm, 780 nm, and 660 nm. At this time, the beam splitter G is used as the beam splitter 55a. One of the beam splitters I and T is used as the beam splitter 55b. One of the beam splitters H, S, U, and Y is used as the beam splitter 55c.

In the present embodiment, the wavelengths of the semiconductor lasers 5a, 5b, and 5c may be set to 660 nm, 400 nm, and 780 nm, respectively. At this time, the beam splitter H is used as the beam splitter 55a. One of the beam splitters G and U is used as the beam splitter 55b. One of the beam splitters I, S, T, and Y is used as the beam splitter 55c.

In the present embodiment, the wavelengths of the semiconductor lasers 5a, 5b, and 5c may be set to 660 nm, 780 nm, and 400 nm, respectively. At this time, the beam splitter H is used as the beam splitter 55a. One of the beam splitters I and S is used as the beam splitter 55b. One of the beam splitters G, T, U, and Y is used as the beam splitter 55c.

In the present embodiment, the wavelengths of the semiconductor lasers 5a, 5b, and 5c may be set to 780 nm, 400 nm, and 660 nm, respectively. At this time, the beam splitter I is used as the beam splitter 55a. One of the beam splitters G and T is used as the beam splitter 55b. One of the beam splitters H, S, U, and Y is used as the beam splitter 55c.

In the present embodiment, the wavelengths of the semiconductor lasers 5a, 5b, and 5c may be set to 780 nm, 660 nm, 400 nm, respectively. At this time, the beam splitter I is used as the beam splitter 55a. One of the beam splitters H and S is used as the beam splitter 55b. One of the beam splitters G, T, U, and Y is used as the beam splitter 55c.

Furthermore, an embodiment in which one of the semiconductor lasers 5a, 5b, and 5c, and the photodetector 105a are replaced is possible.

In the embodiment in which the semiconductor laser 5c and the photodetector 105a are replaced, a half-wave plate for rotating the polarization direction of the light emitted from the semiconductor lasers 5a and 5b, reflected by the disk 204, and transmitted through the beam splitter 55b by 90° in such a manner that the light is reflected by the beam splitter 55c is inserted between the beam splitters 55b and 55c if necessary.

In the embodiment in which the semiconductor laser 5b and the photodetector 105a are replaced, a half-wave plate for rotating the polarization direction of the light emitted from the semiconductor laser 5a, reflected by the disk 204, and transmitted through the beam splitter 55a by 90° in such a manner that the light is reflected by the beam splitter 55b is inserted between the beam splitters 55a and 55b if necessary. A half-wave plate for rotating the polarization direction of the light emitted from the semiconductor laser 5c and reflected by the beam splitter 55c by 90° in such a manner that the light is transmitted through the beam splitter 55b is inserted between the beam splitters 55c and 55b if necessary.

In the embodiment in which the semiconductor laser 5a and the photodetector 105a are replaced, a half-wave plate for rotating the polarization direction of the light emitted from the semiconductor laser 5b and reflected by the beam splitter 55b by 90° in such a manner that the light is transmitted through the beam splitter 55a is inserted between the beam splitters 55b and 55a if necessary. A half-wave plate for rotating the polarization direction of the light emitted from the semiconductor laser 5c and reflected by the beam splitter 55c by 90° in such a manner that the light is transmitted through the beam splitter 55b is inserted between the beam splitters 55c and 55b if necessary. Since the semiconductor lasers 5a, 5b, and 5c are not integrated with the other light source or the photodetector in the fifth embodiment of the optical head apparatus of the present invention, the semiconductor lasers 5a, 5b, and 5c can be provided with high heat dissipation properties. Since the total number of the light sources and photodetector is four, the optical head apparatus can be miniaturized.

### (Sixth Embodiment)

FIG. 6 shows a sixth embodiment of the optical head apparatus of the present invention. Wavelengths of semiconductor lasers 6a, 6b, and 6c are 400 nm, 660 nm, and 780 nm, respectively. The beam splitter J is used as a beam splitter 56a. One of the beam splitters K and X is used as a beam splitter 56b. One of the beam splitters L, V, W, and Y is used as a beam splitter 56c.

Light having a wavelength of 400 nm emitted from the semiconductor laser 6a enters the beam splitter 56a as P-polarized light, and almost all the light is transmitted. The light is reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, and reflected by the mirror 201. The light strikes on the beam splitter 56a as S-polarized light, and almost all the light is reflected. The light strikes on the beam splitter 56b as the S-polarized light, and almost all the light is reflected. The light strikes on the beam splitter 56c as the S-polarized light, and almost all the light is reflected, and received by a photodetector 106a.

The light having a wavelength of 660 nm emitted from the semiconductor laser 6b enters the beam splitter 56b as the P-polarized light, and almost all the light is transmitted. Almost all the light is reflected by the beam splitter 56a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 56a, strikes on the beam splitter 56b as the S-polarized light, is reflected, strikes on the beam splitter 56c as the S-polarized light, and is reflected and received by the photodetector 106a.

The light having a wavelength of 780 nm from the semiconductor laser 6c strikes on the beam splitter 56c as the P-polarized light. Almost all the light is transmitted, reflected by the beam splitter 56b, reflected by the beam splitter 56a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is reflected by the beam splitter 56a, reflected by the beam splitter 56b, strikes on the beam splitter 56c as the S-polarized light, and is reflected and received by the photodetector 106a.

In the present embodiment, the wavelengths of the semiconductor lasers 6a, 6b, and 6c may be set to 400 nm, 780 nm, and 660 nm. At this time, the beam splitter J is used as the beam splitter 56a. One of the beam splitters L, W is used as the beam splitter 56b. One of the beam splitters K, V, X, and Y is used as the beam splitter 56c.

In the present embodiment, the wavelengths of the semiconductor lasers 6a, 6b, and 6c may be set to 660 nm, 400 nm, and 780 nm, respectively. At this time, the beam splitter K is used as the beam splitter 56a. One of the beam splitters J and X is used as the beam splitter 56b. One of the beam splitters L, V, W, and Y is used as the beam splitter 56c.

In the present embodiment, the wavelengths of the semiconductor lasers 6a, 6b, and 6c may be set to 660 nm, 780 nm, and 400 nm, respectively. At this time, the beam splitter K is used as the beam splitter 56a. One of the beam splitters L and V is used as the beam splitter 56b. One of the beam splitters J, W, X, and Y is used as the beam splitter 56c.

In the present embodiment, the wavelengths of the semiconductor lasers 6a, 6b, and 6c may be set to 780 nm, 400 nm, and 660 nm. At this time, the beam splitter L is used as the beam splitter 56a. One of the beam splitters J and W is used as the beam splitter 56b. One of the beam splitters K, V, X, and Y is used as the beam splitter 56c.

In the present embodiment, the wavelengths of the semiconductor lasers 6a, 6b, and 6c may be set to 780 nm, 660 nm, and 400 nm, respectively. At this time, the beam splitter L is used as the beam splitter 56a. One of the beam splitters K and V is used as the beam splitter 56b. One of the beam splitters J, W, X, and Y is used as the beam splitter 56c.

Furthermore, an embodiment in which one of the semiconductor lasers 6a, 6b, and 6c, and the photodetector 106a are replaced is possible.

In the embodiment in which the semiconductor laser 6c and the photodetector 106a are replaced, a half-wave plate for rotating the polarization direction of the light emitted from the semiconductor lasers 6a and 6b, reflected by the disk 204, and reflected by the beam splitter 56b by 90° in such a manner that the light is transmitted through the beam splitter 56c is inserted between the beam splitters 56b and 56c if necessary.

In the embodiment in which the semiconductor laser 6b and the photodetector 106a are replaced, a half-wave plate for rotating the polarization direction of the light emitted from the semiconductor laser 6a, reflected by the disk 204, and reflected by the beam splitter 56a by 90° in such a manner that the light is transmitted through the beam splitter 56b is inserted between the beam splitters 56a and 56b if necessary. A half-wave plate for rotating the polarization direction of the light emitted from the semiconductor laser 6c and transmitted through the beam splitter 56c by 90° in such a manner that the light is reflected by the beam splitter 56b is inserted between the beam splitters 56c and 56b if necessary.

In the embodiment in which the semiconductor laser 6a and the photodetector 106a are replaced, a half-wave plate for rotating the polarization direction of the light emitted from the semiconductor laser 6b and transmitted through the beam splitter 56b by 90° in such a manner that the light is reflected by the beam splitter 56a is inserted between the beam splitters 56b and 56a if necessary. A half-wave plate for rotating the polarization direction of the light emitted from the semiconductor laser 6c and transmitted through the beam splitter 56c by 90° in such a manner that the light is reflected by the beam splitter 56b is inserted between the beam splitters 56c and 56b if necessary.

Since the semiconductor lasers 6a, 6b, and 6c are not integrated with the other light source or the photodetector in the sixth embodiment of the optical head apparatus of the present invention, the semiconductor lasers 6a, 6b, and 6c can be provided with high heat dissipation properties. Since the total number of the light sources and photodetector is four, the optical head apparatus can be miniaturized.

### (Seventh Embodiment)

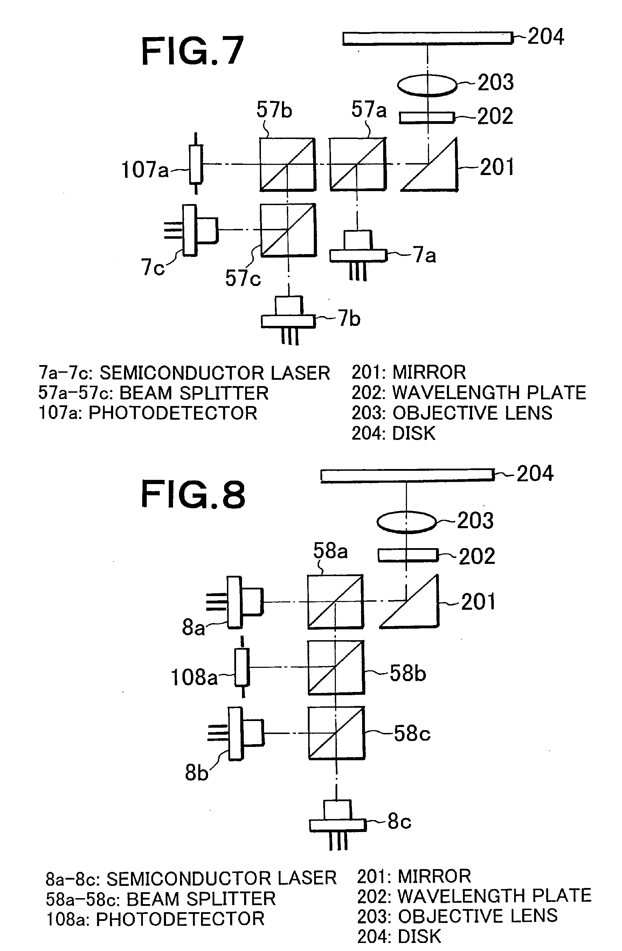

FIG. 7 shows a seventh embodiment of the optical head apparatus of the present invention. Wavelengths of semiconductor lasers 7a, 7b, and 7c are 400 nm, 660 nm, and 780 nm, respectively. The beam splitter G is used as a beam splitter 57a. One of the beam splitters S and Y is used as a beam splitter 57b. One of the beam splitters C, E, M, I, R, T, K, O, X, S, V, and Y is used as a beam splitter 57c.

Light having a wavelength of 400 nm emitted from the semiconductor laser 7a strikes on the beam splitter 57a as S-polarized light, and almost all the light is reflected. The light is reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, and reflected by the mirror 201. The light enters the beam splitter 57a as P-polarized light, and almost all the light is transmitted. The light enters the beam splitter 57b as the P-polarized light, and almost all the light is transmitted, and received by a photodetector 107a.

Almost all the light having a wavelength of 660 nm emitted from the semiconductor laser 7b is transmitted through the beam splitter 57c, and strikes on the beam splitter 57b as the S-polarized light. Almost all the light is reflected, transmitted through the beam splitter 57a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 57a, and enters the beam splitter 57b as the P-polarized light. Almost all the light is transmitted and received by the photodetector 107a.

When one of the beam splitters K, O, X, S, V, and Y is used as the beam splitter 57c, a half-wave plate for rotating the polarization direction of the light emitted from the semiconductor laser 7b and transmitted through the beam splitter 57c by 90° in such a manner that the light is reflected by the beam splitter 57b is inserted between the beam splitters 57c and 57b.

The light having a wavelength of 780 nm emitted from the semiconductor laser 7c strikes on the beam splitter 57c as the S-polarized light. Almost all the light is reflected. The light strikes on the beam splitter 57b as the S-polarized light. Almost all the light is reflected, transmitted through the beam splitter 57a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is transmitted through the beam splitter 57a. The light enters the beam splitter 57b as the P-polarized light. Almost all the light is transmitted and received by the photodetector 107a.

In the present embodiment, the wavelengths of the semiconductor lasers 7a, 7b, and 7c may be set to 400 nm, 780 nm, and 660 nm, respectively. At this time, the beam splitter G is used as the beam splitter 57a. One of the beam splitters S and Y is used as the beam splitter 57b. One of the beam splitters B, F, N, H, P, U, L, Q, W, S, V, and Y is used as the beam splitter 57c.

In the present embodiment, the wavelengths of the semiconductor lasers 7a, 7b, and 7c may be set to 660 nm, 400 nm, and 780 nm, respectively. At this time, the beam splitter H is used as the beam splitter 57a. One of the beam splitters T and Y is used as the beam splitter 57b. One of the beam splitters C, D, O, I, Q, S, J, M, X, T, W, and Y is used as the beam splitter 57c.

In the present embodiment, the wavelengths of the semiconductor lasers 7a, 7b, and 7c may be set to 660 nm, 780 nm, and 400 nm, respectively. At this time, the beam splitter H is used as the beam splitter 57a. One of the beam splitters T and Y is used as the beam splitter 57b. One of the beam splitters A, F, P, G, N, U, L, R, V, T, W, and Y is used as the beam splitter 57c.

In the present embodiment, the wavelengths of the semiconductor lasers 7a, 7b, and 7c may be set to 780 nm, 400 nm, and 660 nm, respectively. At this time, the beam splitter I is used as the beam splitter 57a. One of the beam splitters U and Y is used as the beam splitter 57b. One of the beam splitters B, D, Q, H, O, S, J, N, W, U, X, and Y is used as the beam splitter 57c.

In the present embodiment, the wavelengths of the semiconductor lasers 7a, 7b, and 7c may be set to 780 nm, 660 nm, and 400 nm, respectively. At this time, the beam splitter I is used as the beam splitter 57a. One of the beam splitters U and Y is used as the beam splitter 57b. One of the beam splitters A, E, R, G, M, T, K, P, V, U, X, and Y is used as the beam splitter 57c.

Furthermore, an embodiment in which one of the semiconductor lasers 7a, 7b, and 7c, and the photodetector 107a are replaced is possible.

In the embodiment in which the semiconductor laser 7c and the photodetector 107a are replaced, a half-wave plate for rotating the polarization direction of the light emitted from the semiconductor laser 7a, reflected by the disk 204, and transmitted through the beam splitter 57a by 90° in such a manner that the light is reflected by the beam splitter 57b is inserted between the beam splitters 57a and 57b if necessary.

In the embodiment in which the semiconductor laser 7b and the photodetector 107a are replaced, a half-wave plate for rotating the polarization direction of the light emitted from the semiconductor laser 7a, reflected by the disk 204, and transmitted through the beam splitter 57a by 90° in such a manner that the light is reflected by the beam splitter 57b is inserted between the beam splitters 57a and 57b if necessary. A half-wave plate for rotating the polarization direction of the light emitted from the semiconductor lasers 7a and 7b, reflected by the disk 204, and reflected by the beam splitter 57b by 90° in such a manner that the light is transmitted through the beam splitter 57c is inserted between the beam splitters 57b and 57c if necessary.

In the embodiment in which the semiconductor laser 7a and the photodetector 107a are replaced, a half-wave plate for rotating the polarization direction of the light emitted from the semiconductor laser 7b and transmitted through the beam splitter 57c by 90° in such a manner that the light is reflected by the beam splitter 57b is inserted between the beam splitters 57c and 57b if necessary. A half-wave plate for rotating the polarization direction of the light emitted from the semiconductor lasers 7b, 7c and reflected by the beam splitter 57b by 90° in such a manner that the light is transmitted through the beam splitter 57a is inserted between the beam splitters 57b and 57a if necessary.

Since the semiconductor lasers 7a, 7b, and 7c are not integrated with the other light source or the photodetector in the seventh embodiment of the optical head apparatus of the present invention, the semiconductor lasers 7a, 7b, and 7c can be provided with high heat dissipation properties. Since the total number of the light sources and photodetector is four, the optical head apparatus can be miniaturized.

### (Eighth Embodiment)

FIG. 8 shows an eighth embodiment of the optical head apparatus of the present invention. Wavelengths of semiconductor lasers 8a, 8b, and 8c are 400 nm, 660 nm, and 780 nm, respectively. The beam splitter J is used as a beam splitter 58a. One of the beam splitters V, Y is used as a beam splitter 58b. One of the beam splitters B, F, N, L, Q, W, H, P, U, S, V, and Y is used as a beam splitter 58c.

Light having a wavelength of 400 nm emitted from the semiconductor laser 8a enters the beam splitter 58a as P-polarized light, and almost all the light is transmitted. The light is reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, and reflected by the mirror 201. The light strikes on the beam splitter 58a as S-polarized light, and almost all the light is reflected. The light strikes on the beam splitter 58b as the S-polarized light, and almost all the light is reflected, and received by a photodetector 108a.

Almost all the light having a wavelength of 660 nm emitted from the semiconductor laser 8b is reflected by the beam splitter 58c, and enters the beam splitter 58b as the P-polarized light. Almost all the light is transmitted, reflected by the beam splitter 58a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 58a, and strikes on the beam splitter 58b as the S-polarized light. Almost all the light is reflected and received by the photodetector 108a.

When one of the beam splitters H, P, U, S, V, and Y is used as the beam splitter 58c, a half-wave plate for rotating the polarization direction of the light emitted from the semiconductor laser 8b and reflected by the beam splitter 58c by 90° in such a manner that the light is transmitted through the beam splitter 58b is inserted between the beam splitters 58c and 58b.

The light having a wavelength of 780 nm emitted from the semiconductor laser 8c enters the beam splitter 58c as the P-polarized light, and almost all the light is transmitted. The light enters the beam splitter 58b as the P-polarized light, and almost all the light is transmitted, reflected by the beam splitter 58a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is reflected by the beam splitter 58a. The light strikes on the beam splitter 58b as the S-polarized light, and almost all the light is reflected and received by the photodetector 108a.

In the present embodiment, the wavelengths of the semiconductor lasers 8a, 8b, and 8c may be set to 400 nm, 780 nm, and 660 nm, respectively. At this time, the beam splitter J is used as the beam splitter 58a. One of the beam splitters V and Y is used as the beam splitter 58b. One of the beam splitters C, E, M, K, O, X, I, R, T, S, V, and Y is used as the beam splitter 58c.

In the present embodiment, the wavelengths of the semiconductor lasers 8a, 8b, and 8c may be set to 660 nm, 400 nm, and 780 nm, respectively. At this time, the beam splitter K is used as the beam splitter 58a. One of the beam splitters W and Y is used as the beam splitter 58b. One of the beam splitters A, F, P, L, R, V, G, N, U, T, W, and Y is used as the beam splitter 58c.

In the present embodiment, the wavelengths of the semiconductor lasers 8a, 8b, and 8c may be set to 660 nm, 780 nm, and 400 nm, respectively. At this time, the beam splitter K is used as the beam splitter 58a. One of the beam splitters W and Y is used as the beam splitter 58b. One of the beam splitters C, D, O, J, M, X, I, Q, S, T, W, and Y is used as the beam splitter 58c.

In the present embodiment, the wavelengths of the semiconductor lasers 8a, 8b, and 8c may be set to 780 nm, 400 nm, and 660 nm, respectively. At this time, the beam splitter L is used as the beam splitter 58a. One of the beam splitters X and Y is used as the beam splitter 58b. One of the beam splitters A, E, R, K, P, V, G, M, T, U, X, and Y is used as the beam splitter 58c.

In the present embodiment, the wavelengths of the semiconductor lasers 8a, 8b, and 8c may be set to 780 nm, 660 nm, and 400 nm, respectively. At this time, the beam splitter L is used as the beam splitter 58a. One of the beam splitters X and Y is used as the beam splitter 58b. One of the beam splitters B, D, Q, J, N, W, H, O, S, U, X, and Y is used as the beam splitter 58c.

Furthermore, an embodiment in which one of the semiconductor lasers 8a, 8b, and 8c, and the photodetector 108a are replaced is possible.

In the embodiment in which the semiconductor laser 8c and the photodetector 108a are replaced, a half-wave plate for rotating the polarization direction of the light emitted from the semiconductor laser 8a, reflected by the disk 204, and reflected by the beam splitter 58a by 90° in such a manner that the light is transmitted through the beam splitter 58b is inserted between the beam splitters 58a and 58b if necessary.

In the embodiment in which the semiconductor laser 8b and the photodetector 108a are replaced, a half-wave plate for rotating the polarization direction of the light emitted from the semiconductor laser 8a, reflected by the disk 204, and reflected by the beam splitter 58a by 90° in such a manner that the light is transmitted through the beam splitter 58b is inserted between the beam splitters 58a and 58b if necessary. A half-wave plate for rotating the polarization direction of the light emitted from the semiconductor lasers 8a and 8b, reflected by the disk 204, and transmitted through the beam splitter 58b by 90° in such a manner that the light is reflected by the beam splitter 58c is inserted between the beam splitters 58b and 58c if necessary.

In the embodiment in which the semiconductor laser 8a and the photodetector 108a are replaced, a half-wave plate for rotating the polarization direction of the light emitted from the semiconductor laser 8b and reflected by the beam splitter 58c by 90° in such a manner that the light is transmitted through the beam splitter 58b is inserted between the beam splitters 58c and 58b if necessary. A half-wave plate for rotating the polarization direction of the light emitted from the semiconductor lasers 8b and 8c and transmitted through the beam splitter 58b by 90° in such a manner that the light is reflected by the beam splitter 58a is inserted between the beam splitters 58b and 58a if necessary.

Since the semiconductor lasers 8a, 8b, and 8c are not integrated with the other light source or the photodetector in the eighth embodiment of the optical head apparatus of the present invention, the semiconductor lasers 8a, 8b, and 8c can be provided with high heat dissipation properties. Since the total number of the light sources and photodetector is four, the optical head apparatus can be miniaturized.

### (Ninth Embodiment)

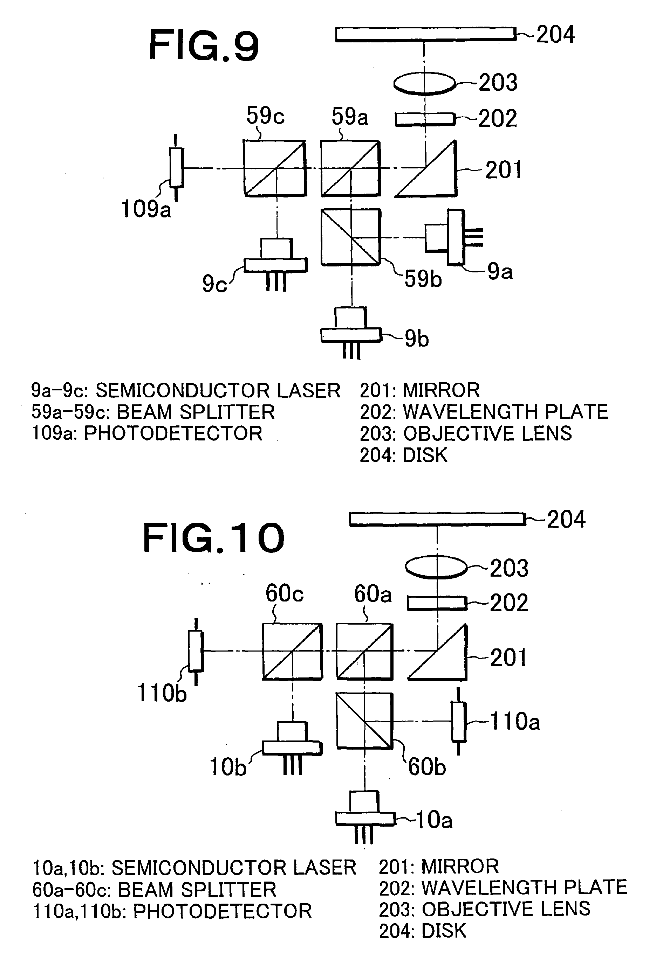

FIG. 9 shows a ninth embodiment of the optical head apparatus of the present invention. Wavelengths of semiconductor lasers 9a, 9b, and 9c are 400 nm, 660 nm, and 780 nm, respectively. The beam splitter U is used as a beam splitter 59a. One of the beam splitters A, E, R, G, M, T, K, P, V, U, X, and Y is used as a beam splitter 59b. One of the beam splitters I, S, T, and Y is used as a beam splitter 59c.

Light having a wavelength of 400 nm emitted from the semiconductor laser 9a strikes on the beam splitter 59b as S-polarized light, and almost all the light is reflected. The light strikes on the beam splitter 59a as S-polarized light, and almost all the light is reflected. The light is reflected by a mirror 201, converted into circularly polarized light from linearly polarized light by a wavelength plate 202, and condensed on a disk 204 of the next-generation standard by an objective lens 203. The reflected light from the disk 204 passes through the objective lens 203 in the reverse direction. The light is converted into linearly polarized light whose polarization direction is orthogonal to that for the forward path from circularly polarized light by the wavelength plate 202, and reflected by the mirror 201. The light enters the beam splitter 59a as P-polarized light, and almost all the light is transmitted. The light enters the beam splitter 59c as the P-polarized light, and almost all the light is transmitted, and received by a photodetector 109a.

Almost all the light having a wavelength of 660 nm emitted from the semiconductor laser 9b is transmitted through the beam splitter 59b. The light strikes on the beam splitter 59a as S-polarized light, and almost all the light is reflected. The light is reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. The light enters the beam splitter 59a as the P-polarized light, and almost all the light is transmitted. The light enters the beam splitter 59c as the P-polarized light, and almost all the light is transmitted and received by the photodetector 109a.

When one of the beam splitters K, P, V, U, X, and Y is used as the beam splitter 59b, a half-wave plate for rotating the polarization direction of the light emitted from the semiconductor laser 9b and transmitted through the beam splitter 59b by 90° in such a manner that the light is reflected by the beam splitter 59a is inserted between the beam splitters 59b and 59a.

The light having a wavelength of 780 nm emitted from the semiconductor laser 9c strikes on the beam splitter 59c as the S-polarized light, and almost all the light is reflected. Almost all the light is transmitted through the beam splitter 59a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction. The light is converted into the linearly polarized light whose polarization direction is orthogonal to that for the forward path from the circularly polarized light by the wavelength plate 202, and reflected by the mirror 201. Almost all the light is transmitted through the beam splitter 59a. The light enters the beam splitter 59c as the P-polarized light, and almost all the light is transmitted and received by the photodetector 109a.

In the present embodiment, the wavelengths of the semiconductor lasers 9a, 9b, and 9c may be set to 400 nm, 780 nm, and 660 nm, respectively. At this time, the beam splitter T is used as the beam splitter 59a. One of the beam splitters A, F, P, G, N, U, L, R, V, T, W, and Y is used as the beam splitter 59b. One of the beam splitters H, S, U, and Y is used as the beam splitter 59c.

In the present embodiment, the wavelengths of the semiconductor lasers 9a, 9b, and 9c may be set to 660 nm, 400 nm, and 780 nm, respectively. At this time, the beam splitter U is used as the beam splitter 59a. One of the beam splitters B, D, Q, H, O, S, J, N, W, U, X, and Y is used as the beam splitter 59b. One of the beam splitters I, S, T, and Y is used as the beam splitter 59c.

In the present embodiment, the wavelengths of the semiconductor lasers 9a, 9b, and 9c may be set to 660 nm, 780 nm, and 400 nm. At this time, the beam splitter S is used as the beam splitter 59a. One of the beam splitters B, F, N, H, P, U, L, Q, W, S, V, and Y is used as the beam splitter 59b. One of the beam splitters G, T, U, and Y is used as the beam splitter 59c.

In the present embodiment, the wavelengths of the semiconductor lasers 9a, 9b, and 9c may be set to 780 nm, 400 nm, and 660 nm, respectively. At this time, the beam splitter T is used as the beam splitter 59a. One of the beam splitters C, D, O, I, Q, S, J, M, X, T, W, and Y is used as the beam splitter 59b. One of the beam splitters H, S, U, and Y is used as the beam splitter 59c.

In the present embodiment, the wavelengths of the semiconductor lasers 9a, 9b, and 9c may be set to 780 nm, 660 nm, and 400 nm, respectively. At this time, the beam splitter S is used as the beam splitter 59a. One of the beam splitters C, E, M, I, R, T, K, O, X, S, V, and Y is used as the beam splitter 59b. One of the beam splitters G, T, U, and Y is used as the beam splitter 59c.

Furthermore, an embodiment in which one of the semiconductor lasers 9a, 9b, and 9c and the photodetector 109a are replaced is possible.

In the embodiment in which the semiconductor laser 9a and the photodetector 109a are replaced, a half-wave plate for rotating the polarization direction of the light emitted from the semiconductor laser 9c and reflected by the disk 59c by 90° in such a manner that the light is transmitted through the beam splitter 59a is inserted between the beam splitters 59c and 59a if necessary.

In the embodiment in which the semiconductor laser 9b and the photodetector 109a are replaced, a half-wave plate for rotating the polarization direction of the light emitted from the semiconductor laser 9c and reflected by the beam splitter 59c by 90° in such a manner that the light is transmitted through the beam splitter 59a is inserted between the beam splitters 59c and 59a if necessary. A half-wave plate for rotating the polarization direction of the light emitted from the semiconductor lasers 9b and 9c, and reflected by the disk 204 and the beam splitter 59a by 90° in such a manner that the light is transmitted through the beam splitter 59b is inserted between the beam splitters 59a and 59b if necessary.

In the embodiment in which the semiconductor laser 9c and the photodetector 109a are replaced, a half-wave plate for rotating the polarization direction of the light emitted from the semiconductor laser 9b and transmitted through the beam splitter 59b by 90° in such a manner that the light is reflected by the beam splitter 59a is inserted between the beam splitters 59b and 59a if necessary. A half-wave plate for rotating the polarization direction of the light emitted from the semiconductor lasers 9a and 9b, reflected by the disk 204, and transmitted through the beam splitter 59a by 90° in such a manner that the light is reflected by the beam splitter 59c is inserted between the beam splitters 59a and 59c if necessary.

Since the semiconductor lasers 9a, 9b, and 9c are not integrated with the other light source or the photodetector in the ninth embodiment of the optical head apparatus of the present invention, the semiconductor lasers 9a, 9b, and 9c can be provided with high heat dissipation properties. Since the total number of the light sources and photodetector is four, the optical head apparatus can be miniaturized.

### 5. Tenth Embodiment (Type 3)

A tenth embodiment of an optical head apparatus of the present invention is a configuration having two light sources and two photodetectors. Additionally, one of two light sources is a light source in which two light sources are integrated.

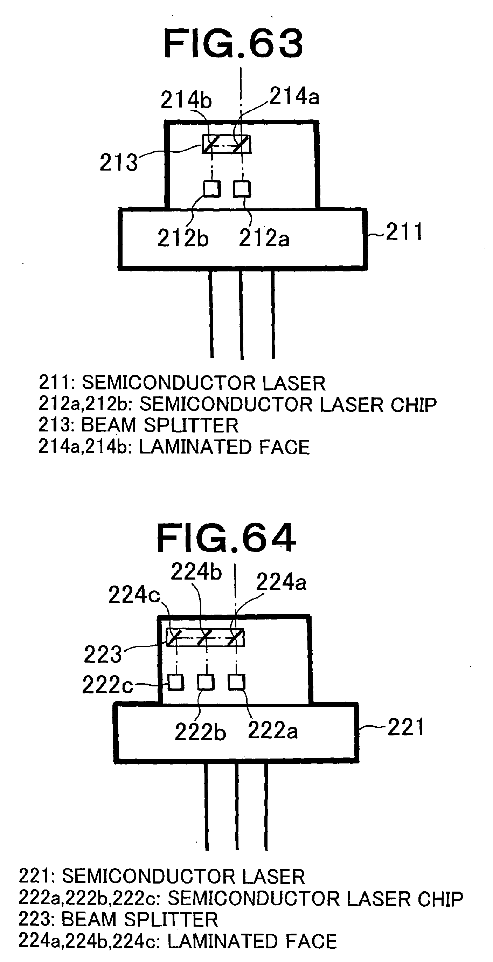

FIG. 10 shows the tenth embodiment of the optical head apparatus of the present invention. A semiconductor laser 10b has a constitution in which two semiconductor lasers are integrated, and the constitution will be described later with reference to FIG. 63. A wavelength of a semiconductor laser 10a is 400 nm, and wavelengths of the semiconductor laser 10b are 660 nm and 780 nm. The beam splitter A is used as a beam splitter 60a. One of the beam splitters G, J, M, N, T, U, W, X, and Y is used as a beam splitter 60b. One of the beam splitters S, V, and Y is used as a beam splitter 60c.

Light having a wavelength of 400 nm emitted from the semiconductor laser 10a enters the beam splitter 60b as P-polarized light, and almost all the light is transmitted. Almost all the light is reflected by the beam splitter 60a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 60a, and strikes on the beam splitter 60b as S-polarized light, and almost all the light is reflected, and received by a photodetector 110a.

The light having a wavelength of 660 nm or 780 nm emitted from the semiconductor laser 10b strikes on the beam splitter 60c as the S-polarized light, and almost all the light is reflected. Almost all the light is transmitted through the beam splitter 60a, reflected by the mirror 201, converted into circularly polarized light from linearly polarized light by the wavelength plate 202, and condensed onto the disk 204 of DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 60a, and enters the beam splitter 60c as P-polarized light. Almost all the light is transmitted, and received by a photodetector 110b.

In the present embodiment, the wavelength of the semiconductor laser 10a may be set to 660 nm, and the wavelengths of the semiconductor laser 10b may be set to 400 nm and 780 nm. At this time, the beam splitter B is used as the beam splitter 60a. One of the beam splitters H, K, O, P, S, U, V, X, and Y is used as the beam splitter 60b. One of the beam splitters T, W, and Y is used as the beam splitter 60c.

In the present embodiment, the wavelength of the semiconductor laser 10a may be set to 780 nm, and the wavelengths of the semiconductor laser 10b may be set to 400 nm and 660 nm. At this time, the beam splitter C is used as the beam splitter 60a. One of the beam splitters I, L, Q, R, S, T, V, W, and Y is used as the beam splitter 60b. One of the beam splitters U, X, and Y is used as the beam splitter 60c.

Furthermore, an embodiment in which the semiconductor laser 10a and the photodetector 110a are replaced is possible. An embodiment in which the semiconductor laser 10b and the photodetector 110b are replaced is also possible.

Since the semiconductor laser 10a is not integrated with the other light source or the photodetector in the tenth embodiment of the optical head apparatus of the present invention, the semiconductor laser 10a can be provided with a high heat dissipation property. Since the total number of the light sources and the photodetectors is four, the optical head apparatus can be miniaturized. Furthermore, the photodetector 110a can be designed in such a manner that sensitivity or the like with respect to the wavelength of the semiconductor laser 10a is optimized, and the photodetector 110b can be designed in such a manner that sensitivity or the like with respect to the wavelengths of the semiconductor laser 10b is optimized.

### 6. 11th and 12th Embodiments (Type 4)

Each of eleventh and twelfth embodiments of an optical head apparatus of the present invention is a configuration having two light sources and one photodetector. Additionally, in one of two light sources, two light sources are integrated.

### (11th Embodiment)

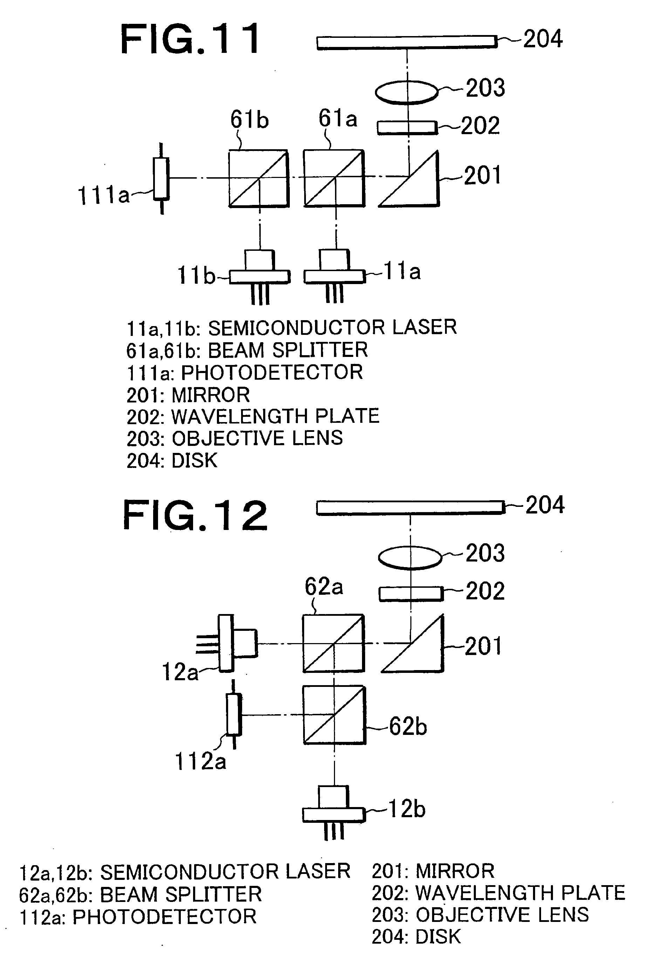

FIG. 11 shows an eleventh embodiment of an optical head apparatus of the present invention. A semiconductor laser 11b has a constitution in which two semiconductor lasers are integrated, and the constitution will be described later with reference to FIG. 63. A wavelength of a semiconductor laser 11a is 400 nm, and wavelengths of the semiconductor laser 11b are 660 nm and 780 nm. The beam splitter G is used as a beam splitter 61a. One of the beam splitters S and Y is used as a beam splitter 61b.

Light having a wavelength of 400 nm emitted from the semiconductor laser 11a strikes on the beam splitter 61a as S-polarized light, and almost all the light is reflected. The light is reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. The light enters the beam splitter 61a as P-polarized light, and almost all the light is transmitted. The light enters the beam splitter 61b as the P-polarized light, and almost all the light is transmitted, and received by a photodetector 111a.

The light having a wavelength of 660 nm or 780 nm emitted from the semiconductor laser 11b strikes on the beam splitter 61b as the S-polarized light, and almost all the light is reflected. Almost all the light is transmitted through the beam splitter 61a, reflected by the mirror 201, converted into circularly polarized light from linearly polarized light by the wavelength plate 202, and condensed onto the disk 204 of DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 61a, and enters the beam splitter 61b as the P-polarized light. Almost all the light is transmitted, and received by the photodetector 111a.

In the present embodiment, the wavelength of the semiconductor laser 11a may be set to 660 nm, and the wavelengths of the semiconductor laser 11b may be set to 400 nm and 780 nm. At this time, the beam splitter H is used as the beam splitter 61a. One of the beam splitters T and Y is used as the beam splitter 61b.

In the present embodiment, the wavelength of the semiconductor laser 11a may be set to 780 nm, and the wavelengths of the semiconductor laser 11b may be set to 400 nm and 660 nm. At this time, the beam splitter I is used as the beam splitter 61a. One of the beam splitters U and Y is used as the beam splitter 61b.

Furthermore, an embodiment in which one of the semiconductor lasers 11a and 11b, and the photodetector 111a are replaced is possible.

In the embodiment in which the semiconductor laser 11b and the photodetector 111a are replaced, a half-wave plate for rotating the polarization direction of the light emitted from the semiconductor laser 11a, reflected by the disk 204, and transmitted through the beam splitter 61a by 90° in such a manner that the light is reflected by the beam splitter 61b is inserted between the beam splitters 61a and 61b if necessary.

In the embodiment in which the semiconductor laser 11a and the photodetector 111a are replaced, a half-wave plate for rotating the polarization direction of the light emitted from the semiconductor laser 11b and reflected by the beam splitter 61b by 90° in such a manner that the light is transmitted through the beam splitter 61a is inserted between the beam splitters 61b and 61a if necessary.

In the present embodiment, in the semiconductor laser 11a, two semiconductor lasers may be integrated, the wavelengths of the semiconductor laser 11a may be set to 660 nm and 780 nm, and the wavelength of the semiconductor laser 11b may be set to 400 nm. At this time, the beam splitter S is used as the beam splitter 61a. One of the beam splitters G, T, U, and Y is used as the beam splitter 61b.

In the present embodiment, the semiconductor laser 11a may have a constitution in which two semiconductor lasers are integrated, the wavelengths of the semiconductor laser 11a may be set to 400 nm and 780 nm, and the wavelength of the semiconductor laser 11b may be set to 660 nm. At this time, the beam splitter T is used as the beam splitter 61a. One of the beam splitters H, S, U, and Y is used as the beam splitter 61b.

In the present embodiment, the semiconductor laser 11a may have a constitution in which two semiconductor lasers are integrated, the wavelengths of the semiconductor laser 11a may be set to 400nm and 660 nm, and the wavelength of the semiconductor laser 11b may be set to 780 nm. At this time, the beam splitter U is used as the beam splitter 61a. One of the beam splitters I, S, T, and Y is used as the beam splitter 61b.

Furthermore, an embodiment in which the semiconductor laser 11a includes two integrated semiconductor lasers, and one of the semiconductor lasers 11a and 11b, and the photodetector 111a are replaced is possible.

In the embodiment in which the semiconductor laser 11b and the photodetector 111a are replaced, a half-wave plate for rotating the polarization direction of the light emitted from the semiconductor laser 11a, reflected by the disk 204, and transmitted through the beam splitter 61a by 90° in such a manner that the light is reflected by the beam splitter 61b is inserted between the beam splitters 61a and 61b if necessary.

In the embodiment in which the semiconductor laser 11a and the photodetector 111a are replaced, a half-wave plate for rotating the polarization direction of the light emitted from the semiconductor laser 11b and reflected by the beam splitter 61b by 90° in such a manner that the light is transmitted through the beam splitter 61a is inserted between the beam splitters 61b and 61a if necessary.

Since the semiconductor laser 11a is not integrated with the other light source or the photodetector in the eleventh embodiment of the optical head apparatus of the present invention, the semiconductor laser 11a can be provided with a high heat dissipation property. Since the total number of the light sources and the photodetector is three, the optical head apparatus can be miniaturized.

### (12th Embodiment)

FIG. 12 shows a twelfth embodiment of an optical head apparatus of the present invention. A semiconductor laser 12b has a constitution in which two semiconductor lasers are integrated, and the constitution will be described later with reference to FIG. 63. A wavelength of a semiconductor laser 12a is 400 nm, and wavelengths of the semiconductor laser 12b are 660 nm and 780 nm. The beam splitter J is used as a beam splitter 62a. One of the beam splitters V and Y is used as a beam splitter 62b.

Light having a wavelength of 400 nm emitted from the semiconductor laser 12a enters the beam splitter 62a as P-polarized light, and almost all the light is transmitted. The light is reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. The light strikes on the beam splitter 62a as S-polarized light, and almost all the light is reflected. The light strikes on the beam splitter 62b as the S-polarized light, and almost all the light is reflected, and received by a photodetector 112a.

The light having a wavelength of 660 nm or 780 nm emitted from the semiconductor laser 12b enters the beam splitter 62b as the P-polarized light, and almost all the light is transmitted. Almost all the light is reflected by the beam splitter 62a, reflected by the mirror 201, converted into circularly polarized light from linearly polarized light by the wavelength plate 202, and condensed onto the disk 204 of DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 62a. The light strikes on the beam splitter 62b as the S-polarized light, and almost all the light is reflected, and received by the photodetector 112a.

In the present embodiment, the wavelength of the semiconductor laser 12a may be set to 660 nm, and the wavelengths of the semiconductor laser 12b may be set to 400 nm and 780 nm. At this time, the beam splitter K is used as the beam splitter 62a. One of the beam splitters W and Y is used as the beam splitter 62b.

In the present embodiment, the wavelength of the semiconductor laser 12a may be set to 780 nm, and the wavelengths of the semiconductor laser 12b may be set to 400 nm and 660 nm. At this time, the beam splitter L is used as the beam splitter 62a. One of the beam splitters X and Y is used as the beam splitter 62b.

Furthermore, an embodiment in which one of the semiconductor lasers 12a and 12b, and the photodetector 112a are replaced is possible.

In the embodiment in which the semiconductor laser 12b and the photodetector 112a are replaced, a half-wave plate for rotating the polarization direction of the light emitted from the semiconductor laser 12a, reflected by the disk 204, and reflected by the beam splitter 62a by 90° in such a manner that the light is transmitted through the beam splitter 62b is inserted between the beam splitters 62a and 62b if necessary.

In the embodiment in which the semiconductor laser 12a and the photodetector 112a are replaced, a half-wave plate for rotating the polarization direction of the light emitted from the semiconductor laser 12b and transmitted through the beam splitter 62b by 90° in such a manner that the light is reflected by the beam splitter 62a is inserted between the beam splitters 62b and 62a if necessary.

In the present embodiment, the semiconductor laser 12a may include two integrated semiconductor lasers, the wavelengths of the semiconductor laser 12a may be set to 660 nm and 780 nm, and the wavelength of the semiconductor laser 12b may be set to 400 nm. At this time, the beam splitter V is used as the beam splitter 62a. One of the beam splitters J, W, X, and Y is used as the beam splitter 62b.

In the present embodiment, the semiconductor laser 12a may have a constitution in which two semiconductor lasers are integrated, the wavelengths of the semiconductor laser 12a may be set to 400 nm and 780 nm, and the wavelength of the semiconductor laser 12b may be set to 660 nm. At this time, the beam splitter W is used as the beam splitter 62a. One of the beam splitters K, V, X, and Y is used as the beam splitter 62b.

In the present embodiment, the semiconductor laser 12a may have a constitution in which two semiconductor lasers are integrated, the wavelengths of the semiconductor laser 12a may be set to 400 nm and 660 nm, and the wavelength of the semiconductor laser 12b may be set to 780 nm. At this time, the beam splitter X is used as the beam splitter 62a. One of the beam splitters L, V, W, and Y is used as the beam splitter 62b.

Furthermore, an embodiment in which the semiconductor laser 12a is constituted of two integrated semiconductor lasers, and one of the semiconductor lasers 12a and 12b, and the photodetector 112a are replaced is possible.

In the embodiment in which the semiconductor laser 12b and the photodetector 112a are replaced, a half-wave plate for rotating the polarization direction of the light emitted from the semiconductor laser 12a, reflected by the disk 204, and reflected by the beam splitter 62a by 90° in such a manner that the light is transmitted through the beam splitter 62b is inserted between the beam splitters 62a and 62b if necessary.

In the embodiment in which the semiconductor laser 12a and the photodetector 112a are replaced, a half-wave plate for rotating the polarization direction of the light emitted from the semiconductor laser 12b and transmitted through the beam splitter 62b by 90° in such a manner that the light is reflected by the beam splitter 62a is inserted between the beam splitters 62b and 62a if necessary.

Since the semiconductor laser 12a is not integrated with the other light source or the photodetector in the twelfth embodiment of the optical head apparatus of the present invention, the semiconductor laser 12a can be provided with a high heat dissipation property. Since the total number of the light sources and the photodetector is three, the optical head apparatus can be miniaturized.

### 7. 13th Embodiment (Type 5)

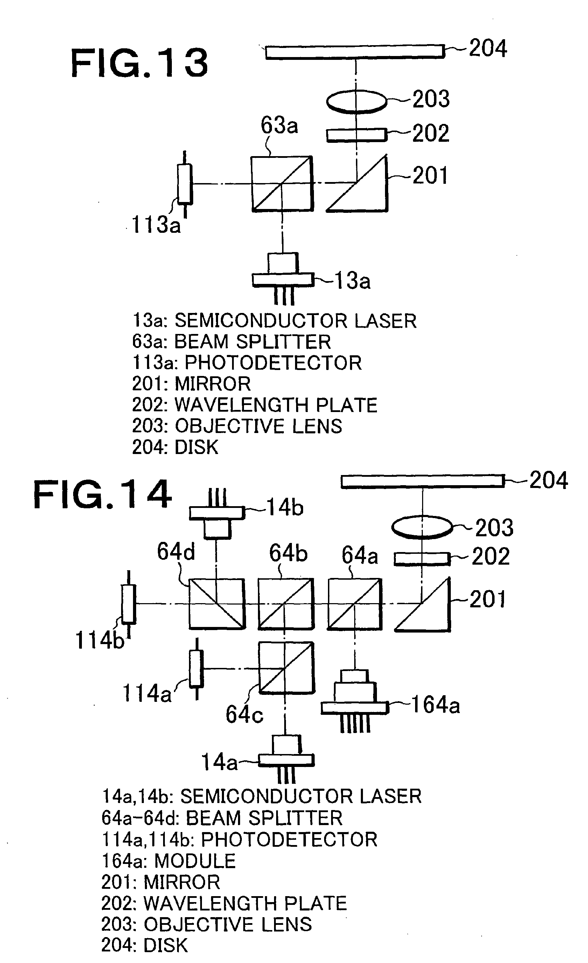

FIG. 13 shows a thirteenth embodiment of an optical head apparatus of the present invention. A semiconductor laser 13a has a constitution in which three semiconductor lasers are integrated, and the constitution will be described later with reference to FIG. 64. Wavelengths of a semiconductor laser 13a are 400 nm, 660 nm, and 780 nm. The beam splitter Y is used as a beam splitter 63a.

Light having a wavelength of 400 nm, 660 nm, or 780 nm emitted from the semiconductor laser 13a strikes on the beam splitter 63a as S-polarized light, and almost all the light is reflected. The light is reflected by a mirror 201, converted into circularly polarized light from linearly polarized light by a wavelength plate 202, and condensed onto a disk 204 of the next-generation, DVD, or CD standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. The light enters the beam splitter 63a as P-polarized light, and almost all the light is transmitted, and received by a photodetector 113a.

Since the total number of the light source and the photodetector is two in the thirteenth embodiment of the optical head apparatus of the present invention, the optical head apparatus can be miniaturized.

### 8. 14th to 19th Embodiments (Type 6)

Each of fourteenth to nineteenth embodiments of an optical head apparatus of the present invention is a configuration having two light sources, two photodetectors, and one module. Additionally, in one module, one light source and one photodetector are integrated.

### (14th Embodiment)

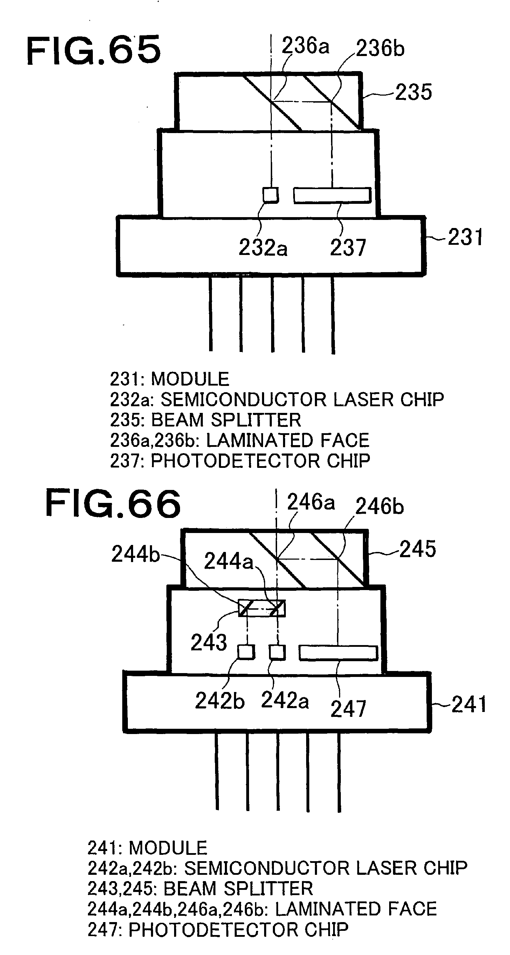

FIG. 14 shows a fourteenth embodiment of an optical head apparatus of the present invention. A module 164a has a constitution in which one semiconductor laser and one photodetector are integrated, and the constitution will be described later with reference to FIG. 65. A wavelength of the semiconductor laser in the module 164a is 400 nm, and wavelengths of the semiconductor lasers 14a and 14b are 660 nm and 780 nm, respectively. The beam splitter A is used as a beam splitter 64a. One of the beam splitters B, F, and N is used as a beam splitter 64b. One of the beam splitters H, K, O, P, S, U, V, X, and Y is used as a beam splitter 64c. One of the beam splitters I, L, Q, R, S, T, V, W, and Y is used as a beam splitter 64d.

Almost all light having a wavelength of 400 nm emitted from the semiconductor laser in the module 164a is reflected by the beam splitter 64a. The light is reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 64a, and received by the photodetector in the module 164a.

The light having a wavelength of 660 nm emitted from the semiconductor laser 14a enters the beam splitter 64c as the P-polarized light, and almost all the light is transmitted. Almost all the light is reflected by the beam splitter 64b, transmitted through the beam splitter 64a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light polarization direction is orthogonal to that for the forward path from the circularly polarized light by the wavelength plate 202, and reflected by the mirror 201. Almost all the light is transmitted through the beam splitter 64a, and reflected by the beam splitter 64b. The light strikes on the beam splitter 64c as S-polarized light, and almost all the light is reflected, and received by a photodetector 114a.

The light having a wavelength of 780 nm emitted from the semiconductor laser 14b strikes on the beam splitter 64d as the S-polarized light, and almost all the light is reflected. Almost all the light is transmitted through the beam splitter 64b, transmitted through the beam splitter 64a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 64a, and transmitted through the beam splitter 64b. The light enters the beam splitter 64d as P-polarized light, and almost all the light is transmitted, and received by a photodetector 114b.

In the present embodiment, the wavelength of the semiconductor laser in the module 164a may be set to 400 nm, and the wavelengths of the semiconductor lasers 14a and 14b may be set to 780 nm and 660 nm. At this time, the beam splitter A is used as the beam splitter 64a. One of the beam splitters C, E, M is used as the beam splitter 64b. One of the beam splitters I, L, Q, R, S, T, V, W, and Y is used as the beam splitter 64c. One of the beam splitters H, K, O, P, S, U, V, X, and Y is used as the beam splitter 64d.

In the present embodiment, the wavelength of the semiconductor laser in the module 164a may be set to 660 nm, and the wavelengths of the semiconductor lasers 14a and 14b may be set to 400 nm and 780 nm, respectively. At this time, the beam splitter B is used as the beam splitter 64a. One of the beam splitters A, F, and P is used as the beam splitter 64b. One of the beam splitters G, J, M, N, T, U, W, X, and Y is used as the beam splitter 64c. One of the beam splitters I, L, Q, R, S, T, V, W, and Y is used as the beam splitter 64d.

In the present embodiment, the wavelength of the semiconductor laser in the module 164a may be set to 660 nm, and the wavelengths of the semiconductor lasers 14a and 14b may be set to 780 nm and 400 nm, respectively. The beam splitter B is used as the beam splitter 64a. One of the beam splitters C, D, and O is used as the beam splitter 64b. One of the beam splitters I, L, Q, R, S, T, V, W, and Y is used as the beam splitter 64c. One of the beam splitters G, J, M, N, T, U, W, X, and Y is used as the beam splitter 64d.

In the present embodiment, the wavelength of the semiconductor laser in the module 164a may be set to 780 nm, and the wavelengths of the semiconductor lasers 14a and 14b may be set to 400 nm and 660 nm. At this time, the beam splitter C is used as the beam splitter 64a. One of the beam splitters A, E, and R is used as the beam splitter 64b. One of the beam splitters G, J, M, N, T, U, W, X, and Y is used as the beam splitter 64c. One of the beam splitters H, K, O, P, S, U, V, X, and Y is used as the beam splitter 64d.

In the present embodiment, the wavelength of the semiconductor laser in the module 164a may be set to 780 nm, and the wavelengths of the semiconductor lasers 14a and 14b may be set to 660 nm and 400 nm, respectively. At this time, the beam splitter C is used as the beam splitter 64a. One of the beam splitters B, D, and Q is used as the beam splitter 64b. One of the beam splitters H, K, O, P, S, U, V, X, and Y is used as the beam splitter 64c. One of the beam splitters G, J, M, N, T, U, W, X, and Y is used as the beam splitter 64d.

Furthermore, an embodiment in which the semiconductor laser 14a and the photodetector 114a are replaced is possible. An embodiment in which the semiconductor laser 14b and the photodetector 114b are replaced is also possible.

Since the semiconductor lasers 14a and 14b are not integrated with the other light source or the photodetector in the fourteenth embodiment of the optical head apparatus of the present invention, the semiconductor lasers 14a and 14b can be provided with high heat dissipation properties. Since the total number of the module, light sources, and photodetectors is five, the optical head apparatus can be miniaturized. Furthermore, the photodetector in the module 164a can be designed in such a manner that sensitivity or the like with respect to the wavelength of the semiconductor laser in the module 164a is optimized, and the photodetectors 114a and 114b can be designed in such a manner that sensitivities or the like with respect to the wavelengths of the semiconductor lasers 14a and 14b are optimized.

### (15th Embodiment)

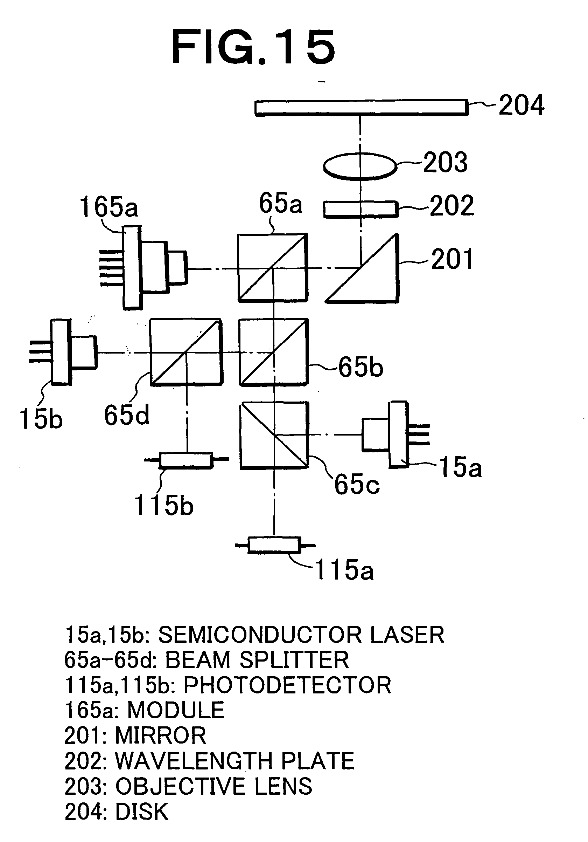

FIG. 15 shows a fifteenth embodiment of an optical head apparatus of the present invention. A module 165a has a constitution in which one semiconductor laser and one photodetector are integrated, and the constitution will be described later with reference to FIG. 65. A wavelength of the semiconductor laser in the module 165a is 400 nm, and wavelengths of the semiconductor lasers 15a and 15b are 660 nm and 780 nm, respectively. The beam splitter D is used as a beam splitter 65a. One of the beam splitters C, E, and M is used as a beam splitter 65b. One of the beam splitters H, K, O, P, S, U, V, X, and Y is used as a beam splitter 65c. One of the beam splitters I, L, Q, R, S, T, V, W, and Y is used as a beam splitter 65d.

Almost all light having a wavelength of 400 nm emitted from the semiconductor laser in the module 165a is transmitted through the beam splitter 65a. The light is reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitter 65a, and received by the photodetector in the module 165a.

The light having a wavelength of 660 nm emitted from the semiconductor laser 15a strikes on the beam splitter 65c as the S-polarized light, and almost all the light is reflected. Almost all the light is transmitted through the beam splitter 65b, reflected by the beam splitter 65a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 65a, and transmitted through the beam splitter 65b. The light enters the beam splitter 65c as P-polarized light, and almost all the light is transmitted, and received by a photodetector 115a.

The light having a wavelength of 780 nm emitted from the semiconductor laser 15b enters the beam splitter 65d as the P-polarized light, and almost all the light is transmitted. Almost all the light is reflected by the beam splitter 65b, reflected by the beam splitter 65a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 65a, and reflected by the beam splitter 65b. The light strikes on the beam splitter 65d as the S-polarized light, and almost all the light is reflected, and received by a photodetector 115b.

In the present embodiment, the wavelength of the semiconductor laser in the module 165a may be set to 400 nm, and the wavelengths of the semiconductor lasers 15a and 15b may be set to 780 nm and 660 nm, respectively. At this time, the beam splitter D is used as the beam splitter 65a. One of the beam splitters B, F, and N is used as the beam splitter 65b. One of the beam splitters I, L, Q, R, S, T, V, W, and Y is used as the beam splitter 65c. One of the beam splitters H, K, O, P, S, U, V, X, and Y is used as the beam splitter 65d.

In the present embodiment, the wavelength of the semiconductor laser in the module 165a may be set to 660 nm, and the wavelengths of the semiconductor lasers 15a and 15b may be set to 400 nm and 780 nm, respectively. At this time, the beam splitter E is used as the beam splitter 65a. One of the beam splitters C, D, and O is used as the beam splitter 65b. One of the beam splitters G, J, M, N, T, U, W, X, and Y is used as the beam splitter 65c. One of the beam splitters I, L, Q, R, S, T, V, W, and Y is used as the beam splitter 65d.

In the present embodiment, the wavelength of the semiconductor laser in the module 165a may be set to 660 nm, and the wavelengths of the semiconductor lasers 15a and 15b may be set to 780 nm and 400 nm. The beam splitter E is used as the beam splitter 65a. One of the beam splitters A, F, and P is used as the beam splitter 65b. One of the beam splitters I, L, Q, R, S, T, V, W, and Y is used as the beam splitter 65c. One of the beam splitters G, J, M, N, T, U, W, X, and Y is used as the beam splitter 65d.

In the present embodiment, the wavelength of the semiconductor laser in the module 165a may be set to 780 nm, and the wavelengths of the semiconductor lasers 15a and 15b may be set to 400 nm and 660 nm. At this time, the beam splitter F is used as the beam splitter 65a. One of the beam splitters B, D, and Q is used as the beam splitter 65b. One of the beam splitters G, J, M, N, T, U, W, X, and Y is used as the beam splitter 65c. One of the beam splitters H, K, O, P, S, U, V, X, and Y is used as the beam splitter 65d.

In the present embodiment, the wavelength of the semiconductor laser in the module 165a may be set to 780 nm, and the wavelengths of the semiconductor lasers 15a and 15b may be set to 660 nm and 400 nm. At this time, the beam splitter F is used as the beam splitter 65a. One of the beam splitters A, E, and R is used as the beam splitter 65b. One of the beam splitters H, K, O, P, S, U, V, X, and Y is used as the beam splitter 65c. One of the beam splitters G, J, M, N, T, U, W, X, and Y is used as the beam splitter 65d.

Furthermore, an embodiment in which the semiconductor laser 15a and the photodetector 115a are replaced is possible. An embodiment in which the semiconductor laser 15b and the photodetector 115b are replaced is also possible.

Since the semiconductor lasers 15a and 15b are not integrated with the other light source or the photodetector in the fifteenth embodiment of the optical head apparatus of the present invention, the semiconductor lasers 15a and 15b can be provided with high heat dissipation properties. Since the total number of the module, light sources, and photodetectors is five, the optical head apparatus can be miniaturized. Furthermore, the photodetector in the module 165a can be designed in such a manner that sensitivity or the like with respect to the wavelength of the semiconductor laser in the module 165a is optimized, and the photodetectors 115a and 115b can be designed in such a manner that sensitivities or the like with respect to the wavelengths of the semiconductor lasers 15a and 15b are optimized.

### (16th Embodiment)

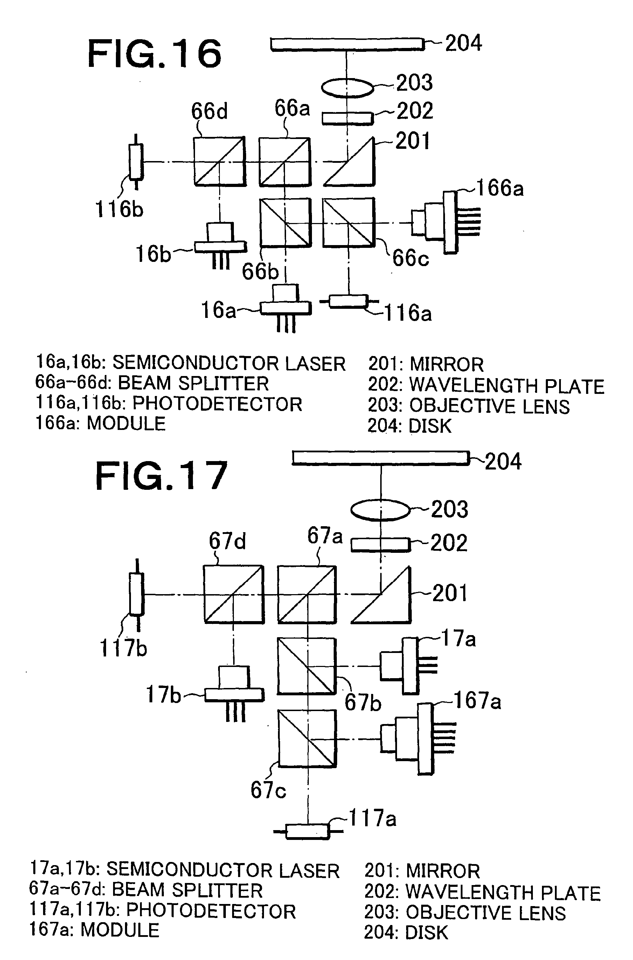

FIG. 16 shows a sixteenth embodiment of an optical head apparatus of the present invention. A module 166a has a constitution in which one semiconductor laser and one photodetector are integrated, and the constitution will be described later with reference to FIG. 65. A wavelength of the semiconductor laser in the module 166a is 780 nm, and wavelengths of the semiconductor lasers 16a and 16b are 660 nm and 400 nm, respectively. The beam splitter D is used as a beam splitter 66a. One of the beam splitters K, O, and X is used as a beam splitter 66b. One of the beam splitters B, F, N, H, P, and U is used as a beam splitter 66c. One of the beam splitters G, J, M, N, T, U, W, X, and Y is used as a beam splitter 66d.

Light having a wavelength of 400 nm emitted from the semiconductor laser 16b strikes on the beam splitter 66d as S-polarized light, and almost all the light is reflected. Almost all the light is transmitted through the beam splitter 66a. The light is reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted though the beam splitter 66a. The light enters the beam splitter 66d as the P-polarized light, and almost all the light is transmitted, and received by a photodetector 116b.

The light having a wavelength of 660 nm emitted from the semiconductor laser 16a enters the beam splitter 66b as the P-polarized light, and almost all the light is transmitted. Almost all the light is reflected by the beam splitter 66a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 66a. The light strikes on the beam splitter 66b as S-polarized light, and almost all the light is reflected. The light strikes on the beam splitter 66c as the S-polarized light, and almost all the light is reflected, and received by a photodetector 116a.

Almost all the light having a wavelength of 780 nm emitted from the semiconductor laser in the module 166a is transmitted through the beam splitter 66c. Almost all the light is reflected by the beam splitter 66b, reflected by the beam splitter 66a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 66a, reflected by the beam splitter 66b, transmitted through the beam splitter 66c, and received by the photodetector in the module 166a.

In the present embodiment, the wavelength of the semiconductor laser in the module 166a may be set to 660 nm, and the wavelengths of the semiconductor lasers 16a and 16b may be set to 780 nm and 400 nm. At this time, the beam splitter D is used as the beam splitter 66a. One of the beam splitters L, Q, and W is used as the beam splitter 66b. One of the beam splitters C, E, M, I, R, and T is used as the beam splitter 66c. One of the beam splitters G, J, M, N, T, U, W, X, and Y is used as the beam splitter 66d.

In the present embodiment, the wavelength of the semiconductor laser in the module 166a may be set to 780 nm, and the wavelengths of the semiconductor lasers 16a and 16b may be set to 400 nm and 660 nm. At this time, the beam splitter E is used as the beam splitter 66a. One of the beam splitters J, M, and X is used as the beam splitter 66b. One of the beam splitters A, F, P, G, N, and U is used as the beam splitter 66c. One of the beam splitters H, K, O, P, S, U, V, X, and Y is used as the beam splitter 66d.

In the present embodiment, the wavelength of the semiconductor laser in the module 166a may be set to 400 nm, and the wavelengths of the semiconductor lasers 16a and 16b may be set to 780 nm and 660 nm. The beam splitter E is used as the beam splitter 66a. One of the beam splitters L, R, and V is used as the beam splitter 66b. One of the beam splitters C, D, O, I, Q, and S is used as the beam splitter 66c. One of the beam splitters H, K, O, P, S, U, V, X, and Y is used as the beam splitter 66d.

In the present embodiment, the wavelength of the semiconductor laser in the module 166a may be set to 660 nm, and the wavelengths of the semiconductor lasers 16a and 16b may be set to 400 nm and 780 nm, respectively. At this time, the beam splitter F is used as the beam splitter 66a. One of the beam splitters J, N, and W is used as the beam splitter 66b. One of the beam splitters A, E, R, G, M, and T is used as the beam splitter 66c. One of the beam splitters I, L, Q, R, S, T, V, W, and Y is used as the beam splitter 66d.

In the present embodiment, the wavelength of the semiconductor laser in the module 166a may be set to 400 nm, and the wavelengths of the semiconductor lasers 16a and 16b may be set to 660 nm and 780 nm. At this time, the beam splitter F is used as the beam splitter 66a. One of the beam splitters K, P, and V is used as the beam splitter 66b. One of the beam splitters B, D, Q, H, O, and S is used as the beam splitter 66c. One of the beam splitters I, L, Q, R, S, T, V, W, and Y is used as the beam splitter 66d.

Furthermore, an embodiment in which the semiconductor laser 16b and the photodetector 116b are replaced is possible. An embodiment in which the module 166a, semiconductor laser 16a, and the photodetector 116a are mutually replaced is also possible.

In an embodiment in which the module 166a, semiconductor laser 16a, and photodetector 116a are replaced with the photodetector 116a, semiconductor laser 16a, and module 166a, a half-wave plate for rotating the polarization direction of the light emitted from the semiconductor laser 16a, reflected by the disk 204, and reflected by the beam splitter 66b by 90° in such a manner that the light is transmitted through the beam splitter 66c is inserted between the beam splitters 66b and 66c if necessary.

In an embodiment in which the module 166a, semiconductor laser 16a, and photodetector 116a are replaced with the semiconductor laser 16a, photodetector 116a, and module 166a, a half-wave plate for rotating the polarization direction of the light emitted from the semiconductor laser 16a and transmitted through the beam splitter 66c by 90° in such a manner that the light is reflected by the beam splitter 66b is inserted between the beam splitters 66c and 66b if necessary.

Since the semiconductor lasers 16a and 16b are not integrated with the other light source or the photodetector in the sixteenth embodiment of the optical head apparatus of the present invention, the semiconductor lasers 16a and 16b can be provided with high heat dissipation properties. Since the total number of the module, light sources, and photodetectors is five, the optical head apparatus can be miniaturized. Furthermore, the photodetector in the module 166a can be designed in such a manner that sensitivity or the like with respect to the wavelength of the semiconductor laser in the module 166a is optimized, and the photodetectors 116a and 116b can be designed in such a manner that sensitivities or the like with respect to the wavelengths of the semiconductor lasers 16a and 16b are optimized.

### (17th Embodiment)

FIG. 17 shows a seventeenth embodiment of an optical head apparatus of the present invention. A module 167a has a constitution in which one semiconductor laser and one photodetector are integrated, and the constitution will be described later with reference to FIG. 65. A wavelength of the semiconductor laser in the module 167a is 780 nm, and wavelengths of the semiconductor lasers 17a and 17b are 660 nm and 400 nm, respectively. The beam splitter D is used as a beam splitter 67a. One of the beam splitters H, P, and U is used as a beam splitter 67b. One of the beam splitters C, E, M, K, O, and X is used as a beam splitter 67c. One of the beam splitters G, J, M, N, T, U, W, X, and Y is used as a beam splitter 67d.

Light having a wavelength of 400 nm emitted from the semiconductor laser 17b strikes on the beam splitter 67d as S-polarized light, and is almost all reflected, transmitted through the beam splitter 67a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitter 67a. The light enters the beam splitter 67d as P-polarized light, and almost all the light is transmitted, and received by a photodetector 117b.

The light having a wavelength of 660 nm emitted from the semiconductor laser 17a strikes on the beam splitter 67b as the S-polarized light, and almost all the light is reflected. Almost all the light is reflected by the beam splitter 67a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 67a. The light enters the beam splitter 67b as P-polarized light, and almost all the light is transmitted. The light enters the beam splitter 67c as the P-polarized light, and almost all the light is transmitted, and received by a photodetector 117a.

The light having a wavelength of 780 nm emitted from the semiconductor laser in the module 167a is almost all reflected by the beam splitter 67c. Almost all the light is transmitted through the beam splitter 67b, reflected by the beam splitter 67a and mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, reflected by the mirror 201, almost all reflected by the beam splitter 67a, transmitted through the beam splitter 67b, reflected by the beam splitter 67c, and received by the photodetector in the module 167a.

In the present embodiment, the wavelength of the semiconductor laser in the module 167a may be set to 660 nm, and the wavelengths of the semiconductor lasers 17a and 17b may be set to 780 nm and 400 nm, respectively. At this time, the beam splitter D is used as the beam splitter 67a. One of the beam splitters I, R, and T is used as the beam splitter 67b. One of the beam splitters B, F, N, L, Q, and W is used as the beam splitter 67c. One of the beam splitters G, J, M, N, T, U, W, X, and Y is used as the beam splitter 67d.

In the present embodiment, the wavelength of the semiconductor laser in the module 167a may be set to 780 nm, and the wavelengths of the semiconductor lasers 17a and 17b may be set to 400 nm and 660 nm. At this time, the beam splitter E is used as the beam splitter 67a. One of the beam splitters G, N, and U is used as the beam splitter 67b. One of the beam splitters C, D, O, J, M, and X is used as the beam splitter 67c. One of the beam splitters H, K, O, P, S, U, V, X, and Y is used as the beam splitter 67d.

In the present embodiment, the wavelength of the semiconductor laser in the module 167a may be set to 400 nm, and the wavelengths of the semiconductor lasers 17a and 17b may be set to 780 nm and 660 nm. At this time, the beam splitter E is used as the beam splitter 67a. One of the beam splitters I, Q, and S is used as the beam splitter 67b. One of the beam splitters A, F, P, L, R, and V is used as the beam splitter 67c. One of the beam splitters H, K, O, P, S, U, V, X, and Y is used as the beam splitter 67d.

In the present embodiment, the wavelength of the semiconductor laser in the module 167a may be set to 660 nm, and the wavelengths of the semiconductor lasers 17a and 17b may be set to 400 nm and 780 nm. At this time, the beam splitter F is used as the beam splitter 67a. One of the beam splitters G, M, and T is used as the beam splitter 67b. One of the beam splitters B, D, Q, J, N, and W is used as the beam splitter 67c. One of the beam splitters I, L, Q, R, S, T, V, W, and Y is used as the beam splitter 67d.

In the present embodiment, the wavelength of the semiconductor laser in the module 167a may be set to 400 nm, and the wavelengths of the semiconductor lasers 17a and 17b may be set to 660 nm and 780 nm, respectively. At this time, the beam splitter F is used as the beam splitter 67a. One of the beam splitters H, O, and S is used as the beam splitter 67b. One of the beam splitters A, E, R, K, P, and V is used as the beam splitter 67c. One of the beam splitters I, L, Q, R, S, T, V, W, and Y is used as the beam splitter 67d.

Furthermore, an embodiment in which the semiconductor laser 17b and the photodetector 117b are replaced is possible. An embodiment in which the module 167a, semiconductor laser 17a, and the photodetector 117a are mutually replaced is also possible.

In an embodiment in which the module 167a, semiconductor laser 17a, and photodetector 117a are replaced with the photodetector 117a, semiconductor laser 17a, and module 167a, a half-wave plate for rotating the polarization direction of the light emitted from the semiconductor laser 17a, reflected by the disk 204, and transmitted through the beam splitter 67b by 90° in such a manner that the light is reflected by the beam splitter 67c is inserted between the beam splitters 67b and 67c if necessary.

In an embodiment in which the module 167a, semiconductor laser 17a, and photodetector 117a are replaced with the semiconductor laser 17a, photodetector 117a, and module 167a, a half-wave plate for rotating the polarization direction of the light emitted from the semiconductor laser 17a and reflected by the beam splitter 67c by 90° in such a manner that the light is transmitted through the beam splitter 67b is inserted between the beam splitters 67c and 67b if necessary.

Since the semiconductor lasers 17a, 17b are not integrated with the other light source or the photodetector in the seventeenth embodiment of the optical head apparatus of the present invention, the semiconductor lasers 17a, 17b can be provided with high heat dissipation properties. Since the total number of the module, light sources, and photodetectors is five, the optical head apparatus can be miniaturized. Furthermore, the photodetector in the module 167a can be designed in such a manner that sensitivity or the like with respect to the wavelength of the semiconductor laser in the module 167a is optimized, and the photodetectors 117a and 117b can be designed in such a manner that sensitivities or the like with respect to the wavelengths of the semiconductor lasers 17a and 17b are optimized.

### (18th Embodiment)

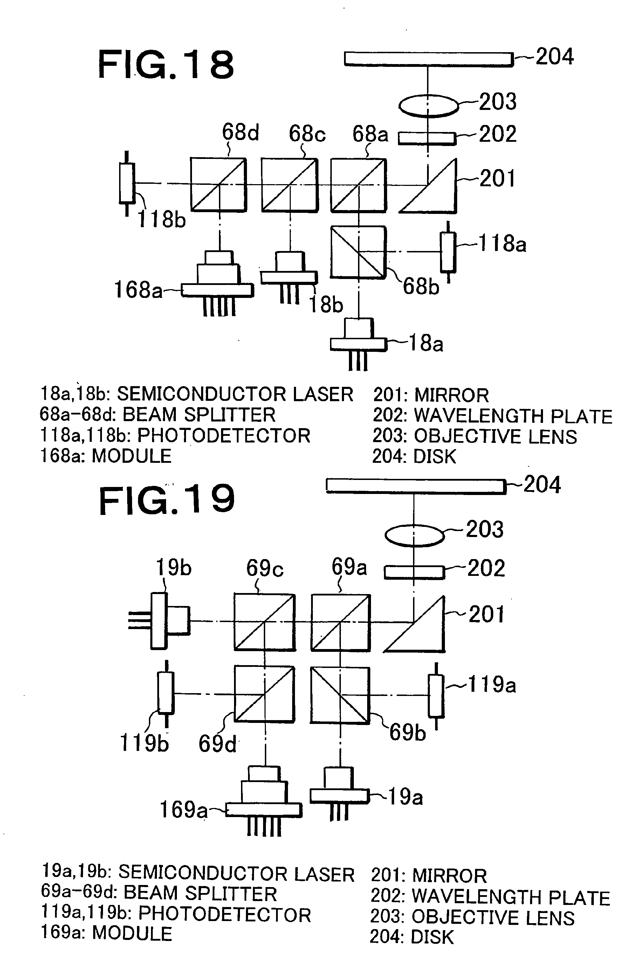

FIG. 18 shows an eighteenth embodiment of an optical head apparatus of the present invention. A module 168a has a constitution in which one semiconductor laser and one photodetector are integrated, and the constitution will be described later with reference to FIG. 65. A wavelength of the semiconductor laser in the module 168a is 780 nm, and wavelengths of semiconductor lasers 18a and 18b are 400 nm and 660 nm, respectively. The beam splitter A is used as a beam splitter 68a. One of the beam splitters G, J, M, N, T, U, W, X, and Y is used as a beam splitter 68b. One of the beam splitters H, P, and U is used as a beam splitter 68c. One of the beam splitters C, E, M, K, O, and X is used as a beam splitter 68d.

Light having a wavelength of 400 nm emitted from the semiconductor laser 18a enters the beam splitter 68b as P-polarized light, and is almost all transmitted. Almost all the light is reflected by the beam splitter 68a. The light is reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 68a. The light strikes on the beam splitter 68b as the S-polarized light, and is almost all reflected, and received by a photodetector 118a.

The light having a wavelength of 660 nm emitted from the semiconductor laser 18b strikes on the beam splitter 68c as S-polarized light, and is almost all reflected, and transmitted through the beam splitter 68a. Almost all the light is reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 68a. The light enters the beam splitter 68c as the P-polarized light, and is almost all transmitted. The light enters the beam splitter 68d as the P-polarized light, and is almost all transmitted, and received by a photodetector 118b.

The light having a wavelength of 780 nm emitted from the semiconductor laser in the module 168a is almost all reflected by the beam splitter 68d. Almost all the light is transmitted through the beam splitters 68c and 68a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, reflected by the mirror 201, almost all transmitted through the beam splitters 68a, 68c, reflected by the beam splitter 68d, and received by the photodetector in the module 168a.

In the present embodiment, the wavelength of the semiconductor laser in the module 168a may be set to 660 nm, and the wavelengths of the semiconductor lasers 18a and 18b may be set to 400 nm and 780 nm, respectively. At this time, the beam splitter A is used as the beam splitter 68a. One of the beam splitters G, J, M, N, T, U, W, X, and Y is used as the beam splitter 68b. One of the beam splitters I, R, and T is used as the beam splitter 68c. One of the beam splitters B, F, N, L, Q, and W is used as the beam splitter 68d.

In the present embodiment, the wavelength of the semiconductor laser in the module 168a may be set to 780 nm, and the wavelengths of the semiconductor lasers 18a and 18b may be set to 660 nm and 400 nm, respectively. At this time, the beam splitter B is used as the beam splitter 68a. One of the beam splitters H, K, O, P, S, U, V, X, and Y is used as the beam splitter 68b. One of the beam splitters G, N, U is used as the beam splitter 68c. One of the beam splitters C, D, O, J, M, and X is used as the beam splitter 68d.

In the present embodiment, the wavelength of the semiconductor laser in the module 168a may be set to 400 nm, and the wavelengths of the semiconductor lasers 18a and 18b may be set to 660 nm and 780 nm. At this time, the beam splitter B is used as the beam splitter 68a. One of the beam splitters H, K, O, P, S, U, V, X, and Y is used as the beam splitter 68b. One of the beam splitters I, Q, and S is used as the beam splitter 68c. One of the beam splitters A, F, P, L, R, and V is used as the beam splitter 68d.

In the present embodiment, the wavelength of the semiconductor laser in the module 168a may be set to 660 nm, and the wavelengths of the semiconductor lasers 18a and 18b may be set to 780 nm and 400 nm, respectively. At this time, the beam splitter C is used as the beam splitter 68a. One of the beam splitters I, L, Q, R, S, T, V, W, and Y is used as the beam splitter 68b. One of the beam splitters G, M, and T is used as the beam splitter 68c. One of the beam splitters B, D, Q, J, N, and W is used as the beam splitter 68d.

In the present embodiment, the wavelength of the semiconductor laser in the module 168a may be set to 400 nm, and the wavelengths of the semiconductor lasers 18a and 18b may be set to 780 nm and 660 nm, respectively. At this time, the beam splitter C is used as the beam splitter 68a. One of the beam splitters I, L, Q, R, S, T, V, W, and Y is used as the beam splitter 68b. One of the beam splitters H, O, S is used as the beam splitter 68c. One of the beam splitters A, E, R, K, P, and V is used as the beam splitter 68d.

Furthermore, an embodiment in which the semiconductor laser 18a and the photodetector 118a are replaced is possible. An embodiment in which the module 168a, semiconductor laser 18b, and the photodetector 118b are mutually replaced is also possible.

In an embodiment in which the module 168a, semiconductor laser 18b, and photodetector 118b are replaced with the photodetector 118b, semiconductor laser 18b, and module 168a, a half-wave plate for rotating the polarization direction of the light emitted from the semiconductor laser 18b, reflected by the disk 204, and transmitted through the beam splitter 68c by 90° in such a manner that the light is reflected by the beam splitter 68d is inserted between the beam splitters 68c and 68d if necessary.

In an embodiment in which the module 168a, semiconductor laser 18b, and photodetector 118b are replaced with the semiconductor laser 18b, photodetector 118b, and module 168a, a half-wave plate for rotating the polarization direction of the light emitted from the semiconductor laser 18b and reflected by the beam splitter 68d by 90° in such a manner that the light is transmitted through the beam splitter 68c is inserted between the beam splitters 68d and 68c if necessary.

Since the semiconductor lasers 18a and 18b are not integrated with the other light source or the photodetector in the eighteenth embodiment of the optical head apparatus of the present invention, the semiconductor lasers 18a and 18b can be provided with high heat dissipation properties. Since the total number of the module, light sources, and photodetectors is five, the optical head apparatus can be miniaturized. Furthermore, the photodetector in the module 168a can be designed in such a manner that sensitivity or the like with respect to the wavelength of the semiconductor laser in the module 168a is optimized, and the photodetectors 118a and 118b can be designed in such a manner that sensitivities or the like with respect to the wavelengths of the semiconductor lasers 18a and 18b are optimized.

### (19th Embodiment)

FIG. 19 shows a nineteenth embodiment of an optical head apparatus of the present invention. A module 169a is a module in which one semiconductor laser and one photodetector are integrated, and a constitution will be described later with reference to FIG. 65. A wavelength of the semiconductor laser in the module 169a is 780 nm, and wavelengths of semiconductor lasers 19a and 19b are 400 nm and 660 nm, respectively. The beam splitter A is used as a beam splitter 69a. One of the beam splitters G, J, M, N, T, U, W, X, and Y is used as a beam splitter 69b. One of the beam splitters K, O, and X is used as a beam splitter 69c. One of the beam splitters B, F, N, H, P, and U is used as a beam splitter 69d.

Light having a wavelength of 400 nm emitted from the semiconductor laser 19a enters the beam splitter 69b as P-polarized light, and is almost all transmitted. Almost all the light is reflected by the beam splitter 69a and a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 69a. The light strikes on the beam splitter 69b as S-polarized light, and is almost all reflected, and received by a photodetector 119a.

The light having a wavelength of 660 nm emitted from the semiconductor laser 19b enters the beam splitter 69c as P-polarized light, and is almost all transmitted. Almost all the light is transmitted through the beam splitter 69a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 69a. The light strikes on the beam splitter 69c as S-polarized light, and is almost all reflected. The light strikes on the beam splitter 69d as the S-polarized light, and is almost all reflected, and received by a photodetector 119b.

The light having a wavelength of 780 nm emitted from the semiconductor laser in the module 169a is almost all transmitted through the beam splitter 69d. Almost all the light is reflected by the beam splitter 69c, transmitted through the beam splitter 69a, reflected by mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 69a, reflected by the beam splitter 69c, transmitted through the beam splitter 69d, and received by the photodetector in the module 169a.

In the present embodiment, the wavelength of the semiconductor laser in the module 169a may be set to 660 nm, and the wavelengths of the semiconductor lasers 19a and 19b may be set to 400 nm and 780 nm, respectively. At this time, the beam splitter A is used as the beam splitter 69a. One of the beam splitters G, J, M, N, T, U, W, X, and Y is used as the beam splitter 69b. One of the beam splitters L, Q, W is used as the beam splitter 69c. One of the beam splitters C, E, M, I, R, and T is used as the beam splitter 69d.

In the present embodiment, the wavelength of the semiconductor laser in the module 169a may be set to 780 nm, and the wavelengths of the semiconductor lasers 19a and 19b may be set to 660 nm and 400 nm, respectively. At this time, the beam splitter B is used as the beam splitter 69a. One of the beam splitters H, K, O, P, S, U, V, X, and Y is used as the beam splitter 69b. One of the beam splitters J, M, and X is used as the beam splitter 69c. One of the beam splitters A, F, P, G, N, and U is used as the beam splitter 69d.

In the present embodiment, the wavelength of the semiconductor laser in the module 169a may be set to 400 nm, and the wavelengths of the semiconductor lasers 19a and 19b may be set to 660 nm and 780 nm, respectively. The beam splitter B is used as the beam splitter 69a. One of the beam splitters H, K, O, P, S, U, V, X, and Y is used as the beam splitter 69b. One of the beam splitters L, R, and V is used as the beam splitter 69c. One of the beam splitters C, D, O, I, Q, and S is used as the beam splitter 69d.

In the present embodiment, the wavelength of the semiconductor laser in the module 169a may be set to 660 nm, and the wavelengths of the semiconductor lasers 19a and 19b may be set to 780 nm and 400 nm. At this time, the beam splitter C is used as the beam splitter 69a. One of the beam splitters I, L, Q, R, S, T, V, W, and Y is used as the beam splitter 69b. One of the beam splitters J, N, and W is used as the beam splitter 69c. One of the beam splitters A, E, R, G, M, and T is used as the beam splitter 69d.

In the present embodiment, the wavelength of the semiconductor laser in the module 169a may be set to 400 nm, and the wavelengths of the semiconductor lasers 19a and 19b may be set to 780 nm and 660 nm, respectively. At this time, the beam splitter C is used as the beam splitter 69a. One of the beam splitters I, L, Q, R, S, T, V, W, and Y is used as the beam splitter 69b. One of the beam splitters K, P, and V is used as the beam splitter 69c. One of the beam splitters B, D, Q, H, O, and S is used as the beam splitter 69d.

Furthermore, an embodiment in which the semiconductor laser 19a and the photodetector 119a are replaced is possible. An embodiment in which the module 169a, semiconductor laser 19b, and the photodetector 119b are mutually replaced is also possible.

In an embodiment in which the module 169a, semiconductor laser 19b, and photodetector 119b are replaced with the photodetector 119b, semiconductor laser 19b, and module 169a, a half-wave plate for rotating the polarization direction of the light emitted from the semiconductor laser 19b, and reflected by the disk 204 and the beam splitter 69c by 90° in such a manner that the light is transmitted through the beam splitter 69d is inserted between the beam splitters 69c and 69d if necessary.

In an embodiment in which the module 169a, semiconductor laser 19b, and photodetector 119b are replaced with the semiconductor laser 19b, photodetector 119b, and module 169a, a half-wave plate for rotating the polarization direction of the light emitted from the semiconductor laser 19b and transmitted through the beam splitter 69d by 90° in such a manner that the light is reflected by the beam splitter 69c is inserted between the beam splitters 69d and 69c if necessary.

Since the semiconductor lasers 19a and 19b are not integrated with the other light source or the photodetector in the nineteenth embodiment of the optical head apparatus of the present invention, the semiconductor lasers 19a and 19b can be provided with high heat dissipation properties. Since the total number of the module, light sources, and photodetectors is five, the optical head apparatus can be miniaturized. Furthermore, the photodetector in the module 169a can be designed in such a manner that sensitivity or the like with respect to the wavelength of the semiconductor laser in the module 169a is optimized, and the photodetectors 119a and 119b can be designed in such a manner that sensitivities or the like with respect to the wavelengths of the semiconductor lasers 19a and 19b are optimized.

### 9. 20th to 24th Embodiment (Type 7)

Each of twentieth to twenty-fourth embodiments of an optical head apparatus of the present invention has a configuration having one light source, one photodetector, and two modules. Additionally, each of two modules is a module in which one light source and one photodetector are integrated.

### (20th Embodiment)

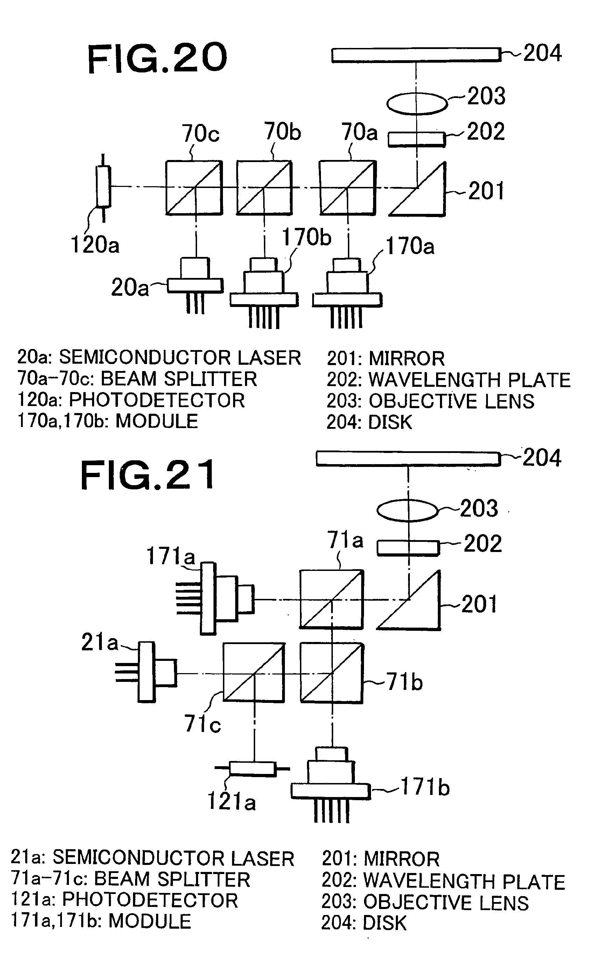

FIG. 20 shows a twentieth embodiment of an optical head apparatus of the present invention. Each of modules 170a, 170b is a module in which one semiconductor laser and one photodetector are integrated, and a constitution will be described later with reference to FIG. 65. Wavelengths of semiconductor lasers in the modules 170a and 170b are 780 nm and 660 nm, respectively, and a wavelength of a semiconductor laser 20a is 400 nm. The beam splitter C is used as a beam splitter 70a. One of the beam splitters B, D, and Q is used as a beam splitter 70b. One of the beam splitters G, J, M, N, T, U, W, X, and Y is used as a beam splitter 70c.

Light having a wavelength of 400 nm emitted from the semiconductor laser 20a strikes on the beam splitter 70c as S-polarized light, and is almost all reflected. Almost all the light is transmitted through the beam splitter 70b and beam splitter 70a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitters 70a and 70b. The light enters the beam splitter 70c as P-polarized light, and is almost all transmitted, and received by a photodetector 120a.

The light having a wavelength of 660 nm emitted from the semiconductor laser in the module 170b is almost all reflected by the beam splitter 70b, almost all transmitted through the beam splitter 70a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 70a, reflected by the beam splitter 70b, and received by the photodetector in the module 170b.

The light having a wavelength of 780 nm emitted from the semiconductor laser in the module 170a is almost all reflected by the beam splitter 70a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 70a, and received by the photodetector in the module 170a.

In the present embodiment, wavelengths of the semiconductor lasers in the modules 170a and 170b may be set to 660 nm and 780 nm, respectively, and a wavelength of the semiconductor laser 20a may be set to 400 nm. At this time, the beam splitter B is used as the beam splitter 70a. One of the beam splitters C, D, and O is used as the beam splitter 70b. One of the beam splitters G, J, M, N, T, U, W, X, and Y is used as the beam splitter 70c.

In the present embodiment, the wavelengths of the semiconductor lasers in the modules 170a and 170b may be set to 780 nm and 400 nm, respectively, and the wavelength of the semiconductor laser 20a may be set to 660 nm. At this time, the beam splitter C is used as the beam splitter 70a. One of the beam splitters A, E, and R is used as the beam splitter 70b. One of the beam splitters H, K, O, P, S, U, V, X, and Y is used as the beam splitter 70c.

In the present embodiment, the wavelengths of the semiconductor lasers in the modules 170a and 170b may be set to 400 nm and 780 nm, respectively, and the wavelength of the semiconductor laser 20a may be set to 660 nm. At this time, the beam splitter A is used as the beam splitter 70a. One of the beam splitters C, E, and M is used as the beam splitter 70b. One of the beam splitters H, K, O, P, S, U, V, X, and Y is used as the beam splitter 70c.

In the present embodiment, the wavelengths of the semiconductor lasers in the modules 170a and 170b may be set to 660 nm and 400 nm, respectively, and the wavelength of the semiconductor laser 20a may be set to 780 nm. At this time, the beam splitter B is used as the beam splitter 70a. One of the beam splitters A, F, and P is used as the beam splitter 70b. One of the beam splitters I, L, Q, R, S, T, V, W, and Y is used as the beam splitter 70c.

In the present embodiment, the wavelengths of the semiconductor lasers in the modules 170a and 170b may be set to 400 nm and 660 nm, respectively, and the wavelength of the semiconductor laser 20a may be set to 780 nm. At this time, the beam splitter A is used as the beam splitter 70a. One of the beam splitters B, F, and N is used as the beam splitter 70b. One of the beam splitters I, L, Q, R, S, T, V, W, and Y is used as the beam splitter 70c.

Furthermore, an embodiment in which the modules 170a and 170b, the semiconductor laser 20a, and the photodetector 120a are mutually replaced is possible.

In an embodiment in which the modules 170a and 170b, the semiconductor laser 20a, and the photodetector 120a are replaced with the module 170a, the semiconductor laser 20a, the photodetector 120a, and the module 170b, respectively, a half-wave plate for rotating the polarization direction of the light emitted from the semiconductor laser 20a, reflected by the disk 204, and transmitted through the beam splitter 70b by 90° in such a manner that the light is reflected by the beam splitter 70c is inserted between the beam splitters 70b and 70c if necessary.

In an embodiment in which the modules 170a and 170b, the semiconductor laser 20a, and the photodetector 120a are replaced with the module 170a, the photodetector 120a, the semiconductor laser 20a, and the module 170b, respectively, a half-wave plate for rotating the polarization direction of the light emitted from the semiconductor laser 20a and reflected by the beam splitter 70c by 90° in such a manner that the light is transmitted through the beam splitter 70b is inserted between the beam splitters 70c and 70b if necessary.

In an embodiment in which the modules 170a and 170b, the semiconductor laser 20a, and the photodetector 120a are replaced with the semiconductor laser 20a, the module 170b, the photodetector 120a, and the module 170a, respectively, a half-wave plate for rotating the polarization direction of the light emitted from the semiconductor laser 20a, reflected by the disk 204, and transmitted through the beam splitter 70b by 90° in such a manner that the light is reflected by the beam splitter 70c is inserted between the beam splitters 70b and 70c if necessary.

In an embodiment in which the modules 170a and 170b, the semiconductor laser 20a, and the photodetector 120a are replaced with the photodetector 120a, the module 170b, the semiconductor laser 20a, and the module 170a, a half-wave plate for rotating the polarization direction of the light emitted from the semiconductor laser 20a and reflected by the beam splitter 70c by 90° in such a manner that the light is transmitted through the beam splitter 70b is inserted between the beam splitters 70c and 70b if necessary.

In an embodiment in which the modules 170a and 170b, the semiconductor laser 20a, and the photodetector 120a are replaced with the semiconductor laser 20a, the photodetector 120a, the module 170a or 170b, and the module 170b or 170a, respectively, a half-wave plate for rotating the polarization direction of the light emitted from the semiconductor laser 20a, reflected by the disk 204, and transmitted through the beam splitter 70a by 90° in such a manner that the light is reflected by the beam splitter 70b is inserted between the beam splitters 70a and 70b if necessary.

In an embodiment in which the modules 170a and 170b, the semiconductor laser 20a, and the photodetector 120a are replaced with the photodetector 120a, the semiconductor laser 20a, the module 170a or 170b, and the module 170b or 170a, respectively, a half-wave plate for rotating the polarization direction of the light emitted from the semiconductor laser 20a and reflected by the beam splitter 70b by 90° in such a manner that the light is transmitted through the beam splitter 70a is inserted between the beam splitters 70b and 70a if necessary.

Since the semiconductor laser 20a is not integrated with the other light source or the photodetector in the twentieth embodiment of the optical head apparatus of the present invention, the semiconductor laser 20a can be provided with a high heat dissipation property. Since the total number of the modules, light source, and photodetector is four, the optical head apparatus can be miniaturized. Furthermore, the photodetectors in the modules 170a and 170b can be designed in such a manner that sensitivities or the like with respect to the wavelengths of the semiconductor lasers in the modules 170a and 170b are optimized, and the photodetector 120a can be designed in such a manner that sensitivity or the like with respect to the wavelength of the semiconductor laser 20a is optimized.

### (21st Embodiment)

FIG. 21 shows a twenty-first embodiment of an optical head apparatus of the present invention. Each of modules 171a and 171b is a module in which one semiconductor laser and one photodetector are integrated, and a constitution will be described later with reference to FIG. 65. Wavelengths of semiconductor lasers in the modules 171a and 171b are 780 nm and 660 nm, respectively, and a wavelength of a semiconductor laser 21a is 400 nm. The beam splitter F is used as a beam splitter 71a. One of the beam splitters A, E, and R is used as a beam splitter 71b. One of the beam splitters G, J, M, N, T, U, W, X, and Y is used as a beam splitter 71c.

Light having a wavelength of 400 nm emitted from the semiconductor laser 21a enters the beam splitter 71c as P-polarized light, and is almost all transmitted. Almost all the light is reflected by the beam splitters 71b and 71a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitters 71a and 71b. The light strikes on the beam splitter 71c as S-polarized light, and is almost all reflected, and received by a photodetector 121a.

The light having a wavelength of 660 nm emitted from the semiconductor laser in the module 171b is almost all transmitted through the beam splitter 71b, almost all reflected by the beam splitter 71a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 71a, transmitted through the beam splitter 71b, and received by the photodetector in the module 171b.

The light having a wavelength of 780 nm emitted from the semiconductor laser in the module 171a is almost all transmitted through the beam splitter 71a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 71a, and received by the photodetector in the module 171a.

In the present embodiment, wavelengths of the semiconductor lasers in the modules 171a and 171b may be set to 660 nm and 780 nm, respectively, and a wavelength of the semiconductor laser 21a may be set to 400 nm. At this time, the beam splitter E is used as the beam splitter 71a. One of the beam splitters A, F, and P is used as the beam splitter 71b. One of the beam splitters G, J, M, N, T, U, W, X, and Y is used as the beam splitter 71c.

In the present embodiment, the wavelengths of the semiconductor lasers in the modules 171a and 171b may be set to 780 nm and 400 nm, respectively, and the wavelength of the semiconductor laser 21a may be set to 660 nm. At this time, the beam splitter F is used as the beam splitter 71a. One of the beam splitters B, D, and Q is used as the beam splitter 71b. One of the beam splitters H, K, O, P, S, U, V, X, and Y is used as the beam splitter 71c.

In the present embodiment, the wavelengths of the semiconductor lasers in the modules 171a and 171b may be set to 400 nm and 780 nm, respectively, and the wavelength of the semiconductor laser 21a may be set to 660 nm. At this time, the beam splitter D is used as the beam splitter 71a. One of the beam splitters B, F, and N is used as the beam splitter 71b. One of the beam splitters H, K, O, P, S, U, V, X, and Y is used as the beam splitter 71c.

In the present embodiment, the wavelengths of the semiconductor lasers in the modules 171a and 171b may be set to 660 nm and 400 nm, respectively, and the wavelength of the semiconductor laser 21a may be set to 780 nm. At this time, the beam splitter E is used as the beam splitter 71a. One of the beam splitters C, D, and O is used as the beam splitter 71b. One of the beam splitters I, L, Q, R, S, T, V, W, and Y is used as the beam splitter 71c.

In the present embodiment, the wavelengths of the semiconductor lasers in the modules 171a and 171b may be set to 400 nm and 660 nm, respectively, and the wavelength of the semiconductor laser 21a may be set to 780 nm. At this time, the beam splitter D is used as the beam splitter 71a. One of the beam splitters C, E, and M is used as the beam splitter 71b. One of the beam splitters I, L, Q, R, S, T, V, W, and Y is used as the beam splitter 71c.

Furthermore, an embodiment in which the modules 171a and 171b, the semiconductor laser 21a, and the photodetector 121a are mutually replaced is possible.

In an embodiment in which the modules 171a and 171b, the semiconductor laser 21a, and the photodetector 121a are replaced with the module 171a, the semiconductor laser 21a, the photodetector 121a, and the module 171b, respectively, a half-wave plate for rotating the polarization direction of the light emitted from the semiconductor laser 21a and reflected by the disk 204 and the beam splitter 71b by 90° in such a manner that the light is transmitted through the beam splitter 71c is inserted between the beam splitters 71b and 71c if necessary.

In an embodiment in which the modules 171a and 171b, the semiconductor laser 21a, and the photodetector 121a are replaced with the module 171a, the photodetector 121a, the semiconductor laser 21a, and the module 171b, respectively, a half-wave plate for rotating the polarization direction of the light emitted from the semiconductor laser 21a and reflected by the beam splitter 71c by 90° in such a manner that the light is reflected by the beam splitter 71b is inserted between the beam splitters 71c and 71b if necessary.

In an embodiment in which the modules 171a and 171b, the semiconductor laser 21a, and the photodetector 121a are replaced with the semiconductor laser 21a, the module 171b, the photodetector 121a, and the module 171a, respectively, a half-wave plate for rotating the polarization direction of the light emitted from the semiconductor laser 21a and reflected by the disk 204 and the beam splitter 71b by 90° in such a manner that the light is transmitted through the beam splitter 71c is inserted between the beam splitters 71b and 71c if necessary.

In an embodiment in which the modules 171a and 171b, the semiconductor laser 21a, and the photodetector 121a are replaced with the photodetector 121a, the module 171b, the semiconductor laser 21a, and the module 171a, a half-wave plate for rotating the polarization direction of the light emitted from the semiconductor laser 21a and transmitted through the beam splitter 71c by 90° in such a manner that the light is reflected by the beam splitter 71b is inserted between the beam splitters 71c and 71b if necessary.

In an embodiment in which the modules 171a and 171b, the semiconductor laser 21a, and the photodetector 121a are replaced with the semiconductor laser 21a, the photodetector 121a, the module 171a or 171b, and the module 171b or 171a, respectively, a half-wave plate for rotating the polarization direction of the light emitted from the semiconductor laser 21a and reflected by the disk 204 and the beam splitter 71a by 90° in such a manner that the light is transmitted through the beam splitter 71b is inserted between the beam splitters 71a and 71b if necessary.

In an embodiment in which the modules 171a and 171b, the semiconductor laser 21a, and the photodetector 121a are replaced with the photodetector 121a, the semiconductor laser 21a, the module 171a or 171b, and the module 171b or 171a, respectively, a half-wave plate for rotating the polarization direction of the light emitted from the semiconductor laser 21a and transmitted through the beam splitter 71b by 90° in such a manner that the light is reflected by the beam splitter 71a is inserted between the beam splitters 71b and 71a if necessary.

Since the semiconductor laser 21a is not integrated with the other light source or the photodetector in the twenty-first embodiment of the optical head apparatus of the present invention, the semiconductor laser 21a can be provided with a high heat dissipation property. Since the total number of the modules, light source, and photodetector is four, the optical head apparatus can be miniaturized. Furthermore, the photodetectors in the modules 171a and 171b can be designed in such a manner that sensitivities or the like with respect to the wavelengths of the semiconductor lasers in the modules 171a and 171b are optimized, and the photodetector 121a can be designed in such a manner that sensitivity or the like with respect to the wavelength of the semiconductor laser 21a is optimized.

### (22nd Embodiment)

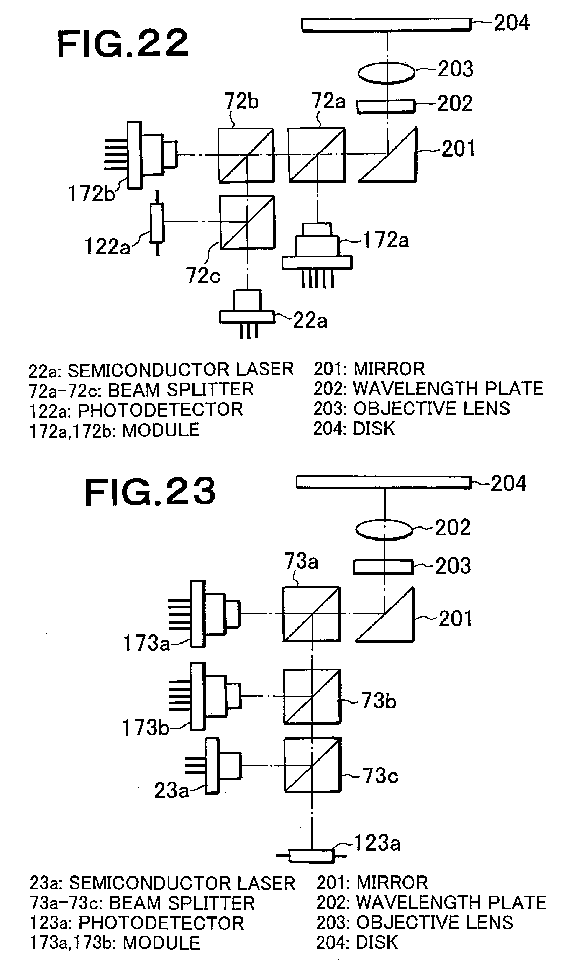

FIG. 22 shows a twenty-second embodiment of an optical head apparatus of the present invention. Each of modules 172a and 172b is a module in which one semiconductor laser and one photodetector are integrated, and a constitution will be described later with reference to FIG. 65. Wavelengths of semiconductor lasers in the modules 172a and 172b are 780 nm and 660 nm, and a wavelength of a semiconductor laser 22a is 400 nm. The beam splitter C is used as a beam splitter 72a. One of the beam splitters A, E, and R is used as a beam splitter 72b. One of the beam splitters G, J, M, N, T, U, W, X, and Y is used as a beam splitter 72c.

Light having a wavelength of 400 nm emitted from the semiconductor laser 22a enters the beam splitter 72c as P-polarized light, and is almost all transmitted. Almost all the light is reflected by the beam splitters 72b, transmitted through the beam splitter 72a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitter 72a, and reflected by the beam splitter 72b. The light strikes on the beam splitter 72c as S-polarized light, and is almost all reflected, and received by a photodetector 122a.

The light having a wavelength of 660 nm emitted from the semiconductor laser in the module 172b is almost all transmitted through the beam splitters 72b, 72a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitters 72a and 72b, and received by the photodetector in the module 172b.

The light having a wavelength of 780 nm emitted from the semiconductor laser in the module 172a is almost all reflected by the beam splitter 72a and the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 72a, and received by the photodetector in the module 172a.

In the present embodiment, wavelengths of the semiconductor lasers in the modules 172a and 172b may be set to 660 nm and 780 nm, respectively, and a wavelength of the semiconductor laser 22a may be set to 400 nm. At this time, the beam splitter B is used as the beam splitter 72a. One of the beam splitters A, F, and P is used as the beam splitter 72b. One of the beam splitters G, J, M, N, T, U, W, X, and Y is used as the beam splitter 72c.

In the present embodiment, the wavelengths of the semiconductor lasers in the modules 172a and 172b may be set to 780 nm and 400 nm, respectively, and the wavelength of the semiconductor laser 22a may be set to 660 nm. At this time, the beam splitter C is used as the beam splitter 72a. One of the beam splitters B, D, and Q is used as the beam splitter 72b. One of the beam splitters H, K, O, P, S, U, V, X, and Y is used as the beam splitter 72c.

In the present embodiment, the wavelengths of the semiconductor lasers in the modules 172a and 172b may be set to 400 nm, and 780 nm, respectively, and the wavelength of the semiconductor laser 22a may be set to 660 nm. At this time, the beam splitter A is used as the beam splitter 72a. One of the beam splitters B, F, and N is used as the beam splitter 72b. One of the beam splitters H, K, O, P, S, U, V, X, and Y is used as the beam splitter 72c.

In the present embodiment, the wavelengths of the semiconductor lasers in the modules 172a and 172b may be set to 660 nm and 400 nm, respectively, and the wavelength of the semiconductor laser 22a may be set to 780 nm. At this time, the beam splitter B is used as the beam splitter 72a. One of the beam splitters C, D, and O is used as the beam splitter 72b. One of the beam splitters I, L, Q, R, S, T, V, W, and Y is used as the beam splitter 72c.

In the present embodiment, the wavelengths of the semiconductor lasers in the modules 172a and 172b may be set to 400 nm and 660 nm, respectively, and the wavelength of the semiconductor laser 22a may be set to 780 nm. At this time, the beam splitter A is used as the beam splitter 72a. One of the beam splitters C, E, and M is used as the beam splitter 72b. One of the beam splitters I, L, Q, R, S, T, V, W, and Y is used as the beam splitter 72c.

Furthermore, an embodiment in which the modules 172a and 172b, the semiconductor laser 22a, and the photodetector 122a are mutually replaced is possible.

In an embodiment in which the modules 172a and 172b, the semiconductor laser 22a, and the photodetector 122a are replaced with the module 172a, the semiconductor laser 22a, the photodetector 122a, and the module 172b, respectively, a half-wave plate for rotating the polarization direction of the light emitted from the semiconductor laser 22a and reflected by the disk 204 and the beam splitter 72b by 90° in such a manner that the light is transmitted through the beam splitter 72c is inserted between the beam splitters 72b and 72c if necessary.

In an embodiment in which the modules 172a and 172b, the semiconductor laser 22a, and the photodetector 122a are replaced with the module 172a, the photodetector 122a, the semiconductor laser 22a, and the module 172b, respectively, a half-wave plate for rotating the polarization direction of the light emitted from the semiconductor laser 22a and transmitted through the beam splitter 72c by 90° in such a manner that the light is reflected by the beam splitter 72b is inserted between the beam splitters 72c and 72b if necessary.

In an embodiment in which the modules 172a and 172b, the semiconductor laser 22a, and the photodetector 122a are replaced with the semiconductor laser 22a, the modules 172b, 172a, and the photodetector 122a, respectively, a half-wave plate for rotating the polarization direction of the light emitted from the semiconductor laser 22a, reflected by the disk 204, and transmitted through the beam splitter 72a by 90° in such a manner that the light is reflected by the beam splitter 72b is inserted between the beam splitters 72a and 72b if necessary.

In an embodiment in which the modules 172a and 172b, the semiconductor laser 22a, and the photodetector 122a are replaced with the photodetector 122a, the modules 172b and 172a, and the semiconductor laser 22a, a half-wave plate for rotating the polarization direction of the light emitted from the semiconductor laser 22a and reflected by the beam splitter 72b by 90° in such a manner that the light is transmitted through the beam splitter 72a is inserted between the beam splitters 72b and 72a if necessary.

In an embodiment in which the modules 172a and 172b, the semiconductor laser 22a, and the photodetector 122a are replaced with the semiconductor laser 22a, the module 172b, the photodetector 122a, and the module 172a, respectively, a half-wave plate for rotating the polarization direction of the light emitted from the semiconductor laser 22a, reflected by the disk 204, and transmitted through the beam splitter 72a by 90° in such a manner that the light is reflected by the beam splitter 72b is inserted between the beam splitters 72a and 72b if necessary. A half-wave plate for rotating the polarization direction of the light emitted from the semiconductor laser 22a and reflected by the disk 204 and the beam splitter 72b by 90° in such a manner that the light is transmitted through the beam splitter 72c is inserted between the beam splitters 72b and 72c if necessary.

In an embodiment in which the modules 172a and 172b, the semiconductor laser 22a, and the photodetector 122a are replaced with the photodetector 122a, the module 172b, the semiconductor laser 22a, and the module 172a, respectively, a half-wave plate for rotating the polarization direction of the light emitted from the semiconductor laser 22a and transmitted through the beam splitter 72c by 90° in such a manner that the light is reflected by the beam splitter 72b is inserted between the beam splitters 72c and 72b if necessary. A half-wave plate for rotating the polarization direction of the light emitted from the semiconductor laser 22a and reflected by the beam splitter 72b by 90° in such a manner that the light is transmitted through the beam splitter 72a is inserted between the beam splitters 72b and 72a if necessary.

Since the semiconductor laser 22a is not integrated with the other light source or the photodetector in the twenty-second embodiment of the optical head apparatus of the present invention, the semiconductor laser 22a can be provided with a high heat dissipation property. Since the total number of the modules, light source, and photodetector is four, the optical head apparatus can be miniaturized. Furthermore, the photodetectors in the modules 172a and 172b can be designed in such a manner that sensitivities or the like with respect to the wavelengths of the semiconductor lasers in the modules 172a and 172b are optimized, and the photodetector 122a can be designed in such a manner that sensitivity or the like with respect to the wavelength of the semiconductor laser 22a is optimized.

### (23rd Embodiment)

FIG. 23 shows a twenty-third embodiment of an optical head apparatus of the present invention. Each of modules 173a and 173b is a module in which one semiconductor laser and one photodetector are integrated, and a constitution will be described later with reference to FIG. 65. Wavelengths of semiconductor lasers in the modules 173a and 173b are 780 nm and 660 nm, respectively, and a wavelength of a semiconductor laser 23a is 400 nm. The beam splitter F is used as a beam splitter 73a. One of the beam splitters B, D, and Q is used as a beam splitter 73b. One of the beam splitters G, J, M, N, T, U, W, X, and Y is used as a beam splitter 73c.

Light having a wavelength of 400 nm emitted from the semiconductor laser 23a strikes on the beam splitter 73c as S-polarized light, and is almost all reflected. Almost all the light is transmitted through the beam splitter 73b, reflected by the beam splitter 73a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 73a, and transmitted through the beam splitter 73b. The light enters the beam splitter 73c as P-polarized light, and is almost all transmitted, and received by a photodetector 123a.

The light having a wavelength of 660 nm emitted from the semiconductor laser in the module 173b is almost all reflected by the beam splitters 73b and 73a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitters 73a, 73b, and received by the photodetector in the module 173b.

The light having a wavelength of 780 nm emitted from the semiconductor laser in the module 173a is almost all transmitted through the beam splitter 73a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 73a, and received by the photodetector in the module 173a.

In the present embodiment, wavelengths of the semiconductor lasers in the modules 173a and 173b may be set to 660 nm and 780 nm, respectively, and a wavelength of the semiconductor laser 23a may be set to 400 nm. At this time, the beam splitter E is used as the beam splitter 73a. One of the beam splitters C, D, and O is used as the beam splitter 73b. One of the beam splitters G, J, M, N, T, U, W, X, and Y is used as the beam splitter 73c.

In the present embodiment, the wavelengths of the semiconductor lasers in the modules 173a and 173b may be set to 780 nm and 400 nm, respectively, and the wavelength of the semiconductor laser 23a may be set to 660 nm. At this time, the beam splitter F is used as the beam splitter 73a. One of the beam splitters A, E, and R is used as the beam splitter 73b. One of the beam splitters H, K, O, P, S, U, V, X, and Y is used as the beam splitter 73c.

In the present embodiment, the wavelengths of the semiconductor lasers in the modules 173a and 173b may be set to 400 nm and 780 nm, respectively, and the wavelength of the semiconductor laser 23a may be set to 660 nm. At this time, the beam splitter D is used as the beam splitter 73a. One of the beam splitters C, E, and M is used as the beam splitter 73b. One of the beam splitters H, K, O, P, S, U, V, X, and Y is used as the beam splitter 73c.

In the present embodiment, the wavelengths of the semiconductor lasers in the modules 173a and 173b may be set to 660 nm and 400 nm, respectively, and the wavelength of the semiconductor laser 23a may be set to 780 nm. At this time, the beam splitter E is used as the beam splitter 73a. One of the beam splitters A, F, and P is used as the beam splitter 73b. One of the beam splitters I, L, Q, R, S, T, V, W, and Y is used as the beam splitter 73c.

In the present embodiment, the wavelengths of the semiconductor lasers in the modules 173a and 173b may be set to 400 nm and 660 nm, respectively, and the wavelength of the semiconductor laser 23a may be set to 780 nm. At this time, the beam splitter D is used as the beam splitter 73a. One of the beam splitters B, F, and N is used as the beam splitter 73b. One of the beam splitters I, L, Q, R, S, T, V, W, and Y is used as the beam splitter 73c.

Furthermore, an embodiment in which the modules 173a and 173b, the semiconductor laser 23a, and the photodetector 123a are mutually replaced is possible.

In an embodiment in which the modules 173a and 173b, the semiconductor laser 23a, and the photodetector 123a are replaced with the module 173a, the semiconductor laser 23a, the photodetector 123a, and the module 173b, respectively, a half-wave plate for rotating the polarization direction of the light emitted from the semiconductor laser 23a, reflected by the disk 204, and transmitted through the beam splitter 73b by 90° in such a manner that the light is reflected by the beam splitter 73c is inserted between the beam splitters 73b and 73c if necessary.

In an embodiment in which the modules 173a and 173b, the semiconductor laser 23a, and the photodetector 123a are replaced with the module 173a, the photodetector 123a, the semiconductor laser 23a, and the module 173b, respectively, a half-wave plate for rotating the polarization direction of the light emitted from the semiconductor laser 23a and reflected by the beam splitter 73c by 90° in such a manner that the light is transmitted through the beam splitter 73b is inserted between the beam splitters 73c and 73b if necessary.

In an embodiment in which the modules 173a and 173b, the semiconductor laser 23a, and the photodetector 123a are replaced with the semiconductor laser 23a, the modules 173b, 173a, and the photodetector 123a, respectively, a half-wave plate for rotating the polarization direction of the light emitted from the semiconductor laser 23a, reflected by the disk 204, and reflected by the beam splitter 73a by 90° in such a manner that the light is transmitted through the beam splitter 73b is inserted between the beam splitters 73a and 73b if necessary.

In an embodiment in which the modules 173a and 173b, the semiconductor laser 23a, and the photodetector 123a are replaced with the photodetector 123a, the modules 173b and 173a, and the semiconductor laser 23a, respectively, a half-wave plate for rotating the polarization direction of the light emitted from the semiconductor laser 23a and transmitted through the beam splitter 73b by 90° in such a manner that the light is reflected by the beam splitter 73a is inserted between the beam splitters 73b and 73a if necessary.

In an embodiment in which the modules 173a and 173b, the semiconductor laser 23a, and the photodetector 123a are replaced with the semiconductor laser 23a, the module 173b, the photodetector 123a, and the module 173a, respectively, a half-wave plate for rotating the polarization direction of the light emitted from the semiconductor laser 23a and reflected by the disk 204 and the beam splitter 73a by 90° in such a manner that the light is transmitted through the beam splitter 73b is inserted between the beam splitters 73a and 73b if necessary. A half-wave plate for rotating the polarization direction of the light emitted from the semiconductor laser 23a, reflected by the disk 204, and transmitted through the beam splitter 73b by 90° in such a manner that the light is reflected by the beam splitter 73c is inserted between the beam splitters 73b and 73c if necessary.

In an embodiment in which the modules 173a and 173b, the semiconductor laser 23a, and the photodetector 123a are replaced with the photodetector 123a, the module 173b, the semiconductor laser 23a, and the module 173a, respectively, a half-wave plate for rotating the polarization direction of the light emitted from the semiconductor laser 23a and reflected by the beam splitter 73c by 90° in such a manner that the light is transmitted through the beam splitter 73b is inserted between the beam splitters 73c and 73b if necessary. A half-wave plate for rotating the polarization direction of the light emitted from the semiconductor laser 23a and transmitted through the beam splitter 73b by 90° in such a manner that the light is reflected by the beam splitter 73a is inserted between the beam splitters 73b and 73a if necessary.

Since the semiconductor laser 23a is not integrated with the other light source or the photodetector in the twenty-third embodiment of the optical head apparatus of the present invention, the semiconductor laser 23a can be provided with a high heat dissipation property. Since the total number of the modules, light source, and photodetector is four, the optical head apparatus can be miniaturized. Furthermore, the photodetectors in the modules 173a and 173b can be designed in such a manner that sensitivities or the like with respect to the wavelengths of the semiconductor lasers in the modules 173a and 173b are optimized, and the photodetector 123a can be designed in such a manner that sensitivity or the like with respect to the wavelength of the semiconductor laser 23a is optimized.

### (24th Embodiment)

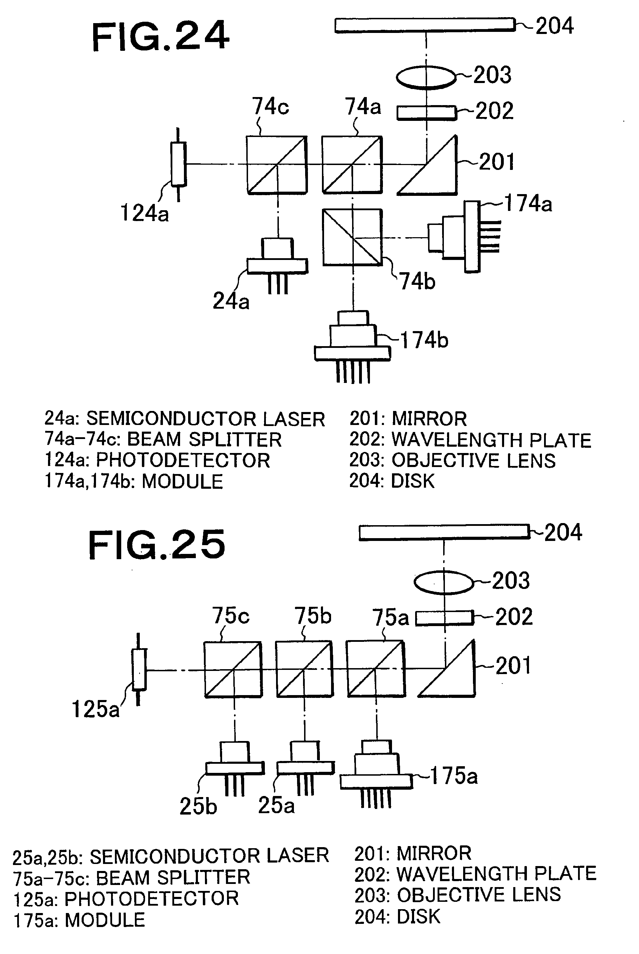

FIG. 24 shows a twenty-fourth embodiment of an optical head apparatus of the present invention. Each of modules 174a and 174b is a module in which one semiconductor laser and one photodetector are integrated, and a constitution will be described later with reference to FIG. 65. Wavelengths of semiconductor lasers in the modules 174a and 174b are 780 nm and 660 nm, respectively, and a wavelength of a semiconductor laser 24a is 400 nm. The beam splitter D is used as a beam splitter 74a. One of the beam splitters C, E, and M is used as a beam splitter 74b. One of the beam splitters G, J, M, N, T, U, W, X, and Y is used as a beam splitter 74c.

Light having a wavelength of 400 nm emitted from the semiconductor laser 24a strikes on the beam splitter 74c as S-polarized light, and is almost all reflected. Almost all the light is transmitted through the beam splitter 74a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, reflected by the mirror 201, and is almost all transmitted through the beam splitter 74a. The light enters the beam splitter 74c as P-polarized light, and is almost all transmitted, and received by a photodetector 124a.

The light having a wavelength of 660 nm emitted from the semiconductor laser in the module 174b is almost all transmitted through the beam splitter 74b, reflected by the beam splitter 74a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitters 74a, transmitted through the beam splitter 74b, and received by the photodetector in the module 174b.

The light having a wavelength of 780 nm emitted from the semiconductor laser in the module 174a is almost all reflected by the beam splitters 74b and 74a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitters 74a, 74b, and received by the photodetector in the module 174a.

In the present embodiment, wavelengths of the semiconductor lasers in the modules 174a and 174b may be set to 660 nm and 780 nm, respectively, and a wavelength of the semiconductor laser 24a may be set to 400 nm. At this time, the beam splitter D is used as the beam splitter 74a. One of the beam splitters B, F, and N is used as the beam splitter 74b. One of the beam splitters G, J, M, N, T, U, W, X, and Y is used as the beam splitter 74c.

In the present embodiment, the wavelengths of the semiconductor lasers in the modules 174a and 174b may be set to 780 nm and 400 nm, respectively, and the wavelength of the semiconductor laser 24a may be set to 660 nm. At this time, the beam splitter E is used as the beam splitter 74a. One of the beam splitters C, D, and O is used as the beam splitter 74b. One of the beam splitters H, K, O, P, S, U, V, X, and Y is used as the beam splitter 74c.

In the present embodiment, the wavelengths of the semiconductor lasers in the modules 174a and 174b may be set to 400 nm and 780 nm, respectively, and the wavelength of the semiconductor laser 24a may be set to 660 nm. At this time, the beam splitter E is used as the beam splitter 74a. One of the beam splitters A, F, and P is used as the beam splitter 74b. One of the beam splitters H, K, O, P, S, U, V, X, and Y is used as the beam splitter 74c.

In the present embodiment, the wavelengths of the semiconductor lasers in the modules 174a and 174b may be set to 660 nm and 400 nm, respectively, and the wavelength of the semiconductor laser 24a may be set to 780 nm. At this time, the beam splitter F is used as the beam splitter 74a. One of the beam splitters B, D, and Q is used as the beam splitter 74b. One of the beam splitters I, L, Q, R, S, T, V, W, and Y is used as the beam splitter 74c.

In the present embodiment, the wavelengths of the semiconductor lasers in the modules 174a and 174b may be set to 400 nm and 660 nm, respectively, and the wavelength of the semiconductor laser 24a may be set to 780 nm. At this time, the beam splitter F is used as the beam splitter 74a. One of the beam splitters A, E, and R is used as the beam splitter 74b. One of the beam splitters I, L, Q, R, S, T, V, W, and Y is used as the beam splitter 74c.

Furthermore, an embodiment in which the semiconductor laser 24a and the photodetector 124a are replaced is possible. An embodiment in which one of the modules 174a and 174b, and the semiconductor laser 24a are replaced, and the other of the modules 174a and 174b and the photodetector 124a are replaced is also possible.

Since the semiconductor laser 24a is not integrated with the other light source or the photodetector in the twenty-fourth embodiment of the optical head apparatus of the present invention, the semiconductor laser 24a can be provided with a high heat dissipation property. Since the total number of the modules, light source, and photodetector is four, the optical head apparatus can be miniaturized. Furthermore, the photodetectors in the modules 174a and 174b can be designed in such a manner that sensitivities or the like with respect to the wavelengths of the semiconductor lasers in the modules 174a and 174b are optimized, and the photodetector 124a can be designed in such a manner that sensitivity or the like with respect to the wavelength of the semiconductor laser 24a is optimized.

### 10. 25th to 29th Embodiments (Type 8)

Each of twenty-fifth to twenty-ninth embodiments of an optical head apparatus of the present invention has a configuration having two light sources, one photodetector, and one module. Additionally, in the module, one light source and one photodetector are integrated.

### (25th Embodiment)

FIG. 25 shows a twenty-fifth embodiment of an optical head apparatus of the present invention. A module 175a has a constitution in which one semiconductor laser and one photodetector are integrated, and the constitution will be described later with reference to FIG. 65. A wavelength of a semiconductor laser in the module 175a is 400 nm, and wavelengths of semiconductor lasers 25a and 25b are 660 nm, 780 nm. The beam splitter A is used as a beam splitter 75a. One of the beam splitters H, P, and U is used as a beam splitter 75b. One of the beam splitters I, R, T, S, V, and Y is used as a beam splitter 75c.

Light having a wavelength of 400 nm emitted from the semiconductor laser in the module 175a is almost all reflected by the beam splitter 75a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 75a, and received by the photodetector in the module 175a.

The light having a wavelength of 660 nm emitted from the semiconductor laser 25a strikes on the beam splitter 75b as S-polarized light, and is almost all reflected, almost all transmitted through the beam splitter 75a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 75a, enters the beam splitter 75b as P-polarized light, and is almost all transmitted. The light enters the beam splitter 75c as P-polarized light, and is almost all transmitted, and received by a photodetector 125a.

The light having a wavelength of 780 nm emitted from the semiconductor laser 25b strikes on the beam splitter 75c as the S-polarized light, and is almost all reflected. Almost all the light is transmitted through the beam splitters 75b and 75a, reflected by the mirror 201, converted into circularly polarized light from linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitters 75a and 75b. The light enters the beam splitter 75c as the P-polarized light, and is almost all transmitted, and received by the photodetector 125a.

In the present embodiment, the wavelength of the semiconductor laser in the module 175a may be set to 400 nm, and the wavelengths of the semiconductor lasers 25a and 25b may be set to 780 nm and 660 nm, respectively. At this time, the beam splitter A is used as the beam splitter 75a. One of the beam splitters I, R, and T is used as the beam splitter 75b. One of the beam splitters H, P, U, S, V, and Y is used as the beam splitter 75c.

In the present embodiment, the wavelength of the semiconductor laser in the module 175a may be set to 660 nm, and the wavelengths of the semiconductor lasers 25a and 25b may be set to 400 nm and 780 nm, respectively. At this time, the beam splitter B is used as the beam splitter 75a. One of the beam splitters G, N, and U is used as the beam splitter 75b. One of the beam splitters I, Q, S, T, W, and Y is used as the beam splitter 75c.

In the present embodiment, the wavelength of the semiconductor laser in the module 175a may be set to 660 nm, and the wavelengths of the semiconductor lasers 25a and 25b may be set to 780 nm and 400 nm, respectively. At this time, the beam splitter B is used as the beam splitter 75a. One of the beam splitters I, Q, and S is used as the beam splitter 75b. One of the beam splitters G, N, U, T, W, and Y is used as the beam splitter 75c.

In the present embodiment, the wavelength of the semiconductor laser in the module 175a may be set to 780 nm, and the wavelengths of the semiconductor lasers 25a and 25b may be set to 400 nm and 660 nm, respectively. At this time, the beam splitter C is used as the beam splitter 75a. One of the beam splitters G, M, and T is used as the beam splitter 75b. One of the beam splitters H, O, S, U, X, and Y is used as the beam splitter 75c.

In the present embodiment, the wavelength of the semiconductor laser in the module 175a may be set to 780 nm, and the wavelengths of the semiconductor lasers 25a and 25b may be set to 660 nm and 400 nm, respectively. At this time, the beam splitter C is used as the beam splitter 75a. One of the beam splitters H, O, and S is used as the beam splitter 75b. One of the beam splitters G, M, T, U, X, and Y is used as the beam splitter 75c.

Furthermore, an embodiment in which the module 175a, the semiconductor lasers 25a and 25b, and the photodetector 125a are mutually replaced is possible.

In an embodiment in which the module 175a, the semiconductor lasers 25a and 25b, and the photodetector 125a are replaced with the module 175a, the semiconductor laser 25a, the photodetector 125a, and the semiconductor laser 25b, respectively, a half-wave plate for rotating the polarization direction of the light emitted from the semiconductor laser 25a, reflected by the disk 204, and transmitted through the beam splitter 75b by 90° in such a manner that the light is reflected by the beam splitter 75c is inserted between the beam splitters 75b and 75c if necessary.

In an embodiment in which the module 175a, the semiconductor lasers 25a and 25b, and the photodetector 125a are replaced with the semiconductor laser 25a or 25b, the module 175a, the photodetector 125a, and the semiconductor laser 25b or 25a, respectively, a half-wave plate for rotating the polarization direction of the light emitted from the semiconductor laser 25a or 25b, reflected by the disk 204, and transmitted through the beam splitter 75b by 90° in such a manner that the light is reflected by the beam splitter 75c is inserted between the beam splitters 75b and 75c if necessary.

In an embodiment in which the module 175a, the semiconductor lasers 25a and 25b, and the photodetector 125a are replaced with the semiconductor laser 25a or 25b, the photodetector 125a, the module 175a, and the semiconductor laser 25b or 25a, respectively, a half-wave plate for rotating the polarization direction of the light emitted from the semiconductor laser 25a or 25b, reflected by the disk 204, and transmitted through the beam splitter 75a by 90° in such a manner that the light is reflected by the beam splitter 75b is inserted between the beam splitters 75a and 75b if necessary.

In an embodiment in which the module 175a, the semiconductor lasers 25a and 25b, and the photodetector 125a are replaced with the semiconductor lasers 25b and 25a, the photodetector 125a, and the module 175a, respectively, a half-wave plate for rotating the polarization direction of the light emitted from the semiconductor lasers 25a and 25b, reflected by the disk 204, and transmitted through the beam splitter 75b by 90° in such a manner that the light is reflected by the beam splitter 75c is inserted between the beam splitters 75b and 75c if necessary.

In an embodiment in which the module 175a, the semiconductor lasers 25a and 25b, and the photodetector 125a are replaced with the module 175a, the photodetector 125a, and the semiconductor lasers 25b and 25a, respectively, a half-wave plate for rotating the polarization direction of the light emitted from the semiconductor laser 25b and reflected by the beam splitter 75c by 90° in such a manner that the light is transmitted through the beam splitter 75b is inserted between the beam splitters 75c and 75b if necessary.

In an embodiment in which the module 175a, the semiconductor lasers 25a and 25b, and the photodetector 125a are replaced with the photodetector 125a, the module 175a, and the semiconductor lasers 25b and 25a, respectively, a half-wave plate for rotating the polarization direction of the light emitted from the semiconductor laser 25b and reflected by the beam splitter 75c by 90° in such a manner that the light is transmitted through the beam splitter 75b is inserted between the beam splitters 75c and 75b if necessary.

In an embodiment in which the module 175a, the semiconductor lasers 25a and 25b, and the photodetector 125a are replaced with the photodetector 125a, the semiconductor laser 25a, the module 175a, and the semiconductor laser 25b, respectively, a half-wave plate for rotating the polarization direction of the light emitted from the semiconductor laser 25a and reflected by the beam splitter 75b by 90° in such a manner that the light is transmitted through the beam splitter 75a is inserted between the beam splitters 75b and 75a if necessary.

In an embodiment in which the module 175a, the semiconductor lasers 25a and 25b, and the photodetector 125a are replaced with the photodetector 125a, the semiconductor lasers 25a and 25b, and the module 175a, respectively, a half-wave plate for rotating the polarization direction of the light emitted from the semiconductor laser 25a and reflected by the beam splitter 75b by 90° in such a manner that the light is transmitted through the beam splitter 75a is inserted between the beam splitters 75b and 75a if necessary. A half-wave plate for rotating the polarization direction of the light emitted from the semiconductor laser 25b and reflected by the beam splitter 75c by 90° in such a manner that the light is transmitted through the beam splitter 75b is inserted between the beam splitters 75c and 75b if necessary.

In an embodiment in which the module 175a, the semiconductor lasers 25a and 25b, and the photodetector 125a are replaced with the semiconductor laser 25a, the photodetector 125a, the semiconductor laser 25b, and the module 175a, respectively, a half-wave plate for rotating the polarization direction of the light emitted from the semiconductor laser 25a, reflected by the disk 204, and transmitted through the beam splitter 75a by 90° in such a manner that the light is reflected by the beam splitter 75b is inserted between the beam splitters 75a and 75b if necessary. A half-wave plate for rotating the polarization direction of the light emitted from the semiconductor laser 25b and reflected by the beam splitter 75c by 90° in such a manner that the light is transmitted through the beam splitter 75b is inserted between the beam splitters 75c and 75b if necessary.

Since the semiconductor lasers 25a and 25b are not integrated with the other light source or the photodetector in the twenty-fifth embodiment of the optical head apparatus of the present invention, the semiconductor lasers 25a and 25b can be provided with a high heat dissipation property. Since the total number of the module, light sources, and photodetector is four, the optical head apparatus can be miniaturized. Furthermore, the photodetector in the module 175a can be designed in such a manner that sensitivity or the like with respect to the wavelength of the semiconductor laser in the module 175a is optimized, and the photodetector 125a can be designed in such a manner that sensitivity or the like with respect to the wavelengths of the semiconductor lasers 25a and 25b is optimized. (26th Embodiment)

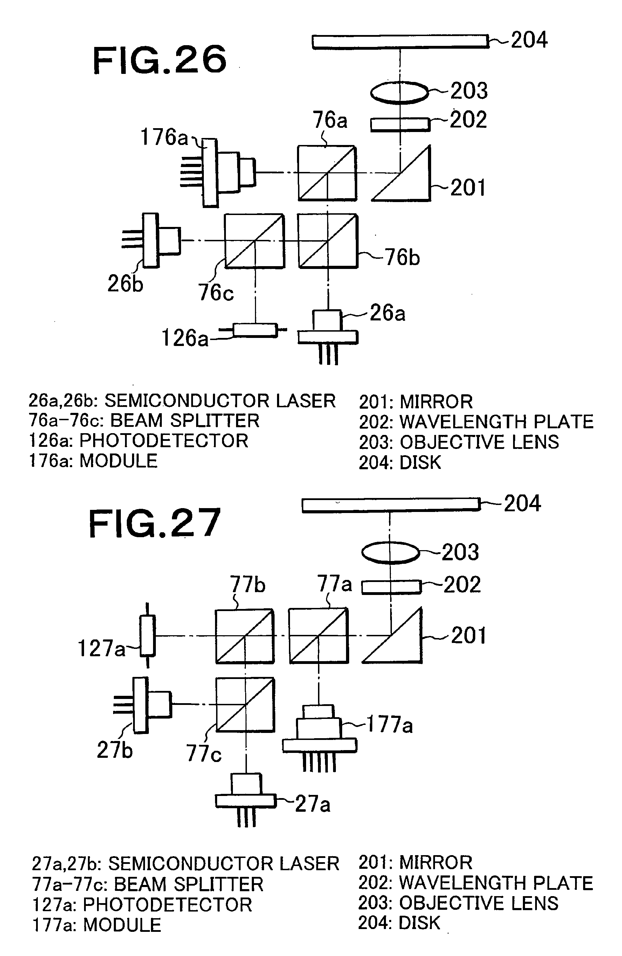

FIG. 26 shows a twenty-fifth embodiment of an optical head apparatus of the present invention. A module 176a has a constitution in which one semiconductor laser and one photodetector are integrated, and the constitution will be described later with reference to FIG. 65. A wavelength of a semiconductor laser in the module 176a is 400 nm, and wavelengths of semiconductor lasers 26a and 26b are 660 nm, 780 nm, respectively. The beam splitter D is used as a beam splitter 76a. One of the beam splitters K, O, and X is used as a beam splitter 76b. One of the beam splitters L, Q, W, S, V, and Y is used as a beam splitter 76c.

Light having a wavelength of 400 nm emitted from the semiconductor laser in the module 176a is almost all transmitted through the beam splitter 76a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitter 76a, and received by the photodetector in the module 176a.

The light having a wavelength of 660 nm emitted from the semiconductor laser 26a enters the beam splitter 76b as P-polarized light, and is almost all transmitted, almost all reflected by the beam splitter 76a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 76a, strikes on the beam splitter 76b as S-polarized light, and is almost all reflected. The light strikes on the beam splitter 76c as S-polarized light, and is almost all reflected, and received by a photodetector 126a.

The light having a wavelength of 780 nm emitted from the semiconductor laser 26b enters the beam splitter 76c as the P-polarized light, and is almost all transmitted. Almost all the light is reflected by the beam splitters 76b, 76a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitters 76a, 76b. The light strikes on the beam splitter 76c as the S-polarized light, and is almost all reflected, and received by the photodetector 126a.

In the present embodiment, the wavelength of the semiconductor laser in the module 176a may be set to 400 nm, and the wavelengths of the semiconductor lasers 26a and 26b may be set to 780 nm and 660 nm, respectively. At this time, the beam splitter D is used as the beam splitter 76a. One of the beam splitters L, Q, and W is used as the beam splitter 76b. One of the beam splitters K, O, X, S, V, and Y is used as the beam splitter 76c.

In the present embodiment, the wavelength of the semiconductor laser in the module 176a may be set to 660 nm, and the wavelengths of the semiconductor lasers 26a and 26b may be set to 400 nm and 780 nm, respectively. At this time, the beam splitter E is used as the beam splitter 76a. One of the beam splitters J, M, and X is used as the beam splitter 76b. One of the beam splitters L, R, V, T, W, and Y is used as the beam splitter 76c.

In the present embodiment, the wavelength of the semiconductor laser in the module 176a may be set to 660 nm, and the wavelengths of the semiconductor lasers 26a and 26b may be set to 780 nm and 400 nm, respectively. At this time, the beam splitter E is used as the beam splitter 76a. One of the beam splitters L, R, and V is used as the beam splitter 76b. One of the beam splitters J, M, X, T, W, and Y is used as the beam splitter 76c.

In the present embodiment, the wavelength of the semiconductor laser in the module 176a may be set to 780 nm, and the wavelengths of the semiconductor lasers 26a and 26b may be set to 400 nm and 660 nm, respectively. At this time, the beam splitter F is used as the beam splitter 76a. One of the beam splitters J, N, and W is used as the beam splitter 76b. One of the beam splitters K, P, V, U, X, and Y is used as the beam splitter 76c.

In the present embodiment, the wavelength of the semiconductor laser in the module 176a may be set to 780 nm, and the wavelengths of the semiconductor lasers 26a and 26b may be set to 660 nm and 400 nm, respectively. At this time, the beam splitter F is used as the beam splitter 76a. One of the beam splitters K, P, and V is used as the beam splitter 76b. One of the beam splitters J, N, W, U, X, and Y is used as the beam splitter 76c.

Furthermore, an embodiment in which the module 176a, the semiconductor lasers 26a and 26b, and the photodetector 126a are mutually replaced is possible.

In an embodiment in which the module 176a, the semiconductor lasers 26a and 26b, and the photodetector 126a are replaced with the module 176a, the semiconductor laser 26a, the photodetector 126a, and the semiconductor laser 26b, respectively, a half-wave plate for rotating the polarization direction of the light emitted from the semiconductor laser 26a and reflected by the disk 204 and the beam splitter 76b by 90° in such a manner that the light is transmitted through the beam splitter 76c is inserted between the beam splitters 76b and 76c if necessary.

In an embodiment in which the module 176a, the semiconductor lasers 26a and 26b, and the photodetector 126a are replaced with the semiconductor laser 26a or 26b, the module 176a, the photodetector 126a, and the semiconductor laser 26b or 26a, respectively, a half-wave plate for rotating the polarization direction of the light emitted from the semiconductor laser 26a or 26b and reflected by the disk 204 and the beam splitter 76b by 90° in such a manner that the light is transmitted through the beam splitter 76c is inserted between the beam splitters 76b and 76c if necessary.

In an embodiment in which the module 176a, the semiconductor lasers 26a and 26b, and the photodetector 126a are replaced with the semiconductor laser 26a or 26b, the photodetector 126a, the module 176a, and the semiconductor laser 26b or 26a, respectively, a half-wave plate for rotating the polarization direction of the light emitted from the semiconductor laser 26a or 26b and reflected by the disk 204 and the beam splitter 76a by 90° in such a manner that the light is transmitted through the beam splitter 76b is inserted between the beam splitters 76a and 76b if necessary.

In an embodiment in which the module 176a, the semiconductor lasers 26a and 26b, and the photodetector 126a are replaced with the semiconductor lasers 26b and 26a, the photodetector 126a, and the module 176a, respectively, a half-wave plate for rotating the polarization direction of the light emitted from the semiconductor lasers 26a and 26b and reflected by the disk 204 and the beam splitter 76b by 90° in such a manner that the light is transmitted through the beam splitter 76c is inserted between the beam splitters 76b and 76c if necessary.

In an embodiment in which the module 176a, the semiconductor lasers 26a and 26b, and the photodetector 126a are replaced with the module 176a, the photodetector 126a, and the semiconductor lasers 26b and 26a, respectively, a half-wave plate for rotating the polarization direction of the light emitted from the semiconductor laser 26b and transmitted through the beam splitter 76c by 90° in such a manner that the light is reflected by the beam splitter 76b is inserted between the beam splitters 76c and 76b if necessary.

In an embodiment in which the module 176a, the semiconductor lasers 26a and 26b, and the photodetector 126a are replaced with the photodetector 126a, the module 176a, and the semiconductor lasers 26b and 26a, respectively, a half-wave plate for rotating the polarization direction of the light emitted from the semiconductor laser 26b and transmitted through the beam splitter 76c by 90° in such a manner that the light is reflected by the beam splitter 76b is inserted between the beam splitters 76c and 76b if necessary.

In an embodiment in which the module 176a, the semiconductor lasers 26a and 26b, and the photodetector 126a are replaced with the photodetector 126a, the semiconductor laser 26a, the module 176a, and the semiconductor laser 26b, respectively, a half-wave plate for rotating the polarization direction of the light emitted from the semiconductor laser 26a and transmitted through the beam splitter 76b by 90° in such a manner that the light is reflected by the beam splitter 76a is inserted between the beam splitters 76b and 76a if necessary.

In an embodiment in which the module 176a, the semiconductor lasers 26a and 26b, and the photodetector 126a are replaced with the photodetector 126a, the semiconductor lasers 26a and 26b, and the module 176a, respectively, a half-wave plate for rotating the polarization direction of the light emitted from the semiconductor laser 26a and transmitted through the beam splitter 76b by 90° in such a manner that the light is reflected by the beam splitter 76a is inserted between the beam splitters 76b and 76a if necessary. A half-wave plate for rotating the polarization direction of the light emitted from the semiconductor laser 26b and transmitted through the beam splitter 76c by 90° in such a manner that the light is reflected by the beam splitter 76b is inserted between the beam splitters 76c and 76b if necessary.

In an embodiment in which the module 176a, the semiconductor lasers 26a and 26b, and the photodetector 126a are replaced with the semiconductor laser 26a, the photodetector 126a, the semiconductor laser 26b, and the module 176a, respectively, a half-wave plate for rotating the polarization direction of the light emitted from the semiconductor laser 26a and reflected by the disk 204 and the beam splitter 76a by 90° in such a manner that the light is transmitted through the beam splitter 76b is inserted between the beam splitters 76a and 76b if necessary. A half-wave plate for rotating the polarization direction of the light emitted from the semiconductor laser 26b and transmitted through the beam splitter 76c by 90° in such a manner that the light is reflected by the beam splitter 76b is inserted between the beam splitters 76c and 76b if necessary.

Since the semiconductor lasers 26a and 26b are not integrated with the other light source or the photodetector in the twenty-sixth embodiment of the optical head apparatus of the present invention, the semiconductor lasers 26a and 26b can be provided with high heat dissipation properties. Since the total number of the module, light sources, and photodetector is four, the optical head apparatus can be miniaturized. Furthermore, the photodetector in the module 176a can be designed in such a manner that sensitivity or the like with respect to the wavelength of the semiconductor laser in the module 176a is optimized, and the photodetector 126a can be designed in such a manner that sensitivity or the like with respect to the wavelengths of the semiconductor lasers 26a and 26b is optimized.

### (27th Embodiment)

FIG. 27 shows a twenty-seventh embodiment of an optical head apparatus of the present invention. A module 177a has a constitution in which one semiconductor laser and one photodetector are integrated, and the constitution will be described later with reference to FIG. 65. A wavelength of a semiconductor laser in the module 177a is 400 nm, and wavelengths of semiconductor lasers 27a and 27b are 660 nm and 780 nm, respectively. The beam splitter A is used as a beam splitter 77a. One of the beam splitters S, V, and Y is used as a beam splitter 77b. One of the beam splitters C, E, M, I, R, T, K, O, X, S, V, and Y is used as a beam splitter 77c.

Light having a wavelength of 400 nm emitted from the semiconductor laser in the module 177a is almost all reflected by the beam splitter 77a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 77a, and received by the photodetector in the module 177a.

The light having a wavelength of 660 nm emitted from the semiconductor laser 27a is almost all transmitted through the beam splitter 77c, strikes on the beam splitter 77b as S-polarized light, and is almost all reflected, almost all transmitted through the beam splitter 77a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 77a, enters the beam splitter 77b as P-polarized light, and is almost all transmitted, and received by a photodetector 127a.

When one of the beam splitters K, O, X, S, V, and Y is used as the beam splitter 77c, a half-wave plate for rotating a polarization direction of light emitted from the semiconductor laser 27a and transmitted through the beam splitter 77c by 90° in such a manner that the light is reflected by the beam splitter 77b is inserted between the beam splitters 77c and 77b.

The light having a wavelength of 780 nm emitted from the semiconductor laser 27b strikes on the beam splitter 77c as the S-polarized light, and is almost all reflected. The light strikes on the beam splitter 77b as the S-polarized light, and is almost all reflected. Almost all the light is transmitted through the beam splitter 77a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 77a. The light enters the beam splitter 77b as the P-polarized light, and is almost all transmitted, and received by the photodetector 127a.

In the present embodiment, the wavelength of the semiconductor laser in the module 177a may be set to 400 nm, and the wavelengths of the semiconductor lasers 27a and 27b may be set to 780 nm and 660 nm, respectively. At this time, the beam splitter A is used as the beam splitter 77a. One of the beam splitters S, V, and Y is used as the beam splitter 77b. One of the beam splitters B, F, N, H, P, U, L, Q, W, S, V, and Y is used as the beam splitter 77c.

In the present embodiment, the wavelength of the semiconductor laser in the module 177a may be set to 660 nm, and the wavelengths of the semiconductor lasers 27a and 27b may be set to 400 nm and 780 nm, respectively. At this time, the beam splitter B is used as the beam splitter 77a. One of the beam splitters T, W, and Y is used as the beam splitter 77b. One of the beam splitters C, D, O, I, Q, S, J, M, X, T, W, and Y is used as the beam splitter 77c.

In the present embodiment, the wavelength of the semiconductor laser in the module 177a may be set to 660 nm, and the wavelengths of the semiconductor lasers 27a and 27b may be set to 780 nm and 400 nm, respectively. At this time, the beam splitter B is used as the beam splitter 77a. One of the beam splitters T, W, and Y is used as the beam splitter 77b. One of the beam splitters A, F, P, G, N, U, L, R, V, T, W, and Y is used as the beam splitter 77c.

In the present embodiment, the wavelength of the semiconductor laser in the module 177a may be set to 780 nm, and the wavelengths of the semiconductor lasers 27a and 27b may be set to 400 nm and 660 nm, respectively. At this time, the beam splitter C is used as the beam splitter 77a. One of the beam splitters U, X, and Y is used as the beam splitter 77b. One of the beam splitters B, D, Q, H, O, S, J, N, W, U, X, and Y is used as the beam splitter 77c.

In the present embodiment, the wavelength of the semiconductor laser in the module 177a may be set to 780 nm, and the wavelengths of the semiconductor lasers 27a and 27b may be set to 660 nm and 400 nm, respectively. At this time, the beam splitter C is used as the beam splitter 77a. One of the beam splitters U, X, and Y is used as the beam splitter 77b. One of the beam splitters A, E, R, G, M, T, K, P, V, U, X, and Y is used as the beam splitter 77c.

Furthermore, an embodiment in which the module 177a, the semiconductor lasers 27a and 27b, and the photodetector 127a are mutually replaced is possible.

In an embodiment in which the module 177a, the semiconductor lasers 27a and 27b, and the photodetector 127a are replaced with the module 177a, the photodetector 127a, and the semiconductor lasers 27b and 27a, respectively, a half-wave plate for rotating the polarization direction of the light emitted from the semiconductor laser 27a and reflected by the disk 204 and the beam splitter 77b by 90° in such a manner that the light is transmitted through the beam splitter 77c is inserted between the beam splitters 77b and 77c if necessary.

In an embodiment in which the module 177a, the semiconductor lasers 27a and 27b, and the photodetector 127a are replaced with the semiconductor lasers 27b and 27a, the photodetector 127a, and the module 177a, respectively, a half-wave plate for rotating the polarization direction of the light emitted from the semiconductor laser 27b, reflected by the disk 204, and transmitted through the beam splitter 77a by 90° in such a manner that the light is reflected by the beam splitter 77b is inserted between the beam splitters 77a and 77b if necessary.

In an embodiment in which the module 177a, the semiconductor lasers 27a and 27b, and the photodetector 127a are replaced with the semiconductor laser 27a or 27b, the module 177a, the photodetector 127a, and the semiconductor laser 27b or 27a, respectively, a half-wave plate for rotating the polarization direction of the light emitted from the semiconductor laser 27a or 27b, reflected by the disk 204, and transmitted through the beam splitter 77a by 90° in such a manner that the light is reflected by the beam splitter 77b is inserted between the beam splitters 77a and 77b if necessary.

In an embodiment in which the module 177a, the semiconductor lasers 27a and 27b, and the photodetector 127a are replaced with the semiconductor laser 27a, the photodetector 127a, the semiconductor laser 27b, and the module 177a, respectively, a half-wave plate for rotating the polarization direction of the light emitted from the semiconductor lasers 27a, reflected by the disk 204, and transmitted through the beam splitter 77a by 90° in such a manner that the light is reflected by the beam splitter 77b is inserted between the beam splitters 77a and 77b if necessary. A half-wave plate for rotating the polarization direction of the light emitted from the semiconductor lasers 27a and reflected by the disk 204 and the beam splitter 77b by 90° in such a manner that the light is transmitted through the beam splitter 77c is inserted between the beam splitters 77b and 77c if necessary.

In an embodiment in which the module 177a, the semiconductor lasers 27a and 27b, and the photodetector 127a are replaced with the semiconductor laser 27a or 27b, the photodetector 127a, the module 177a, and the semiconductor lasers 27b, 27a, respectively, a half-wave plate for rotating the polarization direction of the light emitted from the semiconductor laser 27a or 27b, reflected by the disk 204, and transmitted through the beam splitter 77a by 90° in such a manner that the light is reflected by the beam splitter 77b is inserted between the beam splitters 77a and 77b if necessary. A half-wave plate for rotating the polarization direction of the light emitted from the semiconductor lasers 27a, 27b and reflected by the disk 204 and the beam splitter 77b by 90° in such a manner that the light is transmitted through the beam splitter 77c is inserted between the beam splitters 77b and 77c if necessary.

In an embodiment in which the module 177a, the semiconductor lasers 27a and 27b, and the photodetector 127a are replaced with the semiconductor lasers 27b and 27a, the module 177a, and the photodetector 127a, respectively, a half-wave plate for rotating the polarization direction of the light emitted from the semiconductor laser 27a and transmitted through the beam splitter 77c by 90° in such a manner that the light is reflected by the beam splitter 77b is inserted between the beam splitters 77c and 77b if necessary.

In an embodiment in which the module 177a, the semiconductor lasers 27a and 27b, and the photodetector 127a are replaced with the photodetector 127a, the module 177a, and the semiconductor lasers 27b and 27a, respectively, a half-wave plate for rotating the polarization direction of the light emitted from the semiconductor laser 27b and reflected by the beam splitter 77b by 90° in such a manner that the light is transmitted through the beam splitter 77a is inserted between the beam splitters 77b and 77a if necessary.

In an embodiment in which the module 177a, the semiconductor lasers 27a and 27b, and the photodetector 127a are replaced with the photodetector 127a, the semiconductor laser 27a, the module 177a, and the semiconductor laser 27b, respectively, a half-wave plate for rotating the polarization direction of the light emitted from the semiconductor laser 27a and transmitted through the beam splitter 77c by 90° in such a manner that the light is reflected by the beam splitter 77b is inserted between the beam splitters 77c and 77b if necessary. A half-wave plate for rotating the polarization direction of the light emitted from the semiconductor laser 27a and reflected by the beam splitter 77b by 90° in such a manner that the light is transmitted through the beam splitter 77a is inserted between the beam splitters 77b and 77a if necessary.

In an embodiment in which the module 177a, the semiconductor lasers 27a and 27b, and the photodetector 127a are replaced with the photodetector 127a, the semiconductor lasers 27a, 27b, and the module 177a, respectively, a half-wave plate for rotating the polarization direction of the light emitted from the semiconductor laser 27a and transmitted through the beam splitter 77c by 90° in such a manner that the light is reflected by the beam splitter 77b is inserted between the beam splitters 77c and 77b if necessary. A half-wave plate for rotating the polarization direction of the light emitted from the semiconductor lasers 27a and 27b, and reflected by the beam splitter 77b by 90° in such a manner that the light is transmitted through the beam splitter 77a is inserted between the beam splitters 77b and 77a if necessary.

Since the semiconductor lasers 27a and 27b are not integrated with the other light source or the photodetector in the twenty-seventh embodiment of the optical head apparatus of the present invention, the semiconductor lasers 27a and 27b can be provided with high heat dissipation properties. Since the total number of the module, light sources, and photodetector is four, the optical head apparatus can be miniaturized. Furthermore, the photodetector in the module 177a can be designed in such a manner that sensitivity or the like with respect to the wavelength of the semiconductor laser in the module 177a is optimized, and the photodetector 127a can be designed in such a manner that sensitivity or the like with respect to the wavelengths of the semiconductor lasers 27a and 27b is optimized.

### (28th Embodiment)

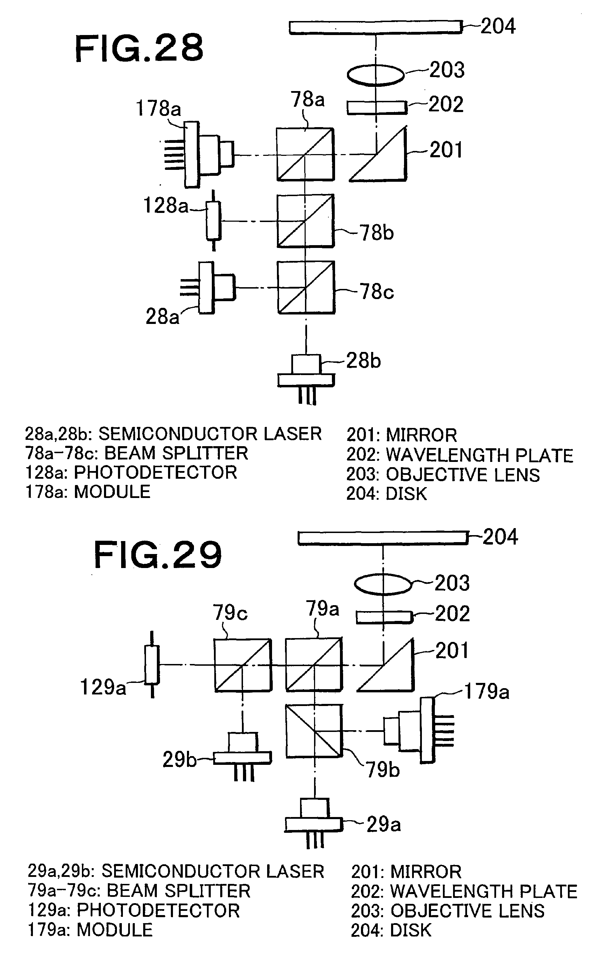

FIG. 28 shows a twenty-eighth embodiment of an optical head apparatus of the present invention. A module 178a has a constitution in which one semiconductor laser and one photodetector are integrated, and the constitution will be described later with reference to FIG. 65. A wavelength of a semiconductor laser in the module 178a is 400 nm, and wavelengths of semiconductor lasers 28a and 28b are 660 nm and 780 nm, respectively. The beam splitter D is used as a beam splitter 78a. One of the beam splitters S, V, and Y is used as a beam splitter 78b. One of the beam splitters B, F, N, L, Q, W, H, P, U, S, V, and Y is used as a beam splitter 78c.

Light having a wavelength of 400 nm emitted from the semiconductor laser in the module 178a is almost all transmitted through the beam splitter 78a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitter 78a, and received by the photodetector in the module 178a.

The light having a wavelength of 660 nm emitted from the semiconductor laser 28a is almost all reflected by the beam splitter 78c, enters the beam splitter 78b as P-polarized light, and is almost all transmitted, almost all reflected by the beam splitter 78a, reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 78a, strikes on the beam splitter 78b as S-polarized light, and is almost all reflected, and received by a photodetector 128a.

When one of the beam splitters H, P, U, S, V, and Y is used as the beam splitter 78c, a half-wave plate for rotating a polarization direction of light emitted from the semiconductor laser 28a and reflected by the beam splitter 78c by 90° in such a manner that the light is transmitted through the beam splitter 78b is inserted between the beam splitters 78c and 78b.

The light having a wavelength of 780 nm emitted from the semiconductor laser 28b enters the beam splitter 78c as the P-polarized light, and is almost all transmitted. The light enters the beam splitter 78b as the P-polarized light, and is almost all transmitted. Almost all the light is reflected by the beam splitter 78a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 78a. The light strikes on the beam splitter 78b as the S-polarized light, and is almost all reflected, and received by the photodetector 128a.

In the present embodiment, the wavelength of the semiconductor laser in the module 178a may be set to 400 nm, and the wavelengths of the semiconductor lasers 28a and 28b may be set to 780 nm and 660 nm, respectively. At this time, the beam splitter D is used as the beam splitter 78a. One of the beam splitters S, V, and Y is used as the beam splitter 78b. One of the beam splitters C, E, M, K, O, X, I, R, T, S, V, and Y is used as the beam splitter 78c.

In the present embodiment, the wavelength of the semiconductor laser in the module 178a may be set to 660 nm, and the wavelengths of the semiconductor lasers 28a and 28b may be set to 400 nm and 780 nm, respectively. At this time, the beam splitter E is used as the beam splitter 78a. One of the beam splitters T, W, and Y is used as the beam splitter 78b. One of the beam splitters A, F, P, L, R, V, G, N, U, T, W, and Y is used as the beam splitter 78c.

In the present embodiment, the wavelength of the semiconductor laser in the module 178a may be set to 660 nm, and the wavelengths of the semiconductor lasers 28a and 28b may be set to 780 nm and 400 nm, respectively. At this time, the beam splitter E is used as the beam splitter 78a. One of the beam splitters T, W, and Y is used as the beam splitter 78b. One of the beam splitters C, D, O, J, M, X, I, Q, S, T, W, and Y is used as the beam splitter 78c.

In the present embodiment, the wavelength of the semiconductor laser in the module 178a may be set to 780 nm, and the wavelengths of the semiconductor lasers 28a and 28b may be set to 400 nm and 660 nm, respectively. At this time, the beam splitter F is used as the beam splitter 78a. One of the beam splitters U, X, and Y is used as the beam splitter 78b. One of the beam splitters A, E, R, K, P, V, G, M, T, U, X, and Y is used as the beam splitter 78c.

In the present embodiment, the wavelength of the semiconductor laser in the module 178a may be set to 780 nm, and the wavelengths of the semiconductor lasers 28a and 28b may be set to 660 nm and 400 nm, respectively. At this time, the beam splitter F is used as the beam splitter 78a. One of the beam splitters U, X, and Y is used as the beam splitter 78b. One of the beam splitters B, D, Q, J, N, W, H, O, S, U, X, and Y is used as the beam splitter 78c.

Furthermore, an embodiment in which the module 178a, the semiconductor lasers 28a and 28b, and the photodetector 128a are mutually replaced is possible.

In an embodiment in which the module 178a, the semiconductor lasers 28a and 28b, and the photodetector 128a are replaced with the module 178a, the photodetector 128a, and the semiconductor lasers 28b and 28a, respectively, a half-wave plate for rotating the polarization direction of the light emitted from the semiconductor laser 28a, reflected by the disk 204, and transmitted through the beam splitter 78b by 90° in such a manner that the light is reflected by the beam splitter 78c is inserted between the beam splitters 78b and 78c if necessary.

In an embodiment in which the module 178a, the semiconductor lasers 28a and 28b, and the photodetector 128a are replaced with the semiconductor lasers 28b and 28a, the photodetector 128a, and the module 178a, respectively, a half-wave plate for rotating the polarization direction of the light emitted from the semiconductor laser 28b and reflected by the disk 204 and the beam splitter 78a by 90° in such a manner that the light is transmitted through the beam splitter 78b is inserted between the beam splitters 78a and 78b if necessary.

In an embodiment in which the module 178a, the semiconductor lasers 28a, 28b, and the photodetector 128a are replaced with the semiconductor laser 28a or 28b, the module 178a, the photodetector 128a, and the semiconductor laser 28b or 28a, respectively, a half-wave plate for rotating the polarization direction of the light emitted from the semiconductor laser 28a or 28b and reflected by the disk 204 and the beam splitter 78a by 90° in such a manner that the light is transmitted through the beam splitter 78b is inserted between the beam splitters 78a and 78b if necessary.

In an embodiment in which the module 178a, the semiconductor lasers 28a and 28b, and the photodetector 128a are replaced with the semiconductor laser 28a, the photodetector 128a, the semiconductor laser 28b, and the module 178a, respectively, a half-wave plate for rotating the polarization direction of the light emitted from the semiconductor laser 28a and reflected by the disk 204 and the beam splitter 78a by 90° in such a manner that the light is transmitted through the beam splitter 78b is inserted between the beam splitters 78a and 78b if necessary. A half-wave plate for rotating the polarization direction of the light emitted from the semiconductor laser 28a, reflected by the disk 204, and transmitted through the beam splitter 78b by 90° in such a manner that the light is reflected by the beam splitter 78c is inserted between the beam splitters 78b and 78c if necessary.

In an embodiment in which the module 178a, the semiconductor lasers 28a and 28b, and the photodetector 128a are replaced with the semiconductor laser 28a or 28b, the photodetector 128a, the module 178a, and the semiconductor laser 28b or 28a, respectively, a half-wave plate for rotating the polarization direction of the light emitted from the semiconductor laser 28a or 28b and reflected by the disk 204 and the beam splitter 78a by 90° in such a manner that the light is transmitted through the beam splitter 78b is inserted between the beam splitters 78a and 78b if necessary. A half-wave plate for rotating the polarization direction of the light emitted from the semiconductor lasers 28a and 28b, reflected by the disk 204, and transmitted through the beam splitter 78b by 90° in such a manner that the light is reflected by the beam splitter 78c is inserted between the beam splitters 78b and 78c if necessary.

In an embodiment in which the module 178a, the semiconductor lasers 28a and 28b, and the photodetector 128a are replaced with the semiconductor lasers 28b and 28a, the module 178a, and the photodetector 128a, respectively, a half-wave plate for rotating the polarization direction of the light emitted from the semiconductor laser 28a and reflected by the beam splitter 78c by 90° in such a manner that the light is transmitted through the beam splitter 78b is inserted between the beam splitters 78c and 78b if necessary.

In an embodiment in which the module 178a, the semiconductor lasers 28a and 28b, and the photodetector 128a are replaced with the photodetector 128a, the module 178a, and the semiconductor lasers 28b and 28a, respectively, a half-wave plate for rotating the polarization direction of the light emitted from the semiconductor laser 28b and transmitted through the beam splitter 78b by 90° in such a manner that the light is reflected by the beam splitter 78a is inserted between the beam splitters 78b and 78a if necessary.

In an embodiment in which the module 178a, the semiconductor lasers 28a and 28b, and the photodetector 128a are replaced with the photodetector 128a, the semiconductor laser 28a, the module 178a, and the semiconductor laser 28b, respectively, a half-wave plate for rotating the polarization direction of the light emitted from the semiconductor laser 28a and reflected by the beam splitter 78c by 90° in such a manner that the light is transmitted through the beam splitter 78b is inserted between the beam splitters 78c and 78b if necessary. A half-wave plate for rotating the polarization direction of the light emitted from the semiconductor laser 28a and transmitted through the beam splitter 78b by 90° in such a manner that the light is reflected by the beam splitter 78a is inserted between the beam splitters 78b and 78a if necessary.

In an embodiment in which the module 178a, the semiconductor lasers 28a and 28b, and the photodetector 128a are replaced with the photodetector 128a, the semiconductor lasers 28a, 28b, and the module 178a, respectively, a half-wave plate for rotating the polarization direction of the light emitted from the semiconductor laser 28a and reflected by the beam splitter 78c by 90° in such a manner that the light is transmitted through the beam splitter 78b is inserted between the beam splitters 78c and 78b if necessary. A half-wave plate for rotating the polarization direction of the light emitted from the semiconductor lasers 28a and 28b, and transmitted through the beam splitter 78b by 90° in such a manner that the light is reflected by the beam splitter 78a is inserted between the beam splitters 78b and 78a if necessary.

Since the semiconductor lasers 28a and 28b are not integrated with the other light source or the photodetector in the twenty-eighth embodiment of the optical head apparatus of the present invention, the semiconductor lasers 28a and 28b can be provided with high heat dissipation properties. Since the total number of the module, light sources, and photodetector is four, the optical head apparatus can be miniaturized. Furthermore, the photodetector in the module 178a can be designed in such a manner that sensitivity or the like with respect to the wavelength of the semiconductor laser in the module 178a is optimized, and the photodetector 128a can be designed in such a manner that sensitivity or the like with respect to the wavelengths of the semiconductor lasers 28a and 28b is optimized.

### (29th Embodiment)

FIG. 29 shows a twenty-ninth embodiment of an optical head apparatus of the present invention. A module 179a has a constitution in which one semiconductor laser and one photodetector are integrated, and the constitution will be described later with reference to FIG. 65. A wavelength of a semiconductor laser in the module 179a is 400 nm, and wavelengths of semiconductor lasers 29a and 29b are 660 nm, 780 nm. The beam splitter P is used as a beam splitter 79a. One of the beam splitters A, E, R, K, P, and V is used as a beam splitter 79b. One of the beam splitters I, R, T, S, V, and Y is used as a beam splitter 79c.

Light having a wavelength of 400 nm emitted from the semiconductor laser in the module 179a is almost all reflected by the beam splitter 79b, reflected by the beam splitter 79a and a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 79a and the beam splitter 79b, and received by the photodetector in the module 179a.

The light having a wavelength of 660 nm emitted from the semiconductor laser 29a is almost all transmitted through the beam splitter 79b, strikes on the beam splitter 79a as S-polarized light, and is almost all reflected, almost all reflected by the mirror 201, converted into the circularly polarized light from the linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. The light enters the beam splitter 79a as P-polarized light, and is almost all transmitted. The light enters the beam splitter 79c as the P-polarized light, and is almost all transmitted, and received by a photodetector 129a.

When one of the beam splitters K, P, and V is used as the beam splitter 79b, a half-wave plate for rotating a polarization direction of light emitted from the semiconductor laser 29a and transmitted through the beam splitter 79b by 90° in such a manner that the light is reflected by the beam splitter 79a is inserted between the beam splitters 79b and 79a.

The light having a wavelength of 780 nm emitted from the semiconductor laser 29b strikes on the beam splitter 79c as the S-polarized light, and is almost all reflected. Almost all the light is transmitted through the beam splitter 79a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 79a. The light enters the beam splitter 79c as the P-polarized light, and is almost all transmitted, and received by the photodetector 129a.

In the present embodiment, the wavelength of the semiconductor laser in the module 179a may be set to 400 nm, and the wavelengths of the semiconductor lasers 29a and 29b may be set to 780 nm and 660 nm, respectively. At this time, the beam splitter R is used as the beam splitter 79a. One of the beam splitters A, F, P, L, R, and V is used as the beam splitter 79b. One of the beam splitters H, P, U, S, V, and Y is used as the beam splitter 79c.

In the present embodiment, the wavelength of the semiconductor laser in the module 179a may be set to 660 nm, and the wavelengths of the semiconductor lasers 29a and 29b may be set to 400 nm and 780 nm, respectively. At this time, the beam splitter N is used as the beam splitter 79a. One of the beam splitters B, D, Q, J, N, and W is used as the beam splitter 79b. One of the beam splitters I, Q, S, T, W, and Y is used as the beam splitter 79c.

In the present embodiment, the wavelength of the semiconductor laser in the module 179a may be set to 660 nm, and the wavelengths of the semiconductor lasers 29a and 29b may be set to 780 nm and 400 nm, respectively. At this time, the beam splitter Q is used as the beam splitter 79a. One of the beam splitters B, F, N, L, Q, and W is used as the beam splitter 79b. One of the beam splitters G, N, U, T, W, and Y is used as the beam splitter 79c.

In the present embodiment, the wavelength of the semiconductor laser in the module 179a may be set to 780 nm, and the wavelengths of the semiconductor lasers 29a and 29b may be set to 400 nm and 660 nm, respectively. At this time, the beam splitter M is used as the beam splitter 79a. One of the beam splitters C, D, O, J, M, and X is used as the beam splitter 79b. One of the beam splitters H, O, S, U, X, and Y is used as the beam splitter 79c.

In the present embodiment, the wavelength of the semiconductor laser in the module 179a may be set to 780 nm, and the wavelengths of the semiconductor lasers 29a and 29b may be set to 660 nm and 400 nm, respectively. At this time, the beam splitter O is used as the beam splitter 79a. One of the beam splitters C, E, M, K, O, and X is used as the beam splitter 79b. One of the beam splitters G, M, T, U, X, and Y is used as the beam splitter 79c.

Furthermore, an embodiment in which the module 179a, the semiconductor lasers 29a and 29b, and the photodetector 129a are mutually replaced is possible.

In an embodiment in which the module 179a, the semiconductor lasers 29a and 29b, and the photodetector 129a are replaced with the semiconductor laser 29a or 29b, the module 179a, the photodetector 129a, and the semiconductor laser 29b or 29a, respectively, a half-wave plate for rotating the polarization direction of the light emitted from the semiconductor laser 29a or 29b, reflected by the disk 204, and transmitted through the beam splitter 79b by 90° in such a manner that the light is reflected by the beam splitter 79c is inserted between the beam splitters 79a and 79c if necessary.

In an embodiment in which the module 179a, the semiconductor lasers 29a and 29b, and the photodetector 129a are replaced with the semiconductor laser 29a or 29b, the photodetector 129a, the module 179a, and the semiconductor laser 29b or 29a, respectively, a half-wave plate for rotating the polarization direction of the light emitted from the semiconductor laser 29b or 29a and reflected by the disk 204 and the beam splitter 79a by 90° in such a manner that the light is transmitted through the beam splitter 79b is inserted between the beam splitters 79a and 79b if necessary.

In an embodiment in which the module 179a, the semiconductor lasers 29a and 29b, and the photodetector 129a are replaced with the photodetector 129a, the semiconductor lasers 29a and 29b, and the module 179a, respectively, a half-wave plate for rotating the polarization direction of the light emitted from the semiconductor laser 29b and reflected by the 79c by 90° in such a manner that the light is transmitted through the beam splitter 79a is inserted between the beam splitters 79c and 79a if necessary.

In an embodiment in which the module 179a, the semiconductor lasers 29a and 29b, and the photodetector 129a are replaced with the semiconductor lasers 29b and 29a, the module 179a, and the photodetector 129a, respectively, a half-wave plate for rotating the polarization direction of the light emitted from the semiconductor laser 29a and transmitted through the beam splitter 79a by 90° in such a manner that the light is reflected by the beam splitter 79a is inserted between the beam splitters 79b and 79a if necessary.

In an embodiment in which the module 179a, the semiconductor lasers 29a and 29b, and the photodetector 129a are replaced with the photodetector 129a, the module 179a, and the semiconductor lasers 29b and 29a, respectively, a half-wave plate for rotating the polarization direction of the light emitted from the semiconductor laser 29b and reflected by the beam splitter 79c by 90° in such a manner that the light is transmitted through the beam splitter 79a is inserted between the beam splitters 79c and 79a if necessary.

In an embodiment in which the module 179a, the semiconductor lasers 29a and 29b, and the photodetector 129a are replaced with the module 179a, the semiconductor laser 29a, the photodetector 129a, and the semiconductor laser 29b, respectively, a half-wave plate for rotating the polarization direction of the light emitted from the semiconductor laser 29a, reflected by the disk 204, and transmitted through the beam splitter 79a by 90° in such a manner that the light is reflected by the beam splitter 79c is inserted between the beam splitters 79a and 79c if necessary. A half-wave plate for rotating the polarization direction of the light emitted from the semiconductor laser 29a and transmitted through the beam splitter 79b by 90° in such a manner that the light is reflected by the beam splitter 79a is inserted between the beam splitters 79b and 79a if necessary.

In an embodiment in which the module 179a, the semiconductor lasers 29a and 29b, and the photodetector 129a are replaced with the semiconductor laser 29a, the photodetector 129a, the semiconductor laser 29b, and the module 179a, respectively, a half-wave plate for rotating the polarization direction of the light emitted from the semiconductor laser 29b and reflected by the disk 204 and the beam splitter 79a by 90° in such a manner that the light is transmitted through the beam splitter 79b is inserted between the beam splitters 79a and 79b if necessary. A half-wave plate for rotating the polarization direction of the light emitted from the semiconductor laser 29b and reflected by the beam splitter 79c by 90° in such a manner that the light is transmitted through the beam splitter 79a is inserted between the beam splitters 79c and 79a if necessary.

In an embodiment in which the module 179a, the semiconductor lasers 29a and 29b, and the photodetector 129a are replaced with the semiconductor lasers 29b and 29a, the photodetector 129a, and the module 179a, respectively, a half-wave plate for rotating the polarization direction of the light emitted from the semiconductor lasers 29a, 29b, reflected by the disk 204, and transmitted through the beam splitter 79a by 90° in such a manner that the light is reflected by the beam splitter 79c is inserted between the beam splitters 79a and 79c if necessary. A half-wave plate for rotating the polarization direction of the light emitted from the semiconductor laser 29a and transmitted through the beam splitter 79b by 90° in such a manner that the light is reflected by the beam splitter 79a is inserted between the beam splitters 79b and 79a if necessary.

In an embodiment in which the module 179a, the semiconductor lasers 29a and 29b, and the photodetector 129a are replaced with the module 179a, the photodetector 129a, and the semiconductor lasers 29b and 29a, respectively, a half-wave plate for rotating the polarization direction of the light emitted from the semiconductor lasers 29a, 29b and reflected by the disk 204 and the beam splitter 79a by 90° in such a manner that the light is transmitted through the beam splitter 79b is inserted between the beam splitters 79a and 79b if necessary. A half-wave plate for rotating the polarization direction of the light emitted from the semiconductor laser 29b and reflected by the beam splitter 79c by 90° in such a manner that the light is transmitted through the beam splitter 79a is inserted between the beam splitters 79c and 79a if necessary.

Since the semiconductor lasers 29a and 29b are not integrated with the other light source or the photodetector in the twenty-ninth embodiment of the optical head apparatus of the present invention, the semiconductor lasers 29a and 29b can be provided with high heat dissipation properties. Since the total number of the module, light sources, and photodetector is four, the optical head apparatus can be miniaturized. Furthermore, the photodetector in the module 179a can be designed in such a manner that sensitivity or the like with respect to the wavelength of the semiconductor laser in the module 179a is optimized, and the photodetector 129a can be designed in such a manner that sensitivity or the like with respect to the wavelengths of the semiconductor lasers 29a and 29b is optimized.

### 11. 30th and 31st Embodiments (Type 9)

Each of thirtieth and thirty-first embodiments of an optical head apparatus of the present invention has a configuration having three modules. Additionally, in each of the modules, one light source and one photodetector are integrated.

### (30th Embodiment)

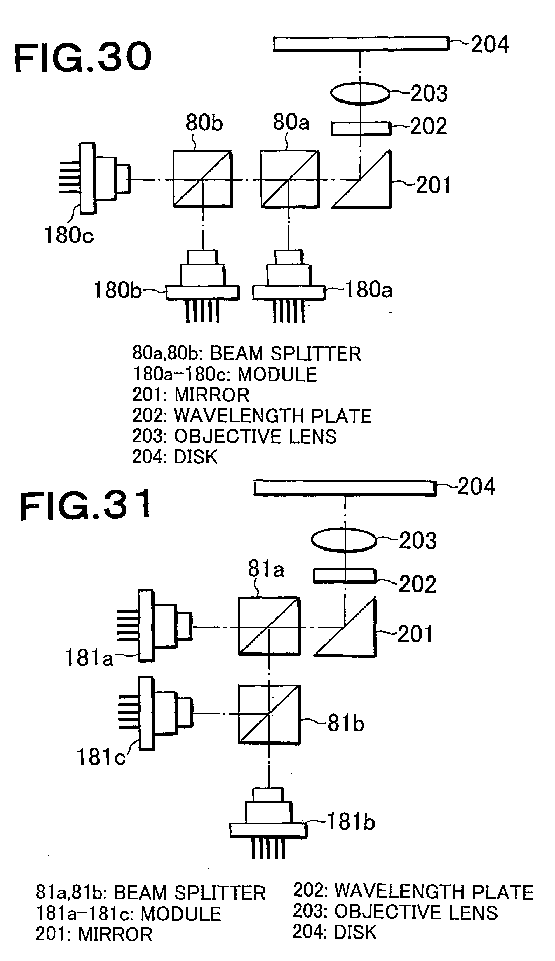

FIG. 30 shows a thirtieth embodiment of an optical head apparatus of the present invention. Each of modules 180a, 180b, 180c has a constitution in which one semiconductor laser and one photodetector are integrated, and the constitution will be described later with reference to FIG. 65. Wavelengths of the semiconductor lasers in the modules 180a, 180b, and 180c are 780 nm, 660 nm, and 400 nm, respectively. The beam splitter C is used as a beam splitter 80a. One of the beam splitters B, D, and Q is used as a beam splitter 80b.

Light having a wavelength of 400 nm emitted from the semiconductor laser in the module 180c is almost all transmitted through the beam splitters 80b and 80a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitters 80a and 80b, and received by the photodetector in the module 180c.

The light having a wavelength of 660 nm emitted from the semiconductor laser in the module 180b is almost all reflected by the beam splitter 80b, almost all transmitted through the beam splitter 80a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 80a, almost all reflected by the beam splitter 80b, and received by the photodetector in the module 180b.

The light having a wavelength of 780 nm emitted from the semiconductor laser in the module 180a is almost all reflected by the beam splitter 80a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 80a, and received by the photodetector in the module 180a.

In the present embodiment, the wavelengths of the semiconductor lasers in the modules 180a, 180b, and 180c may be set to 660 nm, 780 nm, and 400 nm, respectively. At this time, the beam splitter B is used as the beam splitter 80a. One of the beam splitters C, D, and O is used as the beam splitter 80b.

In the present embodiment, the wavelengths of the semiconductor lasers in the modules 180a, 180b, and 180c may be set to 780 nm, 400 nm, and 660 nm, respectively. At this time, the beam splitter C is used as the beam splitter 80a. One of the beam splitters A, E, and R is used as the beam splitter 80b.

In the present embodiment, the wavelengths of the semiconductor lasers in the modules 180a, 180b, and 180c may be set to 400 nm, 780 nm, and 660 nm, respectively. At this time, the beam splitter A is used as the beam splitter 80a. One of the beam splitters C, E, and M is used as the beam splitter 80b.

In the present embodiment, the wavelengths of the semiconductor lasers in the modules 180a, 180b, and 180c may be set to 660 nm, 400 nm, and 780 nm, respectively. At this time, the beam splitter B is used as the beam splitter 80a. One of the beam splitters A, F, and P is used as the beam splitter 80b.

In the present embodiment, the wavelengths of the semiconductor lasers in the modules 180a, 180b, and 180c may be set to 400 nm, 660 nm, and 780 nm, respectively. At this time, the beam splitter A is used as the beam splitter 80a. One of the beam splitters B, F, and N is used as the beam splitter 80b.

Since three modules only are disposed, and any light source or photodetector is not required in the thirtieth embodiment of the optical head apparatus of the present invention, the optical head apparatus can be miniaturized. The photodetectors in the modules 180a, 180b, and 180c can be designed in such a manner that sensitivities or the like with respect to the wavelengths of the semiconductor lasers in the modules 180a, 180b, and 180c are optimized.

### (31st Embodiment)

FIG. 31 shows a thirty-first embodiment of an optical head apparatus of the present invention. Each of modules 181a, 181b, and 181c has a constitution in which one semiconductor laser and one photodetector are integrated, and the constitution will be described later with reference to FIG. 65. Wavelengths of the semiconductor lasers in the modules 181a, 181b, and 181c are 780 nm, 660 nm, and 400 nm, respectively. The beam splitter F is used as a beam splitter 81a. One of the beam splitters A, E, and R is used as a beam splitter 81b.

Light having a wavelength of 400 nm emitted from the semiconductor laser in the module 181c is almost all reflected by the beam splitters 81b and 81a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitters 81a and 81b, and received by the photodetector in the module 181c.

The light having a wavelength of 660 nm emitted from the semiconductor laser in the module 181b is almost all transmitted through the beam splitter 81b, almost all reflected by the beam splitter 81a, reflected by the mirror 201, converted into circularly polarized light from linearly polarized light by the wavelength plate 202, and condensed onto the disk 204 of the DVD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 81a, transmitted through the beam splitter 81b, and received by the photodetector in the module 181b.

The light having a wavelength of 780 nm emitted from the semiconductor laser in the module 181a is almost all transmitted through the beam splitter 81a, reflected by the mirror 201, converted into the circularly polarized light from the linearly polarized light by the wavelength plate 202, and condensed onto the disk 204 of the CD standard by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 81a, and received by the photodetector in the module 181a.

In the present embodiment, the wavelengths of the semiconductor lasers in the modules 181a, 181b, and 181c may be set to 660 nm, 780 nm, and 400 nm, respectively. At this time, the beam splitter E is used as the beam splitter 81a. One of the beam splitters A, F, and P is used as the beam splitter 81b.

In the present embodiment, the wavelengths of the semiconductor lasers in the modules 181a, 181b, and 181c may be set to 780 nm, 400 nm, and 660 nm, respectively. At this time, the beam splitter F is used as the beam splitter 81a. One of the beam splitters B, D, and Q is used as the beam splitter 81b.

In the present embodiment, the wavelengths of the semiconductor lasers in the modules 181a, 181b, and 181c may be set to 400 nm, 780 nm, and 660 nm, respectively. At this time, the beam splitter D is used as the beam splitter 81a. One of the beam splitters B, F, and N is used as the beam splitter 81b. In the present embodiment, the wavelengths of the semiconductor lasers in the modules 181a, 181b, and 181c may be set to 660 nm, 400 nm, and 780 nm, respectively. At this time, the beam splitter E is used as the beam splitter 81a. One of the beam splitters C, D, and O is used as the beam splitter 81b.

In the present embodiment, the wavelengths of the semiconductor lasers in the modules 181a, 181b, and 181c may be set to 400 nm, 660 nm, and 780 nm, respectively. At this time, the beam splitter D is used as the beam splitter 81a. One of the beam splitters C, E, and M is used as the beam splitter 81b.

Since three modules only are disposed, and any light source or photodetector is not required in the thirty-first embodiment of the optical head apparatus of the present invention, the optical head apparatus can be miniaturized. The photodetectors in the modules 181a, 181b, and 181c can be designed in such a manner that sensitivities or the like with respect to the wavelengths of the semiconductor lasers in the modules 181a, 181b, and 181c are optimized.

### 12. 32nd and 33rd Embodiments (Type 10)

Each of thirty-second and thirty-third embodiments of an optical head apparatus of the present invention has a configuration having one light source, one photodetector, and one module. Additionally, in the light source, two light sources are integrated. In the module, one light source and one photodetector are integrated.

### (32nd Embodiment)

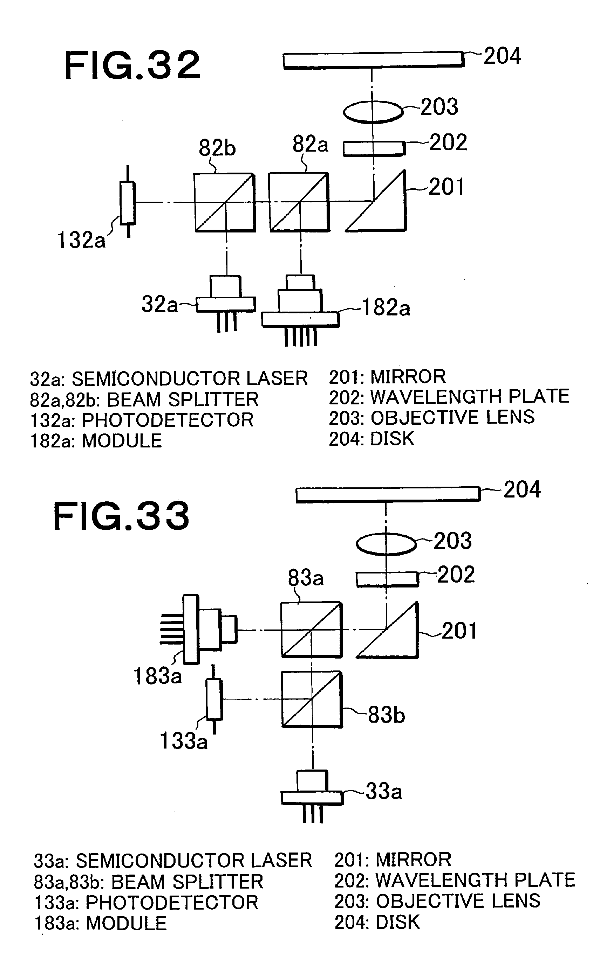

FIG. 32 shows a thirty-second embodiment of an optical head apparatus of the present invention. A module 182a has a constitution in which one semiconductor laser and one photodetector are integrated, and the constitution will be described later with reference to FIG. 65. A semiconductor laser 32a has a constitution in which two semiconductor lasers are integrated, and the constitution will be described later with reference to FIG. 63. A wavelength of the semiconductor laser in the module 182a is 400 nm, and the semiconductor laser 32a has wavelengths of 660 nm and 780 nm. The beam splitter A is used as a beam splitter 82a. One of the beam splitters S, V, and Y is used as a beam splitter 82b.

Light having a wavelength of 400 nm emitted from the semiconductor laser in the module 182a is almost all reflected by the beam splitter 82b, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitters 82a, and received by the photodetector in the module 182a.

The light having a wavelength of 660 nm or 780 nm emitted from the semiconductor laser 32a strikes on the beam splitter 82b as S-polarized light, and is almost all reflected by the beam splitter 82b, almost all transmitted through the beam splitter 82a, reflected by the mirror 201, converted into circularly polarized light from linearly polarized light by the wavelength plate 202, and condensed onto the disk 204 of the DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 82a, enters the beam splitter 82b as P-polarized light, and is almost all transmitted, and received by a photodetector 132a.

In the present embodiment, the wavelength of the semiconductor laser in the module 182a may be set to 660 nm, and the wavelengths of the semiconductor laser 32a may be set to 400 nm and 780 nm. At this time, the beam splitter B is used as the beam splitter 82a. One of the beam splitters T, W, and Y is used as the beam splitter 82b.

In the present embodiment, the wavelength of the semiconductor laser in the module 182a may be set to 780 nm, and the wavelengths of the semiconductor laser 32a may be set to 400 nm and 660 nm. At this time, the beam splitter C is used as the beam splitter 82a. One of the beam splitters U, X, and Y is used as the beam splitter 82b.

Furthermore, an embodiment in which the module 182a, semiconductor laser 32a, and photodetector 132a are mutually replaced is possible.

In an embodiment in which the module 182a, semiconductor laser 32a, and photodetector 132a are replaced with the semiconductor laser 32a, photodetector 132a, and module 182a, respectively, a half-wave plate for rotating the polarization direction of the light emitted from the semiconductor laser 32a, reflected by the disk 204, and transmitted through the beam splitter 82a by 90° in such a manner that the light is reflected by the beam splitter 82b is inserted between the beam splitters 82a and 82b if necessary.

In an embodiment in which the module 182a, semiconductor laser 32a, and photodetector 132a are replaced with the photodetector 132a, semiconductor laser 32a, and module 182a, respectively, a half-wave plate for rotating the polarization direction of the light emitted from the semiconductor laser 32a and reflected by the beam splitter 82a by 90° in such a manner that the light is transmitted through the beam splitter 82a is inserted between the beam splitters 82b and 82a if necessary.

Since the total number of the module, light source, and photodetector is three in the thirty-second embodiment of the optical head apparatus of the present invention, the optical head apparatus can be miniaturized. The photodetector in the module 182a can be designed in such a manner that sensitivity or the like with respect to the wavelength of the semiconductor laser in the module 182a is optimized. The photodetector 132a can be designed in such a manner that sensitivity or the like with respect to the wavelengths of the semiconductor laser 32a is optimized.

### (33rd Embodiment)

FIG. 33 shows a thirty-third embodiment of an optical head apparatus of the present invention. A module 183a has a constitution in which one semiconductor laser and one photodetector are integrated, and the constitution will be described later with reference to FIG. 65. A semiconductor laser 33a has a constitution in which two semiconductor lasers are integrated, and the constitution will be described later with reference to FIG. 63. A wavelength of the semiconductor laser in the module 183a is 400 nm, and the semiconductor laser 33a has wavelengths of 660 nm and 780 nm. The beam splitter D is used as a beam splitter 83a. One of the beam splitters S, V, and Y is used as a beam splitter 83b.

Light having a wavelength of 400 nm emitted from the semiconductor laser in the module 183a is almost all transmitted through the beam splitter 83a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitters 83a, and received by the photodetector in the module 183a.

The light having a wavelength of 660 nm or 780 nm emitted from the semiconductor laser 33a strikes on the beam splitter 83b as P-polarized light, and is almost all transmitted through. Almost all the light is reflected by the beam splitter 83a, reflected by the mirror 201, converted into circularly polarized light from linearly polarized light by the wavelength plate 202, and condensed onto the disk 204 of the DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 83a, strikes on the beam splitter 83b as S-polarized light, and is almost all reflected, and received by a photodetector 133a.

In the present embodiment, the wavelength of the semiconductor laser in the module 183a may be set to 660 nm, and the wavelengths of the semiconductor laser 33a may be set to 400 nm and 780 nm. At this time, the beam splitter E is used as the beam splitter 83a. One of the beam splitters T, W, and Y is used as the beam splitter 83b.

In the present embodiment, the wavelength of the semiconductor laser in the module 183a may be set to 780 nm, and the wavelengths of the semiconductor laser 33a may be set to 400 nm and 660 nm. At this time, the beam splitter F is used as the beam splitter 83a. One of the beam splitters U, X, and Y is used as the beam splitter 83b.

Furthermore, an embodiment in which the module 183a, semiconductor laser 33a, and photodetector 133a are mutually replaced is possible.

In an embodiment in which the module 183a, semiconductor laser 33a, and photodetector 133a are replaced with the semiconductor laser 33a, photodetector 133a, and module 183a, respectively, a half-wave plate for rotating the polarization direction of the light emitted from the semiconductor laser 33a and reflected by the disk 204 and the beam splitter 83a by 90° in such a manner that the light is transmitted through the beam splitter 83b is inserted between the beam splitters 83a and 83b if necessary.

In an embodiment in which the module 183a, semiconductor laser 33a, and photodetector 133a are replaced with the photodetector 133a, semiconductor laser 33a, and module 183a, respectively, a half-wave plate for rotating the polarization direction of the light emitted from the semiconductor laser 33a and transmitted through the beam splitter 83b by 90° in such a manner that the light is reflected by the beam splitter 83a is inserted between the beam splitters 83b and 83a if necessary.

Since the total number of the module, light source, and photodetector is three in the thirty-third embodiment of the optical head apparatus of the present invention, the optical head apparatus can be miniaturized. The photodetector in the module 183a can be designed in such a manner that sensitivity or the like with respect to the wavelength of the semiconductor laser in the module 183a is optimized. The photodetector 133a can be designed in such a manner that sensitivity or the like with respect to the wavelengths of the semiconductor laser 33a is optimized.

### 13. 34th and 35th Embodiments (Type 11)

Each of thirty-fourth and thirty-fifth embodiments of an optical head apparatus of the present invention has a configuration having one light source, one photodetector, and one module. Additionally, in the module, two light sources and one photodetector are integrated.

### (34th Embodiment)

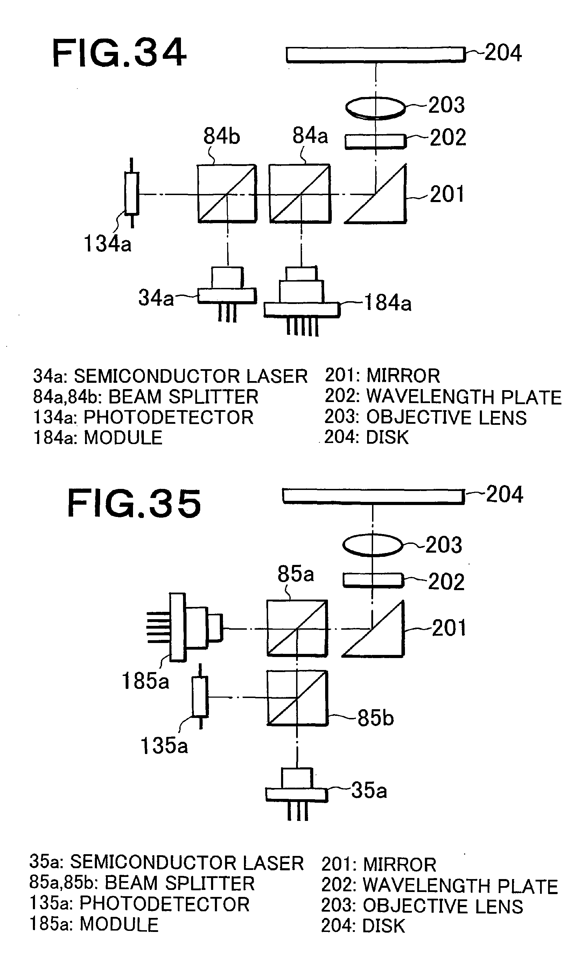

FIG. 34 shows a thirty-fourth embodiment of an optical head apparatus of the present invention. A module 184a has a constitution in which two semiconductor lasers and one photodetector are integrated, and the constitution will be described later with reference to FIG. 66. Wavelengths of the semiconductor lasers in the module 184a are 660 nm and 780 nm, and a semiconductor laser 34a has a wavelength of 400 nm. The beam splitter D is used as a beam splitter 84a. One of the beam splitters G, J, M, N, T, U, W, X, and Y is used as a beam splitter 84b.

Light having a wavelength of 400 nm emitted from the semiconductor laser 34a strikes on the beam splitter 84b as S-polarized light, and is almost all reflected, almost all transmitted through the beam splitter 84a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is transmitted through the beam splitter 84a, and enters the beam splitter 84b as P-polarized light, and is almost all transmitted, and received by a photodetector 134a.

The light having a wavelength of 660 nm or 780 nm emitted from the semiconductor laser in the module 184a is almost all reflected by the beam splitter 84a, reflected by the mirror 201, converted into circularly polarized light from linearly polarized light by the wavelength plate 202, and condensed onto the disk 204 of the DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is reflected by the beam splitter 84a, and received by the photodetector in the module 184a.

In the present embodiment, the wavelengths of the semiconductor lasers in the module 184a may be set to 400 nm and 780 nm, and the wavelength of the semiconductor laser 34a may be set to 660 nm. At this time, the beam splitter E is used as the beam splitter 84a. One of the beam splitters H, K, O, P, S, U, V, X, and Y is used as the beam splitter 84b.

In the present embodiment, the wavelengths of the semiconductor lasers in the module 184a may be set to 400 nm, 660 nm, and the wavelength of the semiconductor laser 34a may be set to 780 nm. At this time, the beam splitter F is used as the beam splitter 84a. One of the beam splitters I, L, Q, R, S, T, V, W, and Y is used as the beam splitter 84b.

Furthermore, an embodiment in which the module 184a, semiconductor laser 34a, and photodetector 134a are mutually replaced is possible.

In an embodiment in which the module 184a, semiconductor laser 34a, and photodetector 134a are replaced with the semiconductor laser 34a, photodetector 134a, and module 184a, respectively, a half-wave plate for rotating the polarization direction of the light emitted from the semiconductor laser 34a, reflected by the disk 204, and transmitted through the beam splitter 84a by 90° in such a manner that the light is reflected by the beam splitter 84b is inserted between the beam splitters 84a and 84b if necessary. In an embodiment in which the module 184a, semiconductor laser 34a, and photodetector 134a are replaced with the photodetector 134a, semiconductor laser 34a, and module 184a, respectively, a half-wave plate for rotating the polarization direction of the light emitted from the semiconductor laser 34a and reflected by the beam splitter 84b by 90° in such a manner that the light is transmitted through the beam splitter 84a is inserted between the beam splitters 84b and 84a if necessary.

Since the semiconductor laser 34a is not integrated with the other light source or the photodetector in the thirty-fourth embodiment of the optical head apparatus of the present invention, the semiconductor laser 34a can be provided with a high heat dissipation property. Since the total number of the module, light source, and photodetector is three, the optical head apparatus can be miniaturized. The photodetector in the module 184a can be designed in such a manner that sensitivity or the like with respect to the wavelengths of the semiconductor lasers in the module 184a is optimized. The photodetector 134a can be designed in such a manner that sensitivity or the like with respect to the wavelength of the semiconductor laser 34a is optimized.

### (35th Embodiment)

FIG. 35 shows a thirty-fifth embodiment of an optical head apparatus of the present invention. A module 185a has a constitution in which two semiconductor lasers and one photodetector are integrated, and the constitution will be described later with reference to FIG. 66. Wavelengths of the semiconductor lasers in the module 185a are 660 nm and 780 nm, and a semiconductor laser 35a has a wavelength of 400 nm. The beam splitter A is used as a beam splitter 85a. One of the beam splitters G, J, M, N, T, U, W, X, and Y is used as a beam splitter 85b.

Light having a wavelength of 400 nm emitted from the semiconductor laser 35a enters the beam splitter 85b as P-polarized light, and is almost all transmitted, almost all reflected by the beam splitter 85a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitters 85a, and strikes on the beam splitter 85b as S-polarized light, and is almost all reflected, and received by a photodetector 135a.

The light having a wavelength of 660 nm or 780 nm emitted from the semiconductor lasers in the module 185a is almost all transmitted through the beam splitter 85a, reflected by the mirror 201, converted into circularly polarized light from linearly polarized light by the wavelength plate 202, and condensed onto the disk 204 of the DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 85a, and received by the photodetector in the module 185a.

In the present embodiment, the wavelengths of the semiconductor lasers in the module 185a may be set to 400 nm and 780 nm, and the wavelength of the semiconductor laser 35a may be set to 660 nm. At this time, the beam splitter B is used as the beam splitter 85a. One of the beam splitters H, K, O, P, S, U, V, X, and Y is used as the beam splitter 85b.

In the present embodiment, the wavelengths of the semiconductor lasers in the module 185a may be set to 400 nm and 660 nm, respectively, and the wavelength of the semiconductor laser 35a may be set to 780 nm. At this time, the beam splitter C is used as the beam splitter 85a. One of the beam splitters I, L, Q, R, S, T, V, W, and Y is used as the beam splitter 85b.

Furthermore, an embodiment in which the module 185a, semiconductor laser 35a, and photodetector 135a are mutually replaced is possible.

In an embodiment in which the module 185a, semiconductor laser 35a, and photodetector 135a are replaced with the semiconductor laser 35a, photodetector 135a, and module 185a, respectively, a half-wave plate for rotating the polarization direction of the light emitted from the semiconductor laser 35a and reflected by the disk 204 and the beam splitter 85a by 90° in such a manner that the light is transmitted through the beam splitter 85b is inserted between the beam splitters 85a and 85b if necessary.

In an embodiment in which the module 185a, semiconductor laser 35a, and photodetector 135a are replaced with the photodetector 135a, semiconductor laser 35a, and module 185a, respectively, a half-wave plate for rotating the polarization direction of the light emitted from the semiconductor laser 35a and transmitted through the beam splitter 85b by 90° in such a manner that the light is reflected by the beam splitter 85a is inserted between the beam splitters 85b and 85a if necessary.

Since the semiconductor laser 35a is not integrated with the other light source or the photodetector in the thirty-fifth embodiment of the optical head apparatus of the present invention, the semiconductor laser 35a can be provided with a high heat dissipation property. Since the total number of the module, light source, and photodetector is three, the optical head apparatus can be miniaturized. The photodetector in the module 185a can be designed in such a manner that sensitivity or the like with respect to the wavelengths of the semiconductor lasers in the module 185a is optimized. The photodetector 135a can be designed in such a manner that sensitivity or the like with respect to the wavelength of the semiconductor laser 35a is optimized.

### 14. 36th Embodiment (Type 12)

A thirty-sixth embodiment of an optical head apparatus of the present invention has a configuration having two modules. Additionally, in one of the two modules, two light sources and one photodetector are integrated. In the other module, one light source and one photodetector are integrated.

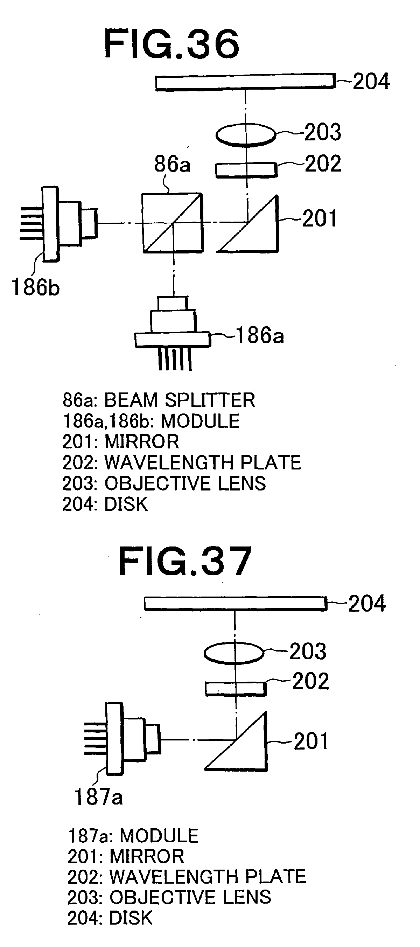

FIG. 36 shows a thirty-sixth embodiment of an optical head apparatus of the present invention. A module 186b has a constitution in which two semiconductor lasers and one photodetector are integrated, and the constitution will be described later with reference to FIG. 66. A module 186a has a constitution in which one semiconductor laser and one photodetector are integrated, and the constitution will be described later with reference to FIG. 65. A wavelength of the semiconductor laser in the module 186a is 400 nm, and wavelengths of semiconductor lasers in the module 186b are 660 nm and 780 nm. The beam splitter A is used as a beam splitter 86a.

Light having a wavelength of 400 nm emitted from the semiconductor laser in the module 186a is almost all reflected by the beam splitter 86a, reflected by a mirror 201, converted into circularly polarized light from linearly polarized light by a wavelength plate 202, and condensed onto a disk 204 of the next-generation standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, and reflected by the mirror 201. Almost all the light is reflected by the beam splitter 86a, and received by the photodetector in the module 186a.

The light having a wavelength of 660 nm or 780 nm emitted from the semiconductor laser in the module 186b is almost all transmitted through the beam splitter 86a, reflected by the mirror 201, converted into circularly polarized light from linearly polarized light by the wavelength plate 202, and condensed onto the disk 204 of the DVD or CD standards by the objective lens 203. The reflected light from the disk 204 passes through the objective lens 203 in the reverse direction, and is converted into the linearly polarized light whose polarization direction is orthogonal to that for the forward path from the circularly polarized light by the wavelength plate 202, and reflected by the mirror 201. Almost all the light is transmitted through the beam splitter 86a, and received by the photodetector in the module 186b.

In the present embodiment, the wavelength of the semiconductor laser in the module 186a may be set to 660 nm and the wavelengths of the semiconductor lasers in the module 186b may be set to 400 nm and 780 nm. At this time, the beam splitter B is used as the beam splitter 86a.

In the present embodiment, the wavelength of the semiconductor laser in the module 186a may be set to 780 nm, and the wavelengths of the semiconductor lasers in the module 186b may be set to 400 nm and 660 nm. At this time, the beam splitter C is used as the beam splitter 86a.

In the present embodiment, the module 186a may be a module in which two semiconductor lasers and one photodetector are integrated, the module 186b may be a module in which one semiconductor laser and one photodetector are integrated, the wavelengths of the semiconductor lasers in the module 186a may be set to 660 nm, 780 nm, and the wavelength of the semiconductor laser in the module 186b may be set to 400 nm. At this time, the beam splitter D is used as the beam splitter 86a.

In the present embodiment, the module 186a may be a module in which two semiconductor lasers and one photodetector are integrated, the module 186b may be a module in which one semiconductor laser and one photodetector are integrated, the wavelengths of the semiconductor lasers in the module 186a may be set to 400 nm, 780 nm, and the wavelength of the semiconductor laser in the module 186b may be set to 660 nm. At this time, the beam splitter E is used as the beam splitter 86a.

In the present embodiment, the module 186a may be a module in which two semiconductor lasers and one photodetector are integrated, the module 186b may be a module in which one semiconductor laser and one photodetector are integrated, the wavelengths of the semiconductor lasers in the module 186a may be set to 400 nm, 660 nm, and the wavelength of the semiconductor laser in the module 186b may be set to 780 nm. At this time, the beam splitter F is used as the beam splitter 86a.

Since two modules only are disposed, and any light source or photodetector is not required in the thirty-sixth embodiment of the present invention, the optical head apparatus can be miniaturized. The photodetectors in the modules 186a, 186b can be designed in such a manner that sensitivities or the like with respect to the wavelengths of the semiconductor lasers in the modules 186a, 186b are optimized.

### 15. 37th Embodiment (Type 13)

A thirty-seventh embodiment of an optical head apparatus of the present invention has a configuration having one module. Additionally, in the module, three light sources and one photodetector are integrated.

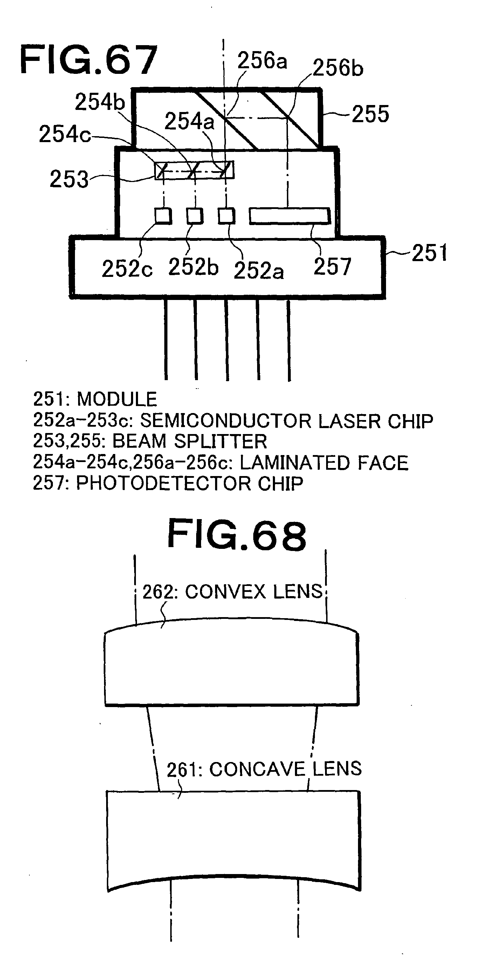

FIG. 37 shows a thirty-seventh embodiment of an optical head apparatus of the present invention. A module 187a has a constitution in which three semiconductor lasers and one photodetector are integrated, and the constitution will be described later with reference to FIG. 67. Wavelengths of the semiconductor lasers in the module 187a are 400 nm, 660 nm, and 780 nm.

Light having a wavelength of 400 nm, 660 nm, or 780 nm emitted from the semiconductor laser in the module 187a is reflected by a mirror 201, converted into circularly polarized light from linearly polarized light by a wavelength plate 202, and condensed onto a disk 204 of the next-generation, DVD or CD standard by an objective lens 203. The reflected light from the disk 204 passes through the objective lens 203 in a reverse direction, and is converted into linearly polarized light whose polarization direction is orthogonal to that for the forward path from circularly polarized light by the wavelength plate 202, reflected by the mirror 201, and received by the photodetector in the module 187a.

Since only one module is disposed, and any light source or photodetector is not required in the thirty-seventh embodiment of the present invention, the optical head apparatus can be miniaturized.

Outlines of the above-described first to thirty-seventh embodiments (Types 1 to 13) are shown in Table 2.

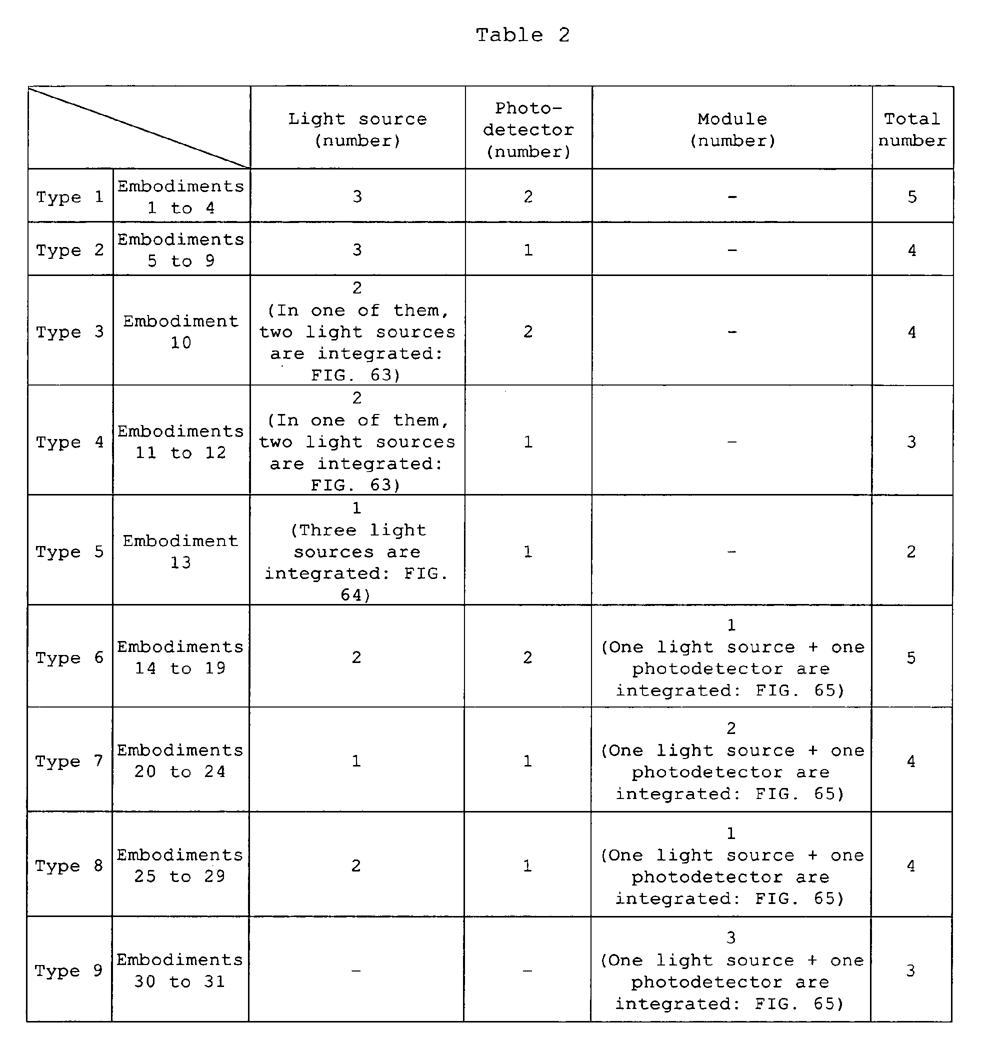

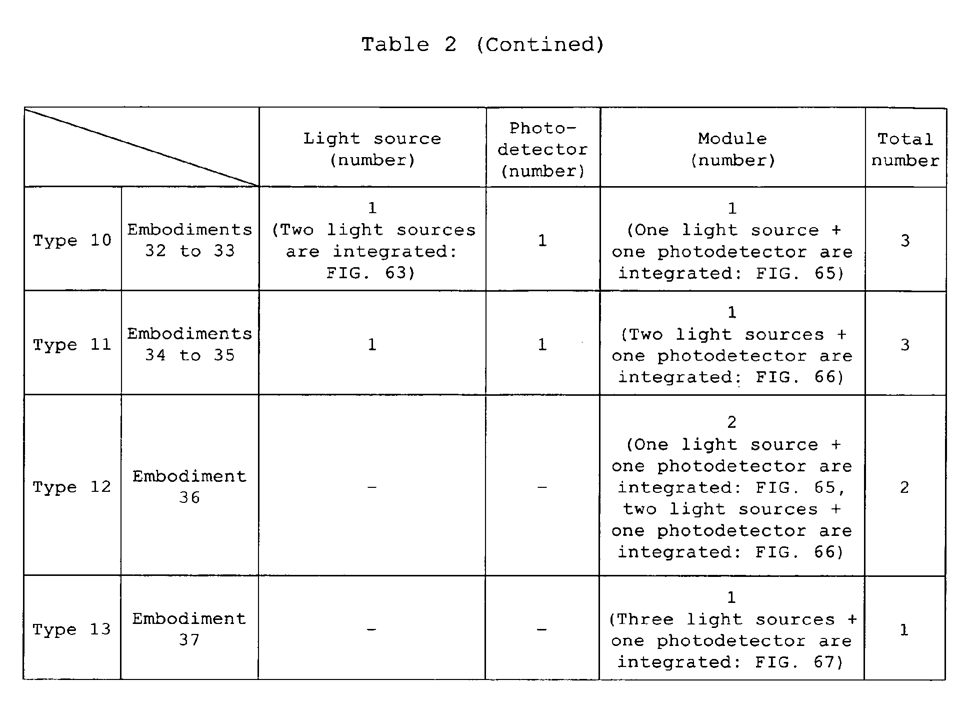

### 16. Light source in which two light sources are integrated

FIG. 63 shows a constitution of a semiconductor laser in which two semiconductor lasers are integrated, for use in the embodiment of the optical head apparatus of the present invention. In a semiconductor laser 211, semiconductor laser chips 212a and 212b, and a beam splitter 213 are integrated. The beam splitter 213 has laminated faces 214a and 214b.

Light emitted from the semiconductor laser chip 212a is almost all transmitted through the laminated face 214a, and emitted from the semiconductor laser 211. The light emitted from the semiconductor laser chip 212b is almost all reflected by the laminated face 214b of the beam splitter 213, almost all reflected by the laminated face 214a of the beam splitter 213, and emitted from the semiconductor laser 211.

Wavelengths of the semiconductor laser chips 212a, 212b may be set to 660 nm and 780 nm, respectively. At this time, the laminated face 214a of the beam splitter 213 has the same characteristic as that of one of the beam splitters C, E, and M. The laminated face 214b of the beam splitter 213 has the same characteristic as that of one of the beam splitters C, D, E, J, K, M, O, and X.

The wavelengths of the semiconductor laser chips 212a, 212b may be set to 400 nm and 780 nm, respectively. At this time, the laminated face 214a of the beam splitter 213 has the same characteristic as that of one of the beam splitters C, D, and O. The laminated face 214b of the beam splitter 213 has the same characteristic as that of one of the beam splitters C, D, E, J, K, M, O, and X.

The wavelengths of the semiconductor laser chips 212a and 212b may be set to 400 nm and 660 nm, respectively. At this time, the laminated face 214a of the beam splitter 213 has the same characteristic as that of one of the beam splitters B, D, and Q. The laminated face 214b of the beam splitter 213 has the same characteristic as that of one of the beam splitters B, D, F, J, L, N, Q, and W.

It is to be noted that the beam splitter 213 may be omitted from the semiconductor laser 211. 17. Light source in which three light sources are integrated

FIG. 64 shows a constitution of a semiconductor laser in which three semiconductor lasers are integrated, for use in the embodiment of the optical head apparatus of the present invention. In a semiconductor laser 221, semiconductor laser chips 222a, 222b, and 222c and a beam splitter 223 are integrated. The beam splitter 223 has laminated faces 224a, 224b, and 224c.

Light emitted from the semiconductor laser chip 222a is almost all transmitted through the laminated face 224a of the beam splitter 223, and emitted from the semiconductor laser 221. The light emitted from the semiconductor laser chip 222b is almost all reflected by the laminated face 224b of the beam splitter 223, almost all reflected by the laminated face 224a of the beam splitter 223, and emitted from the semiconductor laser 221. Light emitted from the semiconductor laser chip 222c is almost all reflected by the laminated face 224c of the beam splitter 223, almost all transmitted through the laminated face 224b of the beam splitter 223, almost all reflected by the laminated face 224a, and emitted from the semiconductor laser 221.

Wavelengths of the semiconductor laser chips 222a, 222b, and 222c may be set to 400 nm, 660 nm, and 780 nm, respectively. At this time, the laminated face 224a of the beam splitter 223 has the same characteristic as that of the beam splitter D. The laminated face 224b of the beam splitter 223 has the same characteristic as that of one of the beam splitters B, F, and N. The laminated face 224c of the beam splitter 223 has the same characteristic as that of one of the beam splitters C, D, E, J, K, M, O, and X.

It is to be noted that the beam splitter 223 may be omitted from the semiconductor laser 221.

### 18. Module in which one light source and one photodetector are integrated

FIG. 65 shows a constitution of a module in which one semiconductor laser and one photodetector are integrated, for use in the embodiment of the optical head apparatus of the present invention. In a module 231, a semiconductor laser chip 232a, a photodetector chip 237, and a beam splitter 235 are integrated. The beam splitter 235 has laminated faces 236a and 236b.

Light emitted from the semiconductor laser chip 232a enters the laminated face 236a of the beam splitter 235 as P-polarized light, and is almost all transmitted, and emitted from the module 231. Incident light upon the module 231 strikes on the laminated face 236a of the beam splitter 235 as S-polarized light, and is almost all reflected, almost all reflected by the laminated face 236b of the beam splitter 235, and received by the photodetector chip 237.

A wavelength of the semiconductor laser chip 232a may be set to 400 nm. At this time, the laminated face 236a of the beam splitter 235 has the same characteristic as that of one of the beam splitters G, J, M, N, T, U, W, X, and Y. The laminated face 236b of the beam splitter 235 has the same characteristic as that of one of the beam splitters A, E, F, G, J, K, L, M, N, P, R, T, U, V, W, X, and Y.

The wavelength of the semiconductor laser chip 232a may be set to 660 nm. At this time, the laminated face 236a of the beam splitter 235 has the same characteristic as that of one of the beam splitters H, K, O, P, S, U, V, X, and Y. The laminated face 236b of the beam splitter 235 has the same characteristic as that of the beam splitters B, D, F, H, J, K, L, N, O, P, Q, S, U, V, W, X, and Y.

The wavelength of the semiconductor laser chip 232a may be set to 780 nm. At this time, the laminated face 236a of the beam splitter 235 has the same characteristic as that of one of the beam splitters I, L, Q, R, S, T, V, W, and Y. The laminated face 236b of the beam splitter 235 has the same characteristic as that of one of the beam splitters C, D, E, I, J, K, L, M, O, Q, R, S, T, V, W, X, and Y.

It is to be noted that in the module 231, an optical diffraction element may be used as a beam splitter instead of the beam splitter 235. The beam splitter 235 or the optical diffraction element may be disposed outside the module 231 without being integrated in the module 231.

### 19. Module in which two light sources and one photodetector are integrated

FIG. 66 shows a constitution of a module in which two semiconductor lasers and one photodetector are integrated, for use in the embodiment of the optical head apparatus of the present invention. In a module 241, semiconductor laser chips 242a and 242b, a photodetector chip 247, a beam splitter 243, and a beam splitter 245 are integrated. The beam splitter 243 has laminated faces 244a and 244b. The beam splitter 245 has laminated faces 246a and 246b.

Light emitted from the semiconductor laser chip 242a is almost all transmitted through the laminated face 244a of the beam splitter 243, enters the laminated face 246a of the beam splitter 245 as P-polarized light, and is almost all transmitted, and emitted from the module 241. The light emitted from the semiconductor laser chip 242b is almost all reflected by the laminated face 244b of the beam splitter 243, almost all reflected by the laminated face 244a of the beam splitter 243, enters the laminated face 246a of the beam splitter 245 as P-polarized light, and is almost all transmitted, and emitted from the module 241. The incident light upon the module 241 strikes on the laminated face 246a of the beam splitter 245 as S-polarized light, and is almost all reflected, almost all reflected by the laminated face 246b of the beam splitter 245, and received by the photodetector chip 247.

Wavelengths of the semiconductor laser chips 242a and 242b may be set to 660 nm and 780 nm. At this time, the laminated face 244a of the beam splitter 243 has the same characteristic as that of one of the beam splitters C, E, and M. The laminated face 244b of the beam splitter 243 has the same characteristic as that of one of the beam splitters C, D, E, J, K, M, O, and X. The laminated face 246a of the beam splitter 245 has the same characteristic as that of one of the beam splitters S, V, and Y. The laminated face 246b of the beam splitter 245 has the same characteristic as that of one of the beam splitters D, J, K, L, O, Q, S, V, W, X, and Y.

The wavelengths of the semiconductor laser chips 242a and 242b may be set to 400 nm and 780 nm, respectively. At this time, the laminated face 244a of the beam splitter 243 has the same characteristic as that of one of the beam splitters C, D, and O. The laminated face 244b of the beam splitter 243 has the same characteristic as that of one of the beam splitters C, D, E, J, K, M, O, and X. The laminated face 246a of the beam splitter 245 has the same characteristic as that of one of the beam splitters T, W, and Y. The laminated face 246b of the beam splitter 245 has the same characteristic as that of one of the beam splitters E, J, K, L, M, R, T, V, W, X, and Y.

The wavelengths of the semiconductor laser chips 242a, 242b may be set to 400 nm and 660 nm, respectively. At this time, the laminated face 244a of the beam splitter 243 has the same characteristic as that of one of the beam splitters B, D, and Q. The laminated face 244b of the beam splitter 243 has the same characteristic as that of one of the beam splitters B, D, F, J, L, N, Q, and W. The laminated face 246a of the beam splitter 245 has the same characteristic as that of one of the beam splitters U, X, and Y. The laminated face 246b of the beam splitter 245 has the same characteristic as that of one of the beam splitters F, J, K, L, N, P, U, V, W, X, and Y.

It is to be noted that in the module 241, an optical diffraction element may be used as a beam splitter instead of the beam splitter 245. The beam splitter 245 or the optical diffraction element may be disposed outside the module 241 without being integrated in the module 241. Furthermore, the beam splitter 243 may be omitted from the module 241.

### 20. Module in which three light sources and one photodetector are integrated

FIG. 67 shows a constitution of a module in which three semiconductor lasers and one photodetector are integrated, for use in the embodiment of the optical head apparatus of the present invention. In a module 251, semiconductor laser chips 252a, 252b, and 252c, a photodetector chip 257, a beam splitter 253, and a beam splitter 255 are integrated. The beam splitter 253 has laminated faces 254a, 254b, and 254c. The beam splitter 255 has laminated faces 256a and 256b.

Light emitted from the semiconductor laser chip 252a is almost all transmitted through the laminated face 254a of the beam splitter 253, enters the laminated face 256a of the beam splitter 255 as P-polarized light, and is almost all transmitted, and emitted from the module 251. The light emitted from the semiconductor laser chip 252b is almost all reflected by the laminated face 254b of the beam splitter 253, almost all reflected by the laminated face 254a of the beam splitter 253, enters the laminated face 256a of the beam splitter 255 as P-polarized light, and is almost all transmitted, and emitted from the module 251. The light emitted from the semiconductor laser chip 252c is almost all reflected by the laminated face 254c of the beam splitter 253, almost all transmitted through the laminated face 254b of the beam splitter 253, almost all reflected by the laminated face 254a of the beam splitter 253, enters the laminated face 256a of the beam splitter 255 as P-polarized light, and is almost all transmitted, and emitted from the module 251. The incident light upon the module 251 strikes on the laminated face 256a of the beam splitter 255 as S-polarized light, and is almost all reflected, almost all reflected by the laminated face 256b of the beam splitter 255, and received by the photodetector chip 257.

Wavelengths of the semiconductor laser chips 252a, 252b, and 252c may be set to 400 nm, 660 nm, and 780 nm. At this time, the laminated face 254a of the beam splitter 253 has the same characteristic as that of the beam splitter D. The laminated face 254b of the beam splitter 253 has the same characteristic as that of one of the beam splitters B, F, and N. The laminated face 254c of the beam splitter 253 has the same characteristic as that of one of the beam splitters C, D, E, J, K, M, O, and X. The laminated face 256a of the beam splitter 255 has the same characteristic as that of the beam splitter Y. The laminated face 256b of the beam splitter 255 has the same characteristic as that of one of the beam splitters J, K, L, V, W, X, and Y.

It is to be noted that in the module 251, an optical diffraction element may be used as a beam splitter instead of the beam splitter 255. The beam splitter 255 or the optical diffraction element may be disposed outside the module 251 without being integrated in the module 251. Furthermore, the beam splitter 253 may be omitted from the module 251.

### 21. Spherical Aberration Correction Means

Additionally, in the next-generation, DVD, and CD standards, thicknesses of protective layers of disks are 0.6 mm (AOD standard), 0.1 mm (BRD standard), 0.6 mm, and 1.2 mm, respectively. Since an objective lens for use in an optical head apparatus is designed in such a manner that spherical aberration is corrected with respect to a specific wavelength and a thickness of a specific protective layer, the spherical aberration is generated with respect to another wavelength or another protective layer thickness. Therefore, it is necessary to correct the spherical aberration in accordance with the disk in order to record or reproduce information with respect to a disk of any of the next-generation, DVD, and CD standards.

As a first method of correcting the spherical aberration in accordance with the disk, a method is known in which an expander lens is disposed in an optical system of the optical head apparatus. FIG. 68 shows a constitution of the expander lens. The expander lens comprises a concave lens 261 and a convex lens 262, and is disposed between a wavelength plate 202 and an objective lens 203.

The objective lens of the optical head apparatus is designed in such a manner that the spherical aberration is corrected during transmission of light having a wavelength of 400 nm which has struck on the objective lens as parallel light through the protective layer of the disk of the next-generation standard. To record or reproduce information with respect to the disk of the next-generation standard, an interval between the concave lens 261 and the convex lens 262 is controlled in such a manner that the light having a wavelength of 400 nm emitted from a semiconductor laser, which has struck on the concave lens 261 as the parallel light, is emitted from the convex lens 262 as the parallel light and strikes on the objective lens.

When the transmission of the light having a wavelength of 660 nm, which has struck on the objective lens as the parallel light, passes through the protective layer of the disk of the DVD standard, the spherical aberration remains. However, when the light having a wavelength of 660 nm is applied to the objective lens as divergent light having an appropriate spread angle, new spherical aberration is generated following a magnification change of the objective lens, to thereby correct the remaining spherical aberration. To record or reproduce information with respect to the disk of the DVD standard, the interval between the concave lens 261 and convex lens 262 is controlled in such a manner that the light having a wavelength of 660 nm emitted from the semiconductor laser and applied to the concave lens 261 as the parallel light is emitted from the convex lens 262 as the divergent light having the appropriate spread angle and strikes on the objective lens.

When the light having a wavelength of 780 nm which has struck on the objective lens as the parallel light passes through the protective layer of the disk of the CD standard, the spherical aberration remains. However, when the light having a wavelength of 780 nm is applied to the objective lens as the divergent light having the appropriate spread angle, new spherical aberration is generated following the magnification change of the objective lens to thereby correct the remaining spherical aberration. To record or reproduce the information with respect to the disk of the CD standard, the interval between the concave lens 261 and the convex lens 262 is controlled in such a manner that the light having a wavelength of 780 nm emitted from the semiconductor laser and applied to the concave lens 261 as the parallel light is emitted from the convex lens 262 as the divergent light having the appropriate spread angle and strikes on the objective lens.

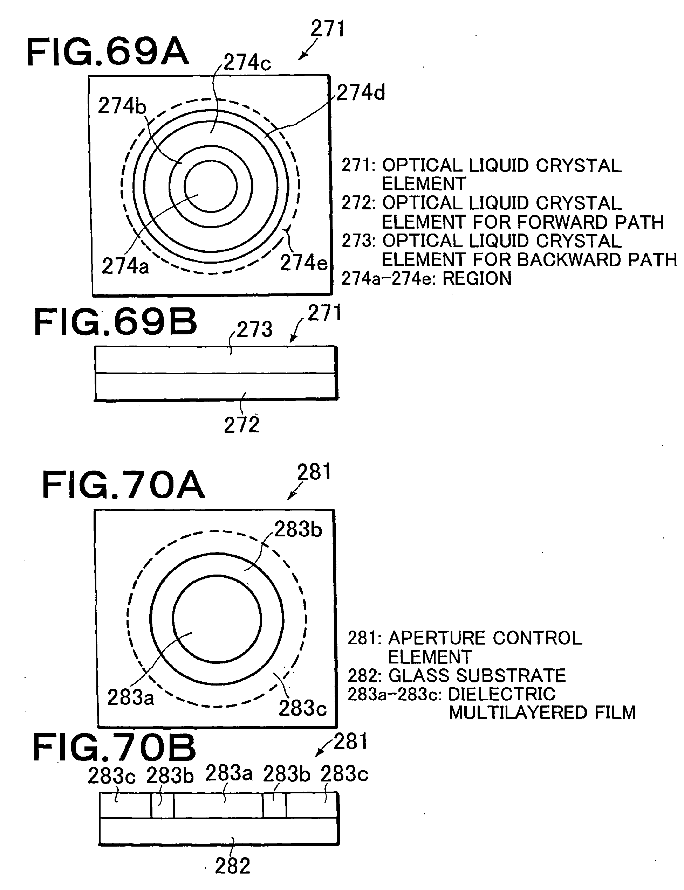

As a second method of correcting the spherical aberration in accordance with the disk, a method is known in which an optical liquid crystal element is disposed in an optical system of an optical head apparatus. FIGS. 69A and 69B show a constitution of the optical liquid crystal element. FIG. 69A is a plan view and FIG. 69B is a side view. An optical liquid crystal element 271 comprises a forward-path optical liquid crystal element 272 and a backward-path optical liquid crystal element 273 laminated upon each other, and is disposed between a mirror 201 and a wavelength plate 202. The forward-path optical liquid crystal element 272 functions with respect to linearly polarized light in a forward path, and the backward-path optical liquid crystal element 273 functions with respect to the linearly polarized light in a backward path, whose polarization direction is orthogonal to that for the forward path. Each of the forward-path optical liquid crystal element 272 and the backward-path optical liquid crystal element 273 is divided into five regions 274a to 274e. A voltage V1 is applied to the region 274c, a voltage V2 is applied to the regions 274b, 274d, and a voltage V3 is applied to the regions 274a, 274e. It is to be noted that a dotted line in the drawing corresponds to a valid diameter of the objective lens.

The objective lens of the optical head apparatus is designed in such a manner that the spherical aberration is corrected during the transmission of the light having the wavelength of 400 nm, applied to the objective lens, through the protective layer of the disk of the next-generation standard. To record or reproduce the information with respect to the disk of the next-generation standard, the voltages to be applied to the respective regions of the optical liquid crystal element 271 are controlled in such a manner as to obtain V1 = V2 = V3.

The spherical aberration remains during the transmission of the light having a wavelength of 660 nm, applied to the objective lens, through the protective layer of the disk of the DVD standard. However, when V1 - V2 = V2 - V3 = V is set, and the voltage V is set to an appropriate value, new spherical aberration is generated in the light having a wavelength of 660 nm, transmitted through the optical liquid crystal element 271, to thereby correct the remaining spherical aberration. To record or reproduce the information with respect to the disk of the DVD standard, the voltages to be applied to the respective regions of the optical liquid crystal element 271 are controlled in such a manner that the voltage V has an appropriate value.

The spherical aberration remains during the transmission of the light having a wavelength of 780 nm, applied to the objective lens, through the protective layer of the disk of the CD standard. However, when V1 - V2 = V2 - V3 = V is set, and the voltage V is set to an appropriate value, new spherical aberration is generated in the light having a wavelength of 780 nm, transmitted through the optical liquid crystal element 271, to thereby correct the remaining spherical aberration. To record or reproduce the information with respect to the disk of the CD standard, the voltages to be applied to the respective regions of the optical liquid crystal element 271 are controlled in such a manner that the voltage V has an appropriate value.

### 22. Numerical Aperture Control Means

As described above, in the next-generation, DVD, CD standards, numerical apertures of objective lenses are 0.65 (AOD standard) or 0.85 (BRD standard), 0.6, and 0.45, respectively. Therefore, to record or reproduce information with respect to a disk of any of the next-generation, DVD, and CD standards, it is necessary to control the numerical aperture in accordance with the disk.

As a method of controlling the numerical aperture in accordance with the disk, a method is known in which an aperture control element is disposed in an optical system of an optical head apparatus. FIGS. 70A and 70B show a constitution of the aperture control element. FIG. 70A is a plan view, and FIG. 70B is a side view. An aperture control element 281 comprises a glass substrate 282, and dielectric multilayered films 283a to 283c, and is disposed between a wavelength plate 202 and an objective lens 203. It is to be noted that a dotted line in the drawing corresponds to a valid diameter of the objective lens.

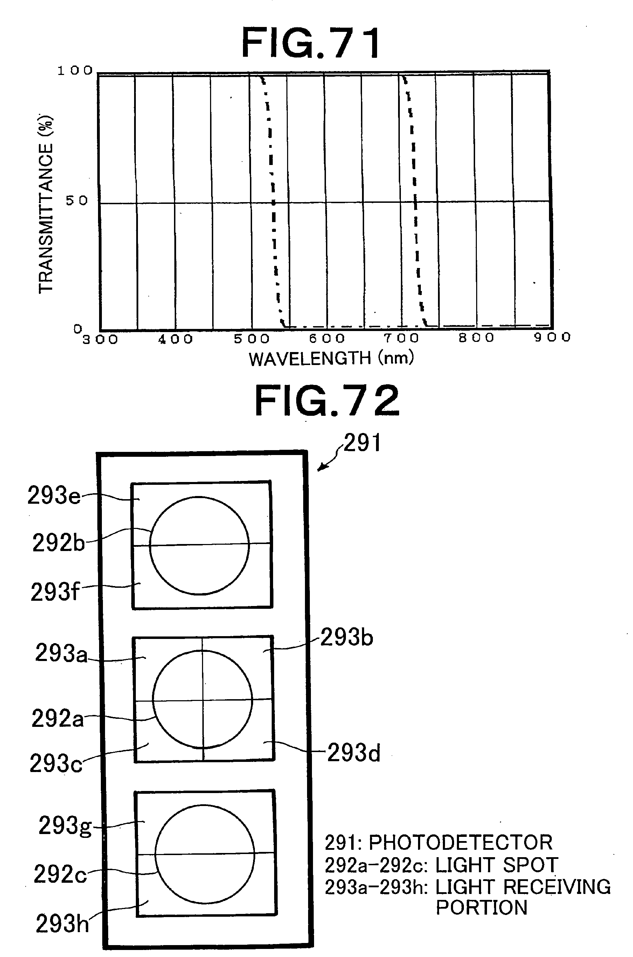

FIG. 71 shows dependence of transmittance of the dielectric multilayered films 283a to 283c on wavelength. Solid, dotted, dash-dotted chain lines show characteristics with respect to the dielectric multilayered films 283a, 283b, and 283c, respectively. The dielectric multilayered film 283a transmits almost all light having wavelengths of 400 nm, 660 nm, and 780 nm. The dielectric multilayered film 283b transmits almost all light having wavelengths of 400 nm and 660 nm, and reflects almost all light having a wavelength of 780 nm. The dielectric multilayered film 283c transmits almost all the light having the wavelength of 400 nm, and reflects almost all the light having the wavelengths of 660 nm and 780 nm.

Therefore, the numerical aperture with respect to the light having a wavelength of 400 nm in recording or reproducing information with respect to the disk of the next-generation standard is determined by the valid diameter of the objective lens. The numerical aperture with respect to the light having a wavelength of 660 nm in recording or reproducing the information with respect to the disk of the DVD standard is determined by the diameter of a circle which is a boundary between the dielectric multilayered films 283b and 283c. The numerical aperture with respect to the light having a wavelength of 780 nm in recording or reproducing information with respect to the disk of the CD standard is determined by the diameter of a circle which is a boundary between the dielectric multilayered films 283a and 283b.

### 23. Collimator Lens

In an embodiment of an optical head apparatus of the present invention, a collimator lens for forming light emitted from a semiconductor laser into parallel light is disposed in an optical system if necessary. For example, in an embodiment shown in FIG. 5, a first collimator lens is disposed between a semiconductor laser 5a and a beam splitter 55a, a second collimator lens is disposed between a semiconductor laser 5b and a beam splitter 55b, and a third collimator lens is disposed between a semiconductor laser 5c and a beam splitter 55c.

When the collimator lenses are disposed with respect to the semiconductor lasers 5a to 5c, and the numerical aperture of the corresponding collimator lens is independently set, efficiencies of the light emitted from the semiconductor lasers 5a to 5c in the forward path can be independently designed to have desired values.

### 24. Coupling Lens

In an embodiment of an optical head apparatus of the present invention, in addition to the collimator lens, a coupling lens for reducing or enlarging a spread angle of light emitted from a semiconductor laser is disposed in an optical system if necessary. For example, in an embodiment shown in FIG. 5, a collimator lens is disposed between a beam splitter 55a and a mirror 201. A first coupling lens is disposed between a semiconductor laser 5a and the beam splitter 55a, a second coupling lens is disposed between a semiconductor laser 5b and a beam splitter 55b, and a third coupling lens is disposed between a semiconductor laser 5c and a beam splitter 55c.

When the coupling lenses are disposed with respect to the semiconductor lasers 5a to 5c, and a magnification of the corresponding coupling lens is independently set, efficiencies of the light emitted from the semiconductor lasers 5a to 5c in the forward path can be designed in such a manner as to obtain desired values independently.

### 25. Monitoring Photodetector

In an embodiment of an optical head apparatus of the present invention, a monitoring photodetector for monitoring a power of light emitted from a semiconductor laser is disposed in an optical system if necessary. For example, in an embodiment shown in FIG. 5, a first monitoring photodetector is disposed in the vicinity of the surface of a beam splitter 55a on a side opposite to a semiconductor laser 5a, a second monitoring photodetector is disposed in the vicinity of the surface of a beam splitter 55b on a side opposite to a semiconductor laser 5b, and a third monitoring photodetector is disposed in the vicinity of the surface of a beam splitter 55c on a side opposite to a semiconductor laser 5c.

The light emitted from the semiconductor lasers 5a to 5c is almost all reflected by the beam splitters 55a to 55c, but is slightly transmitted through the beam splitters 55a to 55c. The transmitted light is received by the first to third monitoring photodetectors. When an output from the monitoring photodetector is fed back to a driving current of the semiconductor laser, the power of the light emitted from the semiconductor laser can be controlled at a certain value.

It is to be noted that by receiving the light emitted from the semiconductor laser 5a and transmitted through the beam splitter 55a, and the light emitted from the semiconductor lasers 5b and 5c, and reflected by the beam splitter 55a by the first monitoring photodetector, a plurality of monitoring photodetectors can be combined into a common photodetector.

### 26. Cylindrical Lens and Optical Diffraction Element

In an embodiment of an optical head apparatus of the present invention, a cylindrical lens for imparting astigmatism to reflected light from a disk is disposed in an optical system if necessary. For example, in an embodiment shown in FIG. 5, a cylindrical lens (not shown) is disposed between a beam splitter 55c and a photodetector 105a.

The photodetector 105a is disposed in the middle of two focal lines formed by the cylindrical lens. When the astigmatism is imparted to the reflected light from a disk 204, a focus error signal by an astigmatism method can be produced based on an output from the photodetector 105a.

In the embodiment of the optical head apparatus of the present invention, an optical diffraction element for dividing the light emitted from the semiconductor laser into a plurality of lights is disposed in the optical system if necessary. For example, in the embodiment shown in FIG. 5, a first optical diffraction element (not shown) is disposed between the semiconductor laser 5a and the beam splitter 55a, a second optical diffraction element (not shown) is disposed between the semiconductor laser 5b and the beam splitter 55b, and a third optical diffraction element (not shown) is disposed between the semiconductor laser 5c and the beam splitter 55c.

Each light emitted from the semiconductor lasers 5a to 5c is divided into three lights: 0th-order light; and ±1st-order diffracted lights by the first to third optical diffraction elements. Three lights reflected by the disk 204 are received by the photodetector 105a. When the light emitted from the semiconductor lasers 5a to 5c is divided into three lights by the optical diffraction element, a track error signal by a differential push-pull method can be produced based on an output from the photodetector 105a.

FIG. 72 shows a pattern of a light receiving portion in the photodetector for use in the embodiment of the optical head apparatus of the present invention, and arrangement of light spots on the photodetector. In the pattern of the light receiving portion in a photodetector 291, the astigmatism is imparted to the reflected light from the disk for a case where the light emitted from the semiconductor laser is divided into three lights by the optical diffraction element.

A light spot 292a corresponds to the 0th-order light from the optical diffraction element, and is received by light receiving portions 293a to 293d which are four portions divided by a dividing line parallel to a radial direction of the disk 204 and a dividing line parallel to a tangential direction. A light spot 292b corresponds to the +1st-order diffracted light from the optical diffraction element, and is received by light receiving portions 293e, 293f which are two portions divided by a dividing line parallel to the radial direction of the disk 204. A light spot 292c corresponds to the -1st-order diffracted light from the optical diffraction element, and is received by light receiving portions 293g and 293h which are two portions divided by a dividing line parallel to the radial direction of the disk 204. Here, as to the light spots 292a to 292c, an intensity distribution in the radial direction of the disk 204 is replaced with that in the tangential direction by the function of the cylindrical lens.

When the outputs from the light receiving portions 293a to 293h are represented by V293a to V293h, respectively, a focus error signal is produced from calculation (V293a+V293d)-(V293b+V293c) by the astigmatism method. A track error signal is produced from calculation (V293a+V293b) - (V293c+V293d) -K{ (V293e+V293g) - (V293f+V293h)} by the differential push-pull method. Here, K denotes a ratio of quantity of light between the 0th-order light and the ±1st-order diffracted lights from the optical diffraction element. The reproduction signal from the disk 204 is produced from calculation V293a+V293b+V293c+V293d.

As a method of producing the focus error signal, instead of the astigmatism method, Foucault method, spot size method and the like are usable. As a method of producing the track error signal, instead of the differential push-pull method, a differential phase detection method, three-beam method and the like are usable. 27. Optical Information Recording or Reproducing Apparatus

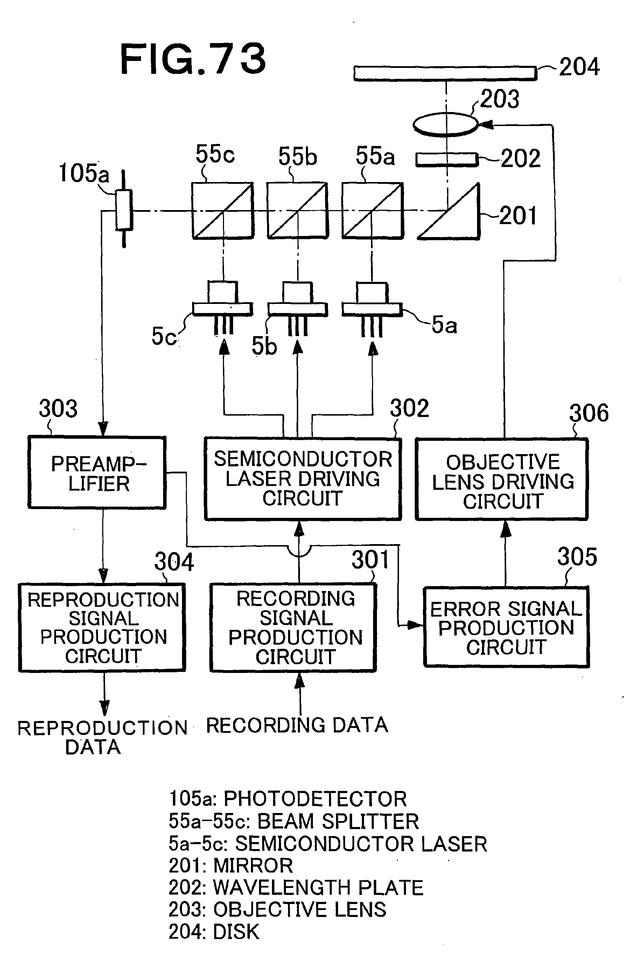

FIG. 73 shows an embodiment of an optical information recording or reproducing apparatus of the present invention. In the present embodiment, a recording signal production circuit 301, a semiconductor laser driving circuit 302, a preamplifier 303, a reproduction signal production circuit 304, an error signal production circuit 305, and an objective lens driving circuit 306 are added to an embodiment of an optical head apparatus shown in FIG. 5.

The recording signal production circuit 301 produces recording signals for driving semiconductor lasers 5a to 5c based on recording data input from the outside. The semiconductor laser driving circuit 302 drives the semiconductor lasers 5a to 5c based on the recording signal input from the recording signal production circuit 301. Accordingly, signals are recorded in a disk 204.

The preamplifier 303 converts a current signal input from a photodetector 105a into a voltage signal. The reproduction signal production circuit 304 produces a reproduction signal to output reproduction data to the outside based on the voltage signal input from the preamplifier 303. Accordingly, the signals from the disk 204 are reproduced.

The error signal production circuit 305 produces the focus error signal and the track error signal for driving an objective lens 203 based on the voltage signal input from the preamplifier 303. The objective lens driving circuit 306 drives the objective lens 203 by an actuator (not shown) based on the focus error signal and the track error signal input from the error signal production circuit 305. Accordingly, focus servo and track servo operations are performed.

In the present embodiment, additionally, a spindle control circuit for rotating the disk 204, a positioner control circuit for moving a whole optical head apparatus excluding the disk 204 with respect to the disk 204 and the like are included.

The present embodiment relates to a recording/reproducing apparatus which records and reproduces information with respect to the disk 204. Additionally, as an embodiment of an optical information recording or reproducing apparatus of the present invention, a reproducing apparatus which only reproduces information with respect to the disk 204 is also considered. In this case, the semiconductor lasers 5a to 5c are not driven based on the recording signal by the semiconductor laser driving circuit 302, and are driven in such a manner that a power of emitted light indicates a certain value.

As an embodiment of the optical information recording or reproducing apparatus of the present invention, a configuration is possible in which a recording signal production circuit, semiconductor laser driving circuit, preamplifier, reproduction signal production circuit, error signal production circuit, and objective lens driving circuit are added to an embodiment other than the fifth embodiment of the optical head apparatus of the present invention.

It is to be noted that in the above-described embodiments, cases where the disks of the next-generation standard (AOD, BRD standards, etc.), the DVD standard, and the CD standard are objects as optical recording mediums, and the lights having wavelengths of 400 nm, 660 nm, and 780 nm are used as first, second, and third wavelength lights have been described. However, the present invention is not limited to the embodiments, and is applicable to a case where disks of other standards (including standards developed in future) are objects as optical recording mediums, and light having another wavelength is used.

In summary an embodiment of the invention can be described as follows:

There is disclosed an optical head apparatus and an optical information recording or reproducing apparatus capable of obtaining a high light output at a recording time, and a high S/N at a reproducing time with respect to any of disks of next-generation, DVD, and CD standards. Light having a wavelength of 400 nm emitted from a semiconductor laser is almost all reflected by a beam splitter, and condensed on a disk of the next-generation standard. Light having a wavelength of 660 nm emitted from a semiconductor laser is almost all reflected by a beam splitter, almost all transmitted through the beam splitter, and condensed on the disk of the DVD standard. Light having a wavelength of 780 nm emitted from a semiconductor laser is almost all reflected by a beam splitter, almost all transmitted through the beam splitters and condensed on the disk of the CD standard. Reflected light from the disk is almost all transmitted through the beam splitters and received by a photodetector.

## Claims

1. An optical head apparatus comprising:
a first light source which emits light having a first wavelength;
a second light source which emits light having a second wavelength;
a third light source which emits light having a third wavelength;
at least one photodetector which receives the light having the first, second, or third wavelengths reflected by an optical recording medium;
an objective lens disposed facing the optical recording medium; and
an optical wave synthesizing/separating system which synthesizes/separates the light having the first, second, and third wavelengths and traveling toward the objective lens from the first, second, and third light sources, and the light having the first, second, and third wavelengths and traveling toward the photodetector from the objective lens,
wherein the optical wave synthesizing/separating system emits any of the light having the first, second, and third wavelengths, applied from the side of the first, second, and third light sources, to the side of the objective lens with a quantity of light larger than 50% of a quantity of incident light, and emits the light having the first, second, and third wavelengths, applied from the side of the objective lens, to the side of the photodetector with a quantity of light larger than 50% of a quantity of incident light.

2. The optical head apparatus according to claim 1, wherein the optical wave synthesizing/separating system has:
at least one beam splitter including a polarization beam splitter with respect to the first-wavelength light, a polarization beam splitter with respect to the second-wavelength light, and a polarization beam splitter with respect to the third-wavelength light; and
a broad-band quarter-wave plate disposed between the beam splitter and the objective lens with respect to the first-wavelength light, the second-wavelength light, and the third-wavelength light.

3. The optical head apparatus according to claim 2, wherein the photodetector has first and second photodetectors, and
the beam splitter has first, second, third, and fourth beam splitters.

4. The optical head apparatus according to claim 2, wherein the photodetector has a single photodetector, and
the beam splitter has first, second, and third beam splitters.

5. The optical head apparatus according to claim 2, wherein the second and third light sources are integrated as an integrated light source,
the photodetector has first and second photodetectors, and
the beam splitter has first, second, and third beam splitters.

6. The optical head apparatus according to claim 2, wherein the second and third light sources are integrated as an integrated light source,
the photodetector has a single photodetector, and
the beam splitter has first and second beam splitters.

7. The optical head apparatus according to claim 2, wherein the first, second, and third light sources are integrated as an integrated light source,
the photodetector has a single photodetector, and
the beam splitter has a single beam splitter.

8. The optical head apparatus according to claim 2, wherein the photodetector has first, second, and third photodetectors,
the first light source and the first photodetector are integrated as a module, and
the beam splitter has first, second, third, and fourth beam splitters, and a polarization beam splitter contained in the module.

9. The optical head apparatus according to claim 2, wherein the photodetector has first, second, and third photodetectors,
the second light source and the second photodetector are integrated as a first module,
the third light source and the third photodetector are integrated as a second module, and
the beam splitter has first, second, and third beam splitters, and first and second polarization beam splitters contained in the first and second modules, respectively.

10. The optical head apparatus according to claim 2, wherein the photodetector has first and second photodetectors,
the first light source and the first photodetector are integrated as a module, and
the beam splitter has first, second, and third beam splitters, and a polarization beam splitter contained in the module.

11. The optical head apparatus according to claim 2, wherein the photodetector has first, second, and third photodetectors,
the first light source and the first photodetector are integrated as a first module,
the second light source and the second photodetector are integrated as a second module,
the third light source and the third photodetector are integrated as a third module, and
the beam splitter has first and second beam splitters, and first, second, and third polarization beam splitters contained in the first, second, and third modules, respectively.

12. The optical head apparatus according to claim 2, wherein the second and third light sources are integrated as an integrated light source,
the photodetector has first and second photodetectors,
the first light source and the first photodetector are integrated as a module, and
the beam splitter has first and second beam splitters, and a polarization beam splitter contained in the module.

13. The optical head apparatus according to claim 2, wherein the photodetector has first and second photodetectors,
the second and third light sources and the second photodetector are integrated as a module, and
the beam splitter has first and second beam splitters, and a polarization beam splitter contained in the module.

14. The optical head apparatus according to claim 2, wherein the photodetector has first and second photodetectors,
the first light source and the first photodetector are integrated as a first module,
the second and third light sources and the second photodetector are integrated as a second module, and
the beam splitter has a single beam splitter, and first and second polarization beam splitters contained in the first and second modules, respectively.

15. The optical head apparatus according to claim 2, wherein the photodetector has a single photodetector,
the first, second, and third light sources and the photodetector are integrated as a module, and
the beam splitter has a polarization beam splitter contained in the module.

16. The optical head apparatus according to any of the preceding claims,
further comprising: spherical aberration correction means for correcting spherical aberration with respect to at least one of the first-wavelength light, the second-wavelength light, and the third-wavelength light.

17. The optical head apparatus according to any of the preceding claims,
further comprising: numerical aperture control means for controlling numerical aperture with respect to at least one of the first-wavelength light, the second-wavelength light, and the third-wavelength light.

18. The optical head apparatus according to any of the preceding claims,
further comprising: at least one collimator lens for forming at least one of the lights emitted from the first, second, and third light sources into parallel light.

19. The optical head apparatus according to any of the preceding claims,
further comprising: at least one coupling lens for reducing or enlarging at least one of the spread angles in the lights emitted from the first, second, and third light sources.

20. The optical head apparatus according to any of the preceding claims,
further comprising: at least one monitoring photodetector for monitoring at least one of the powers in the lights emitted from the first, second, and third light sources.

21. The optical head apparatus according to any of the preceding claims,
further comprising: at least one optical diffraction element for dividing at least one of the lights emitted from the first, second, and third light sources into a plurality of lights.

22. The optical head apparatus according to any of the preceding claims,
wherein the first, second, and third wavelengths are one of:
a) 400 nm, 660 nm, and 780 nm;
b) 400 nm, 780 nm, and 660 nm;
c) 660 nm, 400 nm, and 780 nm;
d) 660 nm, 780 nm, and 400 nm;
e) 780 nm, 400 nm, and 660 nm; and
f) 780 nm, 660 nm, and 400 nm.

23. An optical information recording or reproducing apparatus comprising:
the optical head apparatus according to any of the preceding claims;
a first circuit system which drives the first, second, and third light sources;
a second circuit system which produces a reproduction signal and an error signal from an output of the photodetector; and
a third circuit system which drives the objective lens based on the error signal.

24. The optical information recording or reproducing apparatus according to claim 23, wherein the first circuit system drives at least one of the first, second, and third light sources based on a recording signal.

25. The optical information recording or reproducing apparatus according to claim 23 or 24, wherein the first circuit system drives at least one of the first, second, and third light sources in such a manner that a power of emitted light has a certain value.
